(19) Europäisches Patentamt / European Patent Office / Office européen des brevets

(11) **EP 4 759 513 A1**

(12) **EUROPEAN PATENT APPLICATION**
published in accordance with Art. 153(4) EPC

(43) Date of publication:
17.06.2026 Bulletin 2026/25

(21) Application number: 24851887.0

(22) Date of filing: 07.08.2024

(51) International Patent Classification (IPC):
*B29C 64/118* (2017.01)     *B29C 64/209* (2017.01)
*B29C 64/295* (2017.01)     *B29C 64/393* (2017.01)
*B33Y 10/00* (2015.01)      *B33Y 50/02* (2015.01)
*B33Y 70/10* (2020.01)      *B33Y 80/00* (2015.01)
*C08L 1/02* (2006.01)       *C08L 59/00* (2006.01)
*C08L 77/00* (2006.01)      *C08L 101/00* (2006.01)

(52) Cooperative Patent Classification (CPC):
B29C 64/118; B29C 64/209; B29C 64/295;
B29C 64/393; B33Y 10/00; B33Y 50/02;
B33Y 70/10; B33Y 80/00; C08L 1/02; C08L 59/00;
C08L 77/00; C08L 101/00

(86) International application number:
PCT/JP2024/028274

(87) International publication number:
WO 2025/033466 (13.02.2025 Gazette 2025/07)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 07.08.2023 JP 2023128552
07.08.2023 JP 2023128577

(71) Applicant: ASAHI KASEI KABUSHIKI KAISHA
Tokyo 100-0006 (JP)

(72) Inventor: KUSUMOTO, Sara
Tokyo 100-0006 (JP)

(74) Representative: D Young & Co LLP
3 Noble Street
London EC2V 7BQ (GB)

(54) **3D-PRINTER MOLDED OBJECT AND METHOD FOR PRODUCING SAME**

(57)     Provided are: a molded object having excellent strength and appearance and a method for producing same; and a resin composition and a 3D-printer molding material that yield such a molded object. In one embodiment, provided is a molded object that contains a thermoplastic resin and cellulose microfibers. The molded object is outputted by a 3D printer and has a section having a thickness of 2.5 mm or more. At least one cubic region measures 2 mm×2 mm×2 mm and is selected from the section having a thickness of 2.5 mm or more so as not to include the outermost layer of the molded object, said cubic region having a porosity of 10 vol% or less, as determined using an X-Ray computer tomographic (CT) method

Fig. 4

**Description**

FIELD

The present invention relates to a 3D printer shaped article comprising a thermoplastic resin and cellulose fine fibers, and to a method for producing it.

BACKGROUND

3D printers have conventionally been developed in various shaping systems such as Material Extrusion (MEX) systems, stereolithography systems, material injection systems, powder adhesion systems and powder bed fusion bonding systems. Shaped articles obtained by 3D printers are convenient to produce, making them useful for purposes such as test production, and in recent years they have also come to be considered promising as actual products. Increasing interest in environmental problems in recent years had led to ongoing attempts to also use 3D printer shaping materials with low environmental impact. For example, lightweight and organic cellulose-based materials are useful as fillers for improving the physical properties of shaped articles. Cellulose fine fibers, due to their microstructure, are able to impart excellent properties to shaped articles, such as high elasticity and high dimensional stability during heating. For 3D prints obtained by Material Extrusion (MEX) systems it is desirable to appropriately control the flow behavior of the fluid when the shaping material is laminated as a fluid, but it tends to be difficult to control the flow behavior of filler-containing shaping materials that are used. Various methods have been proposed for using 3D printers to produce shaped articles comprising fillers such as cellulose fine fibers and having designed properties (such as physical properties).

PTL 1 describes a shaping material for a 3D printer, wherein the main component is a resin component composed of (A) nanofibers, (B) a dispersing agent and (C) a thermoplastic resin or photocuring resin. The object of the technology described in PTL 1 is to provide a shaping material for a 3D printer that, by having nanofibers such as cellulose nanofibers uniformly dispersed in a resin, improves the strength and elastic modulus and allows designed shapes to be more accurately reproduced as shaped articles, and that can produce three-dimensional shaped products with excellent surface smoothness as well as excellent transparency and dye affinity.

PTL 2 describes a resin composition for a shaping material obtained by a 3D printer in a fused deposition modeling system, wherein cellulose fibers are added to a polyamide. The object of the technology described in PTL 2 is to provide a resin composition that has high heat resistance and allows shaping to be carried out to designed dimensions using a 3D printer in a fused deposition modeling system, and that can yield shaped articles with low warping after shaping and low water absorption-induced dimensional change.

Shaping techniques have also been proposed for high-definition formation of high-strength shaped articles by 3D printing.

PTL 3 describes a method for producing a three-dimensional shaped article in which a molten thermoplastic resin is extruded from a extrude outlet and layered onto a base to form a three-dimensional shaped article, the method comprising a wall forming step in which a molten thermoplastic resin is extruded while moving the extrude outlet relative to the base to form a wall, in a manner providing a space which is surrounded in the horizontal direction by the wall but is open from above, and an injection step in which the molten thermoplastic resin is extruded and injected into the space from above the space. The object of the technology described in PTL 3 is to provide a thermally fused layered shaping method wherein a high-strength three-dimensional shaped article is formed having minimal gaps between layers of the layering material and satisfactory shape precision.

PTL 4 describes a method for producing a three-dimensional shaped article comprising a first step in which a shaping material composed mainly of a crystalline thermoplastic resin is used to form a three-dimensional shaped article on a shaping stage under specific temperature conditions by a fused deposition modeling method, and a second step in which, after the first step, the three-dimensional shaped article formed in the first step is released from the surface of the shaping stage under specific temperature conditions, the crystalline thermoplastic resin being one selected from the group consisting of polyacetal resins, polyethylene resins, polypropylene resins, polyethylene terephthalate resins, polybutylene terephthalate resins and polyamide resins. The object of the technology described in PTL 4 is to provide a method for producing a three-dimensional shaped article by a fused deposition modeling method, wherein warping is inhibited during layering while using a shaping material composed mainly of a crystalline thermoplastic resin, the formed three-dimensional shaped article being firmly anchored to the shaping stage during shaping and the formed three-dimensional shaped article being easily releasable from the shaping stage.

PTL 5 describes a method for producing a three-dimensional structure that includes using a 3D printer to melt a filament comprising a thermoplastic resin, and layering it on a substrate, the method also including bonding one end of the filament onto the substrate surface with an adhesive force of 15 N or greater with respect to the substrate, extruding the filament from the 3D printer nozzle onto the substrate surface while moving either or both the substrate and nozzle, and layering it. The object of the technology described in PTL 5 is to provide a method for producing a three-dimensional structure that allows production of three-dimensional structures with excellent shapeability.

[CITATION LIST]

[PATENT LITERATURE]

[PTL 1] Japanese Unexamined Patent Publication No. 2017-170881
[PTL 2] International Patent Publication No. WO2019/088014
[PTL 3] Japanese Unexamined Patent Publication No. 2018-86829
[PTL 4] Japanese Unexamined Patent Publication No. 2021-172084
[PTL 5] International Patent Publication No. WO2017/126477

SUMMARY

[TECHNICAL PROBLEM]

However, even with the techniques described in PTLs 1 to 5 it is still difficult to control the flow behavior of filler-containing shaping materials, and therefore stable production of shaped articles with excellent strength and outer appearance has not yet been achieved.
It is an object of one aspect of the invention to solve the problems described above by providing a shaped article with excellent strength and outer appearance, and a method for producing it, as well as a resin composition and 3D printer shaping material that can yield such a shaped article. It is an object of another aspect of the invention to provide a method for producing a 3D printer shaped article that allows stable production of shaped articles with excellent strength and outer appearance.

[SOLUTION TO PROBLEM]

Specifically, the present disclosure encompasses the following aspects.

[1] A shaped article comprising a thermoplastic resin and cellulose fine fibers, wherein:

the shaped article is the output of a 3D printer,
the shaped article has a section with a thickness of 2.5 mm or greater, and
one or more 2 mm $\times$ 2 mm $\times$ 2 mm cubic regions selected from the section with a thickness of 2.5 mm or greater have a void ratio of 10 vol% or lower as determined by X-ray computed tomography (CT).

[2] The shaped article according to [1] above, wherein the cubic regions are regions selected so as not to include the outermost layer of the shaped article.
[3] The shaped article according to [1] or [2] above, wherein the number of the one or more 2 mm $\times$ 2 mm $\times$ 2 mm cubic regions is 5, and the number-average value for the void ratio of the five cubic regions is 10 vol% or lower.
[4] The shaped article according to any one of [1] to [3] above, wherein the thermoplastic resin comprises a polyamide-based resin.
[5] The shaped article according to any one of [1] to [4] above, wherein the degree of crystallinity of the shaped article is 50% or lower, as measured using a differential scanning calorimeter (DSC).
[6] The shaped article according to any one of [1] to [5] above, wherein the thermoplastic resin comprises a crystalline resin with a melting point of 150°C to 300°C.
[7] The shaped article according to any one of [1] to [6] above, wherein the cellulose fine fibers have a mean fiber size of 1000 nm or smaller.
[8] The shaped article according to any one of [1] to [7] above, which comprises the cellulose fine fibers at 1 part by mass to 150 parts by mass with respect to 100 parts by mass of the thermoplastic resin.
[9] A method for producing a shaped article according to any one of [1] to [8] above, wherein the method includes extruding and layering a resin composition comprising a thermoplastic resin and cellulose fine fibers from the extrude outlet of a 3D printer.
[10] The method according to [9] above, wherein

the resin composition is fed to the 3D printer as a filamentous shaping material for 3D printing, and

the molten material of the shaping material for 3D printing is extruded from the extrude outlet.

[11] A method for producing a shaped article comprising a thermoplastic resin and cellulose fine fibers, wherein:

the method comprises extruding and layering a resin composition comprising a thermoplastic resin and cellulose fine fibers from the extrude outlet of a 3D printer, and
the shaped article has a section with a thickness of 2.5 mm or greater, and
one or more 2 mm × 2 mm × 2 mm cubic regions selected from the section with a thickness of 2.5 mm or greater have a void ratio of 10 vol% or lower as determined by X-ray computed tomography (CT).

[12] A method for producing a shaped article comprising a thermoplastic resin and cellulose fine fibers, wherein:

a resin composition comprising a thermoplastic resin and cellulose fine fibers is extruded and layered from the extrude outlet of a 3D printer, and
the temperature of the extrude outlet is set to a temperature such that the resin composition exhibits a shear viscosity of lower than 600 kPa·s at a shear rate of 1000 sec$^{-1}$ and exhibits an elongation viscosity of higher than 10 kPa·s at an elongation rate of 10 sec$^{-1}$.

[13] A method for producing a shaped article comprising a thermoplastic resin and cellulose fine fibers,

wherein the method includes extruding and layering a resin composition comprising a thermoplastic resin and cellulose fine fibers from the extrude outlet of a 3D printer,
the minimum temperature (T1) at which the resin composition exhibits a shear viscosity of 600 kPa·s or lower at a shear rate of 1000 sec$^{-1}$ is lower than the maximum temperature (T2) at which the resin composition exhibits an elongation viscosity of 10 kPa·s or higher at an elongation rate of 10 sec$^{-1}$, the difference between the temperature (T1) and the temperature (T2) being 40°C or more, and
the temperature (T3) of the extrude outlet is set to a temperature higher than the temperature (T1) and lower than the temperature (T2).

[14] The method according to [12] or [13] above, wherein:

the shaped article has a section with a thickness of 2.5 mm or greater, and
one or more 2 mm × 2 mm × 2 mm cubic regions selected from the section with a thickness of 2.5 mm or greater have a void ratio of 10 vol% or lower as determined by X-ray computed tomography (CT).

[15] The method according to any one of [11] to [14] above, wherein the cubic regions are regions selected so as not to include the outermost layer of the shaped article.
[16] The method according to any one of [11] to [15] above, wherein:

the resin composition is fed to the 3D printer as a filamentous shaping material for 3D printing, and
the molten material of the shaping material for 3D printing is extruded from the extrude outlet.

[17] The method according to any one of [11] to [16] above, wherein the thermoplastic resin is one or more selected from the group consisting of polyamide-based resins and polyacetal-based resins.
[18] The method according to any one of [11] to [17] above, wherein the thermoplastic resin comprises a polyamide-based resin.
[19] The method according to any one of [11] to [18] above, wherein the degree of crystallinity of the shaped article is 50% or lower, as measured using a differential scanning calorimeter (DSC).
[20] The method according to any one of [11] to [19] above, wherein the thermoplastic resin comprises a crystalline resin with a melting point of 150°C to 300°C.
[21] The method according to any one of [11] to [20] above, wherein the cellulose fine fibers have a mean fiber size of 1000 nm or smaller.
[22] The method according to any one of [11] to [21] above, wherein the resin composition comprises the cellulose fine fibers at 1 part by mass to 150 parts by mass with respect to 100 parts by mass of the thermoplastic resin.
[23] The method according to any one of [11] to [22] above, wherein the L value of the shaped article is 35 or greater.
[24] A resin composition comprising a thermoplastic resin and cellulose fine fibers, wherein:

the minimum temperature (T1) at which the resin composition exhibits a shear viscosity of 600 kPa·s or lower at a shear rate of 1000 sec$^{-1}$ is lower than the maximum temperature (T2) at which the resin composition exhibits an elongation viscosity of 10 kPa·s or greater at an elongation rate of 10 sec$^{-1}$, and

the difference between the temperature (T1) and the temperature (T2) is 40°C or more.

[25] The resin composition according to [24] above, wherein the thermoplastic resin is one or more selected from the group consisting of polyamide-based resins and polyacetal-based resins.

[26] The resin composition according to [24] or [25] above, wherein the thermoplastic resin comprises a crystalline resin with a melting point of 150°C to 300°C.

[27] The resin composition according to any one of [24] to [26] above, wherein the cellulose fine fibers have a mean fiber size of 1000 nm or smaller.

[28] The resin composition according to any one of [24] to [27] above, wherein the resin composition comprises the cellulose fine fibers at 1 part by mass to 150 parts by mass with respect to 100 parts by mass of the thermoplastic resin.

[29] A shaping material for 3D printing, which is a filament composed of a resin composition according to any one of [24] to [28] above.

[30] The shaping material for 3D printing according to [29] above, wherein the L value is 35 or greater.

[31] A shaped article obtained by shaping a resin composition according to any one of [24] to [28] above, or a shaping material for 3D printing according to [29] or [30] above, with a 3D printer.

[32] The shaped article according to [31] above, wherein the L value is 35 or greater.

[ADVANTAGEOUS EFFECTS OF INVENTION]

According to one aspect of the invention it is possible to provide a shaped article with excellent strength and outer appearance, and a method for producing it, as well as a resin composition and 3D printer shaping material that can yield such a shaped article. According to another aspect of the invention it is possible to provide a method for producing a 3D printer shaped article that allows stable production of shaped articles with excellent strength and outer appearance.

BRIEF DESCRIPTION OF DRAWINGS

Fig. 1 is a diagram illustrating an example of the arrangement of blades and grooves in a disc refiner.
Fig. 2 is a diagram illustrating blade width, groove width and interblade distance in a disc refiner.
Fig. 3 is a diagram showing the dimensions of a dumbbell-shaped shaped article.
Fig. 4 is a diagram showing a 3D image taken by X-ray CT at a section 3 of Example A1.
Fig. 5 is a diagram showing a 3D image taken by X-ray CT at a section 3 of Comparative Example A1.

DESCRIPTION OF EMBODIMENTS

An exemplary mode of the invention (hereunder also referred to as "the embodiment") will now be described, with the understanding that the invention is not limited to this mode, and various modifications may be implemented within the scope of the gist thereof.

<Shaped article and method for producing it>

One aspect of the invention provides a shaped article comprising a thermoplastic resin and cellulose fine fibers. According to one aspect, the shaped article is output from a 3D printer. According to one aspect, the shaped article has a section with a thickness of 2.5 mm or greater, and one or more 2 mm × 2 mm × 2 mm cubic regions selected from the section with a thickness of 2.5 mm or greater (not including the surface of the shaped article, according to one aspect) have a void ratio of 10 vol% or lower.

One aspect of the invention provides a method for producing a shaped article comprising a thermoplastic resin and cellulose fine fibers (the shaped article according to one aspect), wherein the method includes:

extruding and layering a resin composition comprising a thermoplastic resin and cellulose fine fibers from the extrude outlet of a 3D printer. According to one aspect of this method, the resin composition is fed to a 3D printer as a filamentous shaping material for 3D printing, and the molten shaping material for 3D printing is extruded from the extrude outlet.

One aspect of the invention provides a method for producing a shaped article comprising a thermoplastic resin and cellulose fine fibers,

the method including extruding and layering a resin composition comprising a thermoplastic resin and cellulose fine fibers from the extrude outlet of a 3D printer, and
the method satisfying the following conditions (1) and/or (2).

(1) The temperature of the extrude outlet is set to a temperature at which the resin composition (as a 3D printer shaping material according to one aspect, same hereunder) exhibits a shear viscosity of lower than 600 kPa·s at a shear rate of 1000 sec$^{-1}$, and an elongation viscosity of higher than 10 kPa·s at an elongation rate of 10 sec$^{-1}$.
(2) The minimum temperature (T1) at which the resin composition exhibits a shear viscosity of 600 kPa·s or lower at a shear rate of 1000 sec$^{-1}$ is set to be lower than the maximum temperature (T2) at which the resin composition exhibits an elongation viscosity of 10 kPa·s or greater at an elongation rate of 10 sec$^{-1}$, the difference between the temperature (T1) and the temperature (T2) being 40°C or more, and the temperature (T3) of the extrude outlet being set to higher than the temperature (T1) and lower than the temperature (T2).

For this embodiment, the 3D printer is typically a Material Extrusion (MEX) system. The 3D printer may have a conventionally known construction, and typically shaping will be carried out by the following procedure. The 3D printer data is generated based on various three-dimensional data items for the desired shaped article. Based on the data for the 3D printer, the shaping material (resin composition) is extruded and layered as a fluid. According to one aspect, the fluid is the molten shaping material, i.e. the resin composition. The fluid is extruded from the nozzle extrude outlet onto the surface of a stage (platform). The relative position between the extrude outlet and the stage is moved (or scanned) by moving the stage and/or extrude outlet. This causes the fluid to be deposited in a linear fashion and become layered. The deposited fluid solidifies to form a shaped article of the desired shape. The shaping material will typically be a filament. According to one aspect, the shaping material passes through a transport section (such as a gear) and is heated to melting at the heater, after which it is introduced into a nozzle and extruded from the extrude outlet of the nozzle. The nozzle may be heated so as to provide the desired extrude outlet temperature. The relationship between the shape of the shaped article and the direction of layering may be appropriately designed according to the purpose of use of the shaped article. The stage may be horizontal or inclined, for example. If desired, a support material may be used to support the shaped article.

The material of the stage surface may be appropriately selected depending on the material of the shaped article, and it may be an organic material (for example, a resin-based material), an inorganic material (for example, metal or glass), or a combination thereof. According to one aspect, the stage surface is a resin-based material from the viewpoint of satisfactorily adhering the shaped article produced from the resin composition onto the stage during shaping. Surface treatment may also be carried out on the stage surface if necessary.

There are no particular restrictions on the method of moving the extrude outlet, and it may be appropriately set depending on the purpose. For example, first the frame of the shaped article may be formed, and then the inner side of the frame may be filled. The frame may be composed of 1 or 2 layers, for example, although this is not limitative.

The strength and outer appearance of the shaped article are greatly affected by the homogeneity of the multilayer structure, in addition to the material of the shaping material. The present inventors have investigated in detail the preferred multilayer structures for exhibiting satisfactory strength and outer appearance for shaped articles, and as a result have found that both the form between the layers of a multilayer structure and the form of the solidified product itself in each layer contribute significantly to the strength and outer appearance. Specifically, it was found that for a shaped article comprising a thermoplastic resin and cellulose fine fibers, specifying an upper limit for the void ratio as determined by the method of this embodiment is advantageous for both high strength and a satisfactory outer appearance.

Generally speaking, when a shaping material comprising a thermoplastic resin and a filler is extruded as a fluid from the extrude outlet of a 3D printer, interference within the filler in the fluid tends to result in solidified matter encapsulating the gaps. Such voids in the layers can impair the strength and outer appearance of the shaped article. If the flow property of the extruded fluid is too low, the wettability of the fluid on the surface of the formed layers will be low and interlayer adhesiveness will tend to be reduced, in some cases creating voids between layers. Insufficient interlayer adhesiveness, and especially voids between layers, can also impair the strength and outer appearance of the shaped article. On the other hand, a shaping material comprising a thermoplastic resin and cellulose fine fibers will tend to have fewer voids in the solidified material due to less interference among the filler. While the reason for this is not completely understood, it is conjectured that the properties of the cellulose fine fibers, i.e. their microstructure, and their softness compared to inorganic fibers, contribute to such properties. If the fluid is extruded with a lower viscosity, then the interlayer adhesiveness will tend to be improved. A shaping material comprising a thermoplastic resin and cellulose fine fibers will tend to have a high degree of freedom for viscosity control, by control of the extrude conditions. While the reason for this is not fully understood, it is conjectured that a resin composition comprising cellulose fine fibers helps to exhibit thixotropic properties. The present inventors have found that it is possible to provide a shaped article with excellent strength and outer appearance by extruding a fluid of a shaping material comprising a thermoplastic resin and cellulose fine fibers under controlled conditions to form a shaped article having the void ratio specified according to the embodiment.

<Void ratio>

According to one aspect, the shaped article has a section with a thickness of 2.5 mm or greater, and one or more 2 mm × 2 mm × 2 mm cubic regions selected from the section with a thickness of 2.5 mm or greater (not including the outermost layer of the shaped article, according to one aspect) have a void ratio of 10 vol% or lower as determined by X-ray computed tomography (X-ray CT).

In X-ray CT, a sample is imaged by tomographic imaging to obtain a cross-sectional image, a 3D image is constructed from the cross-sectional image, and the structural section of interest is identified by image analysis of the 3D image. The volume-based void ratio can be calculated by analyzing the numerical data for each voxel. For this embodiment, a 2 mm × 2 mm × 2 mm cubic region is used as the evaluation target, as a section representing the internal structure of the shaped article, and the voids in the cubic region are identified by image analysis. As a general principle when layering a fluid in a linear manner to form a shaped article in 3D printing, variation in the void ratio tends to increase on the surface of the shaped article by necessity as the shaped article is formed into the desired outer shape. According to one aspect, the value of the void ratio that is obtained will appropriately represent the internal structure of the shaped article, since the evaluation target is a cubic region without such a surface and having a relatively large size with 2 mm sides. According to one aspect, therefore, the void ratio generally reflects the adhesiveness between layers and homogeneity within the layers of the shaped article, and it can serve as an index of the strength and outer appearance of the shaped article. The void ratio can represent the internal structure of the shaped article, and a shaped article with a small void ratio according to this embodiment exhibits an excellent outer appearance in addition to strength, due to having both satisfactory interlayer adhesiveness and satisfactory intralayer homogeneity.

According to one aspect, the void ratio is 10 vol% or lower, 9 vol% or lower or 8 vol% or lower. While a smaller void ratio is advantageous, from the viewpoint of facilitating production of the shaped article, it may be 1 vol% or higher, 1.5 vol% or higher or 2 vol% or higher, according to one aspect.

When the section with a thickness of 2.5 mm or greater is selected from the shaped article, the outermost layer is not included in that section, according to one aspect. Moreover when a 2 mm × 2 mm × 2 mm cubic region is selected from the section with a thickness of 2.5 mm or greater, according to one aspect, it is selected so as to be representative of the entire shaped article in terms of the shape of the shaped article. The number of cubic regions is a number suitable for being representative of the entire shaped article. According to one aspect, the number of cubic regions selected may be 5 or more, and according to another aspect it may be 50 or fewer. For example, when the shaped article has a spur gear shape, a total of 5 cubic regions may be selected, from the tooth tips, tooth bases, hub and rim (with two being selected from the tooth tips and one from each of the others). According to one aspect, the void ratio is the number-average value for the values of each of the selected cubic regions. According to one aspect, the number of cubic regions is five, and the number-average value for the void ratio of the five regions is within the range specified above. A more detailed measuring procedure for the void ratio is described under [Examples] of the disclosure.

The means for adjusting the void ratio may be adjustment of one or more of the elements mentioned herein in regard to the composition of the resin composition and the shaping conditions for the 3D printer. In particular, since the cellulose fine fibers are satisfactorily dispersed in the resin composition and the fiber diameters of the cellulose fine fibers are markedly small with respect to the nozzle diameter, they can be advantageous for inhibiting interference among the cellulose fine fibers in the fluid, while adjustment of the shear viscosity can be advantageous for improved interlayer adhesiveness.

<Degree of crystallinity>

The degree of crystallinity of the shaped article, as measured with a differential scanning calorimeter (DSC), is preferably 50% or lower, 45% or lower or 40% or lower, from the viewpoint of inhibiting warping during shaping. The degree of crystallinity may be 10% or greater according to one aspect, from the viewpoint of easier production of the shaped article and strength of the shaped article.

According to one aspect, the degree of crystallinity of the thermoplastic resin of the embodiment may be 50% or lower, 45% or lower or 40% or lower, and 10% or higher. According to one aspect, the degree of crystallinity of the polyamide-based resin is within the range specified above.

According to one aspect, the degree of crystallinity of the resin composition of the embodiment may be 50% or lower, 45% or lower or 40% or lower, and 10% or higher.

<Shaping conditions>

According to a first aspect, from the viewpoint of reducing the voids between layers and within layers of the shaped article, it is advantageous for the fluid extruded from the extrude outlet to have satisfactory flow properties (according to one aspect, this means low viscosity). However when the fluid has low viscosity, the following (1) and (2) may occur. (1) When the relative position of the extrude outlet is moved with respect to the stage while extrude has been interrupted during shaping, the fluid drops down from the extrude outlet, causing stringing and resulting in defects such as feathering due to unwanted fluid adhering onto the formed layer, and (2) when a filamentous shaping material is produced from a resin composition, the resin composition drops down undesirably by its own weight (drawdown) resulting in non-uniform filament diameters (in other words, the filament diameters become non-uniform due to repeated drawdown and subsequent thinning), and the heat of the filament during shaping becomes non-uniform, forming a non-uniform shaped article.

According to a second aspect, the strength and outer appearance of the shaped article are greatly affected by the homogeneity of the multilayer structure, in addition to the material of the shaping material. In the prior art it has been difficult to stably produce shaped articles with excellent strength and outer appearance. The causative factors for this include (1) and (2) explained above.

Such stringing and drawdown can interfere with formation of a high-definition and homogeneous multilayer structure, often impairing the strength and outer appearance of the shaped article. In order to prevent stringing, it is common to reverse rotation of the delivery gear at the back of the nozzle to return the shaping material (retraction) when extrude is interrupted. However, it may not be possible to satisfactorily prevent stringing even when such retraction is carried out.

The present inventors have found that, among the properties of the extruded fluid, the elongation viscosity is a major contributor to the degree of stringing and drawdown. Providing the fluid with a combination of specific shear viscosity at a specific shear rate, and specific elongation viscosity at a specific elongation rate, is advantageous for both shaping ease and reduced stringing and drawdown.

For stable production of a shaped article according to the second aspect, stringing and drawdown can be reduced by increasing the viscosity of the fluid, but a fluid with excessively high viscosity is difficult to extrude. Finding shaping conditions that maintain ease of extrude (i.e. shaping ease) while controlling stringing and drawdown has either been impossible or has required an inordinate amount of trial and error. If the elongation viscosity is too low it is difficult to reduce stringing and drawdown. The advantages for shaping ease and reduced stringing and drawdown, by providing the fluid with a combination of specific shear viscosity at a specific shear rate and specific elongation viscosity at a specific elongation rate, are also advantageous for stable production of shaped articles.

According to one aspect, the temperature of the extrude outlet is set to a temperature at which the resin composition exhibits a shear viscosity of lower than 600 kPa·s at a shear rate of 1000 sec$^{-1}$. According to one aspect, the temperature of the extrude outlet is set to a temperature such that the resin composition exhibits a shear viscosity of lower than 600 kPa·s at a shear rate of 1000 sec$^{-1}$, and an elongation viscosity of higher than 10 kPa·s at an elongation rate of 10 sec$^{-1}$. The shear rate of 1000 sec$^{-1}$ is the shear rate applied to the fluid during extrude, and in order to form a shaped object with high precision and stable extrude of the fluid, it is advantageous if the shear viscosity is not too high at that shear rate. According to one aspect, it is advantageous if the shear viscosity is not too high, from the viewpoint of reducing voids between the layers and/or within the layers of the shaped article to obtain satisfactory strength and/or outer appearance. On the other hand, the elongation rate of 10 sec$^{-1}$ is an index of the elongation rate applied to the fluid in the extrude outlet by retraction when extrude has been interrupted, and in order to reduce stringing and drawdown, it is advantageous if the elongation viscosity is not too low at that elongation rate. In other words, when a resin composition exhibits shear viscosity below a certain level at a shear rate of 1000 sec$^{-1}$ and exhibits elongation viscosity exceeding a certain level at an elongation rate of 10 sec$^{-1}$, the resin composition can be stably extruded from the extrude outlet and is resistant to stringing or drawdown. A wide range for the temperature range at which these properties can be exhibited, for a given resin composition, means that the resin composition does not require strict control of the shaping conditions (especially temperature), and can simultaneously achieve shaping ease, inhibited stringing and inhibited drawdown.

The minimum temperature (T1) at which the resin composition exhibits a shear viscosity of 600 kPa·s or lower at a shear rate of 1000 sec$^{-1}$ will differ depending on the types and amounts of the thermoplastic resin, cellulose fine fibers and optional additional components, but according to one aspect it is 170°C or higher, 180°C or higher or 190°C or higher, and according to another aspect it is 260°C or lower, 250°C or lower or 240°C or lower.

The maximum temperature (T2) at which the resin composition exhibits an elongation viscosity of 10 kPa·s or higher at an elongation rate of 10 sec$^{-1}$ will differ depending on the types and amounts of the thermoplastic resin, cellulose fine fibers and optional additional components, but according to one aspect it is 220°C or higher, 230°C or higher or 240°C or higher, and according to another aspect it is 310°C or lower, 300°C or lower or 290°C or lower.

The temperature (T1) and temperature (T2) will tend to be higher when the melting point of the thermoplastic resin is higher, when the molecular weight of the thermoplastic resin is higher, or when the content of the cellulose fine fibers is greater.

The temperature of the extrude outlet as a temperature at which the resin composition exhibits a shear viscosity of lower than 600 kPa·s at a shear rate of 1000 sec$^{-1}$ and exhibits an elongation viscosity of higher than 10 kPa·s at an elongation rate of 10 sec$^{-1}$, will differ depending on the types and amounts of the thermoplastic resin, cellulose fine fibers and optional additional components, but according to one aspect it is 230°C or higher, 235°C or higher or 240°C or higher, and according to another aspect it is 300°C or lower, 295°C or lower or 290°C or lower. According to one aspect, the temperature of the extrude outlet is controlled to be the nozzle temperature. The number of extrude outlets may be one or more, but it is preferably one from the viewpoint of forming a high-definition shaped article.

According to one aspect, the minimum temperature (T1) at which the resin composition exhibits a shear viscosity of 600 kPa·s or lower at a shear rate of 1000 sec$^{-1}$ is lower than the maximum temperature (T2) at which the resin composition exhibits an elongation viscosity of 10 kPa·s or higher at an elongation rate of 10 sec$^{-1}$. If the extrude temperature has been appropriately controlled, then such a resin composition can be stably extruded from the extrude outlet and will be resistant to stringing or drawdown. A larger difference between the temperature (T1) and the temperature (T2) is more advantageous from the viewpoint of simultaneously achieving greater shaping ease, reduced stringing and reduced drawdown without requiring strict control of the shaping conditions (especially temperature), and according to one aspect it is 40°C or higher, 45°C or higher or 50°C or higher. According to one aspect, the difference may be 100°C or lower, 90°C or lower or 80°C or lower from the viewpoint of facilitating preparation of the resin composition. According to one aspect, addition of the cellulose fine fibers to the thermoplastic resin does not significantly alter the shear viscosity, but does tend to significantly increase the elongation viscosity. Thus, combining the cellulose fine fibers with the thermoplastic resin may be one factor that increases this difference. The means for further increasing the difference may be reducing the fiber diameter of the cellulose fine fibers, finely dispersing the cellulose fine fibers in the thermoplastic resin, or increasing the reinforcing property of the cellulose fine fibers (for example, using a non-wood material such as cotton linter as the starting material for the cellulose fine fibers).

According to one aspect, the temperature (T3) of the extrude outlet is set to be higher than the temperature (T1) and lower than the temperature (T2). In this case, the ratio (T3 - T1)/(T2 - T1) will differ depending on the types and amounts of the thermoplastic resin, cellulose fine fibers and optional additional components, but according to one aspect it may be 0.25 or greater, 0.3 or greater or 0.35 or greater, and according to another aspect it may be less than 1.0, 0.95 or less or 0.9 or less.

The shear viscosity and elongation viscosity are the values measured with a twin-capillary rheometer. The shear viscosity and elongation viscosity exhibited by the resin composition may be considered in the same manner for a 3D printer shaping material or shaped article composed of the resin composition. However, this does not apply to shaped articles in which foaming is observed.

From the viewpoint of satisfactory adhesiveness between the fluid and the formed layer, in order to provide satisfactory strength to the shaped article, the temperature of the extrude outlet is preferably a temperature of at least 10°C, at least 15°C or at least 20°C higher than the melting point, when the thermoplastic resin is a crystalline resin, or the glass transition point, when it is an amorphous resin (the highest temperature value being used if multiple resins are present in the resin composition) (this will also be referred to herein as the "melting temperature"), while from the viewpoint of preventing stringing of the fluid to obtain a satisfactory outer appearance for the shaped article, it is preferably a temperature of no more than 80°C, no more than 70°C or no more than 60°C higher than the melting temperature. When a resin composition with a melting temperature of 225°C is used, for example, the temperature of the extrude outlet is preferably 235°C or higher, 240°C or higher or 245°C or higher, and preferably 305°C or lower, 295°C or lower or 285°C or lower.

The surface temperature of the stage is preferably 40°C or higher, 50°C or higher or 60°C or higher, from the viewpoint of preventing shrinkage of the shaped article due to rapid cooling of the shaped article by the stage, and from the viewpoint of preventing dropping of the shaped article during shaping due to insufficient adhesion between the stage and the shaped article, and is also preferably 160°C or lower, 140°C or lower or 130°C or lower, from the viewpoint of helping to prevent solidification of the first layer of the shaped article (that is, the section in contact with the stage).

The extrude outlet diameter may be appropriately designed depending on the type of shaping material and the desired shape for the shaped article, and according to one aspect it is 0.1 mm or larger, 0.2 mm or larger or 0.4 mm or larger, while according to another aspect it is 1.5 mm or smaller, 1.0 mm or smaller or 0.8 mm or smaller.

According to one aspect, the shaping speed is the scanning speed at the relative location of the extrude outlet with respect to the stage. The shaping speed may be appropriately designed depending on the type of shaping material and the desired shape for the shaped article, and according to one aspect it is 5 mm/sec or greater, 8 mm/sec or greater or 10 mm/sec or greater, while according to another aspect it is 200 mm/sec or lower, 100 mm/sec or lower or 50 mm/sec or lower. The scanning speed may be changed as appropriate depending on the section of the shaped article. Examples of modifications include adjustment of the shaping speed to reduce warping shrinkage at locations where warping tends to occur.

The layer height (layering pitch) may be appropriately designed depending on the type of shaping material and the desired shape for the shaped article. It is preferably 0.1 mm or greater, 0.15 mm or greater or 0.2 mm or greater from the viewpoint of allowing rapid shaping due to a lower number of layers, and preferably 0.8 mm or smaller, 0.6 mm or smaller or 0.4 mm or smaller from the viewpoint of allowing formation of high-definition shaped articles. The layering pitch (mm) with respect to the extrude outlet diameter (mm) may be 0.1 or greater or 0.25 or greater, according to one aspect, and 1 or smaller, 0.8 or smaller or 0.6 or smaller, according to another aspect.

<Resin composition>

A resin composition comprising a thermoplastic resin and cellulose fine fibers may be used as a 3D printer shaping material which is to be supplied for shaping. Preferred examples of resin compositions will now be described.

<Cellulose fine fibers>

The cellulose fine fibers of this embodiment may be either unmodified or chemically modified. According to one aspect, the cellulose fine fibers are chemically modified cellulose fine fibers. The term "chemically modified cellulose fine fibers" as used herein means cellulose fine fibers of which at least some of the three hydroxyl groups in the glucopyranose unit of the backbone of the cellulose molecules of the cellulose fibers have been chemically modified. The term "at least some" in this case means that at least one of the hydroxyl groups of at least one glucopyranose unit in the cellulose structure having multiple polymerized glucopyranose units is chemically modified. According to a typical aspect, the cellulose as a whole is not chemically modified, and the chemically modified cellulose fine fibers retain the crystal structure of the cellulose before chemical modification. For example, a type I cellulose crystal structure can be confirmed during analysis by X-ray diffraction (XRD).

[Cellulose starting material]

The starting material for the cellulose fine fibers is not particularly restricted, and a wood-based cellulose starting material (such as conifer chips or broadleaf tree chips, or a nonwood cellulose starting material (such as cotton, hemp, bagasse, kenaf, bamboo, straw, sea weed, algae, sea squirt or bacterial cellulose-derived material), may be used. A type I high-crystalline cellulose starting material is preferably used, which may be wood pulp such as conifer pulp or hardwood pulp, or nonwood pulp such as cotton linter pulp, hemp pulp, bagasse pulp, kenaf pulp, bamboo pulp or straw pulp, for example. According to one aspect, the cellulose fine fibers are plant-derived, according to another aspect they are wood-derived, and according to yet another aspect they are cotton-derived.

From the viewpoint of inhibiting discoloration or loss of physical properties by heating when the cellulose fine fibers are composited with a resin, the glucose content of the cellulose starting material, as determined by constituent sugar analysis, is preferably 90 mass% or greater, more preferably 91 mass% or greater and even more preferably 93 mass% or greater. The upper limit for the glucose content is not particularly restricted, but it is preferably 99.5 mass% or lower in consideration of limiting impurities that may be contaminating during the step of harvesting and purification of the cellulose starting material, or during the step of producing the cellulose fine fibers (for example, fat or oil components, or other contaminants that are not polysaccharides). A high glucose content in the cellulose starting material usually represents high cellulose purity. Cellulose fine fibers obtained using a cellulose starting material with high cellulose purity have the advantage of low amounts of components that can lower the elastic modulus and heat resistance, such as alkali-soluble polysaccharides and acid-insoluble components.

The following method is used to measure the glucose content by constituent sugar analysis. Constituent sugar analysis may be carried out by the analysis protocol established by the National Renewable Energy Laboratory of the US Dept. of Energy (Sluiter, A., Hames, B., Ruiz, R., Scarlata, C., Sluiter, J., Templeton, D., Crocker, D.: Determination of structural carbohydrates and lignin in biomass. National Renewable Energy Laboratory (NREL), USA, 2008). A 3 ml portion of 72% sulfuric acid is added to 200 mg of sample and allowed to swell at 30°C for 1 hour, after which it is poured into a 125 ml pressure bottle with 84 ml of purified water and subjected to hydrolysis for 120°C for 1 hour. Suction filtration is then carried out while hot using a 1G-3 glass filter (having constant mass at 105°C), and after solid-liquid separation, the filtrate is brought to a constant volume of 100 ml and the constituent sugars are quantified by high-performance liquid chromatography (HPLC) (FL detection method).

The cellulose starting material may also be purified. The refined cellulose starting material used may be refined pulp or refined cotton obtained from the cellulose starting material described above, such as conifer chips, broadleaf tree chips or a nonwood cellulose starting material (for example, cotton, hemp, bagasse, kenaf, bamboo or straw), via a refining step and bleaching step for delignification and removal of hemicellulose by digestion treatment. In addition, cut yarn of regenerated cellulose fibers and cut yarn of regenerated cellulose obtained by electrospinning can also be used as a refined cellulose starting material. The suitable conditions for refining treatment (the digestion temperature, the alkali concentration during digestion, and the bleaching agent concentration or bleaching time) may be set depending on the type of cellulose starting material, for production of refined cellulose fibers retaining high cellulose purity, and use as the cellulose starting material.

From the viewpoint of high cellulose purity, industrial availability and quality stability, cellulose fine fibers derived from cotton (cotton lint or cotton linter) are preferred, with cellulose fine fibers derived from cotton linter pulp being especially preferred.

In light of recent demands for realizing a more sustainable society, recycled materials such as recycled cotton or recycled wood can also be used as cellulose starting materials. Recycled cotton may be fibers produced by collecting and breaking up cut cotton waste and fallen cotton discarded at spinning factories and sewing factories, or fibers obtained by breaking up cotton that has already been used in fabrics and clothing. Recycled wood is obtained by converting sawmill remnants, construction wood, thinnings and forest residue into chips, and forming them into pulp by a common method. Of the recycled materials mentioned above, the cellulose starting material for this embodiment is preferably recycled cotton.

In order to obtain cellulose fine fibers with excellent thermal stability it is effective to further treat the unrefined cellulose starting material or refined cellulose starting material (such as refined pulp) by immersion in water and heat treatment at a temperature of 100°C or higher, and to treat the unrefined cellulose starting material or refined cellulose starting material by alkali treatment in which it is repeatedly immersed in a strong aqueous alkali solution such as aqueous sodium hydroxide (alkali concentration: 1 mass% to 10 mass%), allowed to stand or stirred for a fixed period in a range of 0°C to 60°C and then washed with water.

In order to obtain a high-purity refined cellulose starting material it is effective to further treat the unrefined cellulose starting material or refined cellulose starting material by enzymatic treatment in which it is immersed in water and reacted with a hemicellulose catabolic enzyme or cellulase, such as xylase or mannanase, in a range of 35°C to 55°C.

Carrying out purification with a combination of multiple treatments from among the aforementioned heat treatment, alkali treatment and enzymatic treatment can be effective for obtaining a higher-purity refined cellulose starting material. Such treatment has the effect of not only reducing the load in the micronization treatment, but also of causing impurity components such as lignin and hemicellulose, which are present on the surfaces and in the gaps of the microfibrils forming the cellulose starting material, to be discharged into the aqueous phase, resulting in higher cellulose purity of the refined cellulose starting material, and it may therefore be significantly effective.

The glucose content as determined by constituent sugar analysis is preferably high in the cellulose fine fibers as well as in the cellulose starting material. The glucose content of the cellulose fine fibers is preferably 85 mass% or greater and more preferably 90 mass% or greater, with no particular upper limit, which may be 99.5 mass% or lower according to one aspect.

[Whiteness]

The whiteness of the cellulose fine fibers of the embodiment is preferably 50% or greater, 60% or greater, 70% or greater, 80% or greater, 90% or greater or 95% or greater. The whiteness referred to here is the value measured using a spectroscopic whiteness meter/color difference meter (Model PF700 by Nippon Denshoku Industries Co., Ltd.), according to "Paper, board and pulps - Measurement of diffuse blue reflectance factor (ISO whiteness)" (JIS P8148, ISO 2470). When the cellulose starting material or cellulose fine fibers are obtained in sheet form, the sheet may be provided directly for measurement. When in a wetted state, the cellulose starting material or cellulose fine fibers may be processed by papermaking using a suction filtration apparatus comprising a polytetrafluoroethylene (PTFE) membrane filter, to a basis weight of 50 g/m$^2$ or greater, and dried to equilibrium moisture at 80°C to prepare a cellulose sheet, using the sheet for measurement of the whiteness with the device mentioned above. Since higher whiteness corresponds to more excellent heat resistance of the cellulose fine fibers, this is preferred to improve the strength, elastic modulus and dimensional stability when the resin composition obtained by compositing with a resin by melt kneading is processed by mechanical recycling. There is no particular upper limit to the whiteness of the cellulose fine fibers since the effect is increased with a larger value, but according to one aspect, the whiteness that can actually be obtained for the cellulose fine fibers is 99% or lower.

The means for achieving whiteness for the cellulose fine fibers may be treatment, such as bleaching treatment, of the cellulose starting material before defibration treatment. Since the whiteness is usually not significantly lowered in the defibrating step of the embodiment, the whiteness of the cellulose starting material supplied to defibration will be equivalent to the whiteness of the cellulose fine fibers. The whiteness of the cellulose starting material is therefore preferably 50% or higher, 60% or higher, 70% or higher, 80% or higher, 90% or higher or 95% or higher. There is no upper limit since a larger value will increase the effect, but according to one aspect, the whiteness that can be actually obtained for the cellulose starting material is 99% or lower.

[Fiber length distribution of cellulose starting material]

According to another aspect, the cellulose starting material has a mean fiber length (the length-weighted mean fiber length explained below) of 3 mm or smaller and/or the number ratio of fibers with fiber lengths of 3 mm or larger is 20% or lower, based on measurement with a fiber shape autoanalyzer. If the cellulose starting material has such a specified fiber length distribution, energy transfer will be satisfactory during micronization and beating in the defibrating step (beating with a disc refiner or high-pressure homogenizer, for example), while clogging will be less likely to occur, resulting in stable defibration treatment even with a relatively high concentration of cellulose in the slurry.

The mean fiber length is more preferably 2.5 mm or smaller, even more preferably 2.0 mm or smaller and most preferably 1.6 mm or smaller. Since a smaller mean fiber length increases the aforementioned effect the lower limit is not particularly restricted, but it is preferably 0.1 mm or greater and more preferably 0.5 mm or greater in consideration of mechanical properties when the beaten cellulose fine fibers are used as a filler.

The number ratio of fibers with fiber lengths of 3 mm or greater is more preferably 15% or lower and even more preferably 10% or lower. Since a smaller value increases the aforementioned effect the lower limit is not particularly restricted, but the range for realistic pretreatment is preferably 0.5% or greater and more preferably 1% or greater.

The fiber lengths of the cellulose starting material can be measured using a fiber shape autoanalyzer (Morfi Neo by Techpap). The measurement procedure is as follows.

The cellulose starting material is dispersed in purified water to prepare a 1 L aqueous dispersion. The final solid concentration of the cellulose starting material is 0.003 to 0.005 mass%. A dispersion of the cellulose starting material at less than 2 mass% before dilution can be simply mixed with a spatula, but for an aqueous dispersion, wet cake or powder at 2 mass% or greater, a high-shear homogenizer (for example, "ULTRA-TURRAX T18", trade name of IKA Co.) may be used for dispersion treatment with treatment conditions of 25,000 rpm × 5 min. When the dispersion is in a medium other than water, a high-shear homogenizer is used, and dispersion treatment is carried out in a sufficient amount of purified water with treatment conditions of 25,000 rpm × 5 min, after which the medium is removed by suction filtration or other means, and the high-shear homogenizer is again used, carrying out dispersion treatment in purified water with treatment conditions of 25,000 rpm × 5 min to a final solid concentration of 0.003 to 0.005 mass%, to exchange the medium with water.

The prepared aqueous dispersion is fed to an autosampler for measurement. The obtained measurement results are outputted to a txt (or csv) file, and the shape parameters are extracted or calculated based on the measurement results. The following values are used for each parameter, from among the measured values.

1) Length-weighted mean fiber length: Mean length-weighted Length [μm]
2) Proportion of fibers with fiber lengths of 3 mm or greater: The proportion of the number of fibers with fiber lengths of 3 mm or greater occupying the total fibers is calculated by the following formula, based on a histogram of the fiber length distribution of 1).

Proportion of fibers with fiber lengths of 3 mm or greater (%) = number of fibers with fiber lengths of 3 mm or greater/total number of measured fibers × 100

3) Mean fiber size: Mean fiber width [μm]

In order to control the fiber lengths of the cellulose starting material to a specific range, defibration (such as beating treatment) may be carried out after one or more pretreatments selected from among pulverizing, grinding and sorting. Pretreatment according to one aspect is treatment that produces a pretreated cellulose starting material wherein the mean fiber length is 3 mm or smaller and/or the number ratio of fibers with fiber lengths of 3 mm or larger is 20% or lower, from a cellulose starting material wherein the mean fiber length is larger than 3 mm and the number ratio of fibers with fiber lengths of 3 mm or larger is greater than 20%. The pulverizing treatment is pulverizing of the cellulose starting material in a dry system, and the crusher used may be a coarse crusher, an intermediate crusher or a fine crusher. Grinding treatment is treatment in which a cellulose starting material is dispersed in an aqueous medium and subjected to pulverizing treatment in the aqueous dispersion, being distinguished from the aforementioned pulverizing treatment in that it is carried out in a wet system. The pulverizer used may be a rotating stone mill, a crusher, a planetary mixer, a single-screw extruder, a twinscrew extruder or a bead mill. Classifying treatment may be dry classification or wet classification. Dry classification may be gravity field classification, inertial field classification or centrifugal field classification (a natural vortex type or forced vortex type), and wet classification may be gravity field classification, centrifugal field classification (free vortex type) or centrifugal field classification (forced vortex type). Classification using mesh openings of a sieve, screen, wire (edge wire) or net, or sorting by centrifugal separation, may also be used.

[Chemical modification]

According to one aspect, the cellulose fine fibers are chemically modified cellulose fine fibers. The chemical modification may be carried out before defibration, during defibration and/or after defibration, but according to a preferred aspect, the chemical modification is carried out in a state before defibration (a pulp state according to one aspect), with defibrating treatment being carried out afterward. When pretreatment is carried out before defibration, the chemical modification may be carried out before pretreatment, but from the viewpoint of facilitating processing the chemical modification is preferably carried out after pretreatment.

The method of chemical modification may be esterification, etherification or urethanation, but esterification is preferred from the viewpoint of obtaining chemically modified cellulose fine fibers with excellent heat resistance. Preferred among these is saturated monocarboxylic acid esterification, such as acetic acid esterification (acetylation), propionic acid esterification, pentanoic acid (valeric acid) esterification and hexanoic acid (caproic acid) esterification. Acetic acid esterification (acetylation) is preferred among these from the viewpoint of heat resistance of the chemically modified cellulose fine fibers. The esterification may also be carried out using a dicarboxylic acid, such as phthalic acid esterification. According to a preferred aspect, the cellulose fine fibers are acetylated cellulose fine fibers. Examples of modifying agents include esterifying agents, such as: saturated carboxylic acids and their acid anhydrides and acid chlorides; and saturated vinyl monocarboxylates such as vinyl acetate and vinyl propionate.

Preferred examples of esterifying agents include, but are not limited to, aliphatic monocarboxylic acids such as acetic acid, propionic acid, butyric acid, valeric acid, caproic acid, caprylic acid, lauric acid, tridecanoic acid, myristic acid, palmitic acid, stearic acid, pivalic acid and isobutyric acid; alicyclic monocarboxylic acids such as cyclohexanecarboxylic acid; aromatic monocarboxylic acids such as benzoic acid, toluic acid, $\alpha$-naphthalenecarboxylic acid, $\beta$-naphthalene-carboxylic acid, methylnaphthalenecarboxylic acid and phenylacetic acid; and mixtures of any arbitrarily selected among these, as well as symmetrical anhydrides (acetic anhydride, maleic anhydride, cyclohexane-carboxylic anhydride and benzene-sulfonic anhydride), mixed acid anhydrides (butyric-valeric anhydride), cyclic anhydrides (succinic anhydride, phthalic anhydride, naphthalene-1,8:4,5-tetracarboxylic dianhydride and cyclohexane-1,2,3,4-tetracarboxylic 3,4-anhydride), and ester acid anhydrides (3-(ethoxycarbonyl)propanoic acetate anhydride and benzoylethyl carbonate), arbitrarily selected from the foregoing.

For chemical modification of the cellulose starting material in its form prior to defibration, it is preferably carried out in a solvent that satisfactorily swells the cellulose starting material, in order to cause chemical modification up to the fibers inside the cellulose starting material. The solvent used to satisfactorily swell the cellulose starting material is, according to one aspect, an aprotic polar solvent, and preferably dimethyl sulfoxide (DMSO), N-methyl-2-pyrrolidone (NMP), N,N-dimethylformamide (DMF), N,N-dimethylacetamide (DMAc), or a mixture of two or more of these.

According to another aspect, the cellulose may be formed into microfibers and then chemically modified. In this case, the cellulose fine fibers are concentrated by suction filtration, for example, to form a wet cake, and then diluted and dispersed in a solvent for chemical modification. The method of chemical modification may be the same as for chemical modification of the cellulose starting material.

When the cellulose fine fibers are chemically modified, however, excessive drying causes aggregation of the cellulose fine fibers, and therefore the solid concentration is preferably 30 mass% or lower and more preferably 20 mass% or lower. On the other hand, in chemical modification with an esterifying agent, for example, the esterifying agent also reacts with water in addition to cellulose, and therefore a low amount of drag-in water is preferred, while the lower limit for the solid concentration is preferably 5 mass% or greater and more preferably 10 mass% or greater. When chemical modification is difficult to achieve in the presence of water, the chemical modification may be carried out after repeated operation of suction filtration of a dispersed slurry prepared by diluting and dispersing in a solvent and then adding additional solvent, in order to reduce the moisture content of the system. When chemical modification is carried out after forming microfibers from the cellulose starting material, it is preferred for the solvent used to be one that satisfactorily swells the cellulose starting material, from the viewpoint of homogeneous chemical modification, but other solvents may also be used since the surfaces of the cellulose fine fibers are exposed.

(Degree of substitution (DS))

The degree of substitution (DS) of the cellulose starting material or cellulose fine fibers is preferably 0.5 or greater, 0.6 or greater or 0.7 or greater. If the DS is too high, the degree of crystallinity will be low and the mechanical properties of the resin composition obtained by compositing the cellulose fine fibers with the resin will tend to be reduced, and therefore the DS is preferably 1.3 or lower, 1.1 or lower or 1.0 or lower.

The degree of substitution (DS) can be determined in the following manner. This example is one in which the chemical modification is esterification (acylation). The degree of acyl substitution can be calculated based on the peak intensity ratio between the acyl group-derived peak and the cellulose backbone-derived peak, in the reflective infrared absorption spectrum of the esterified cellulose fibers. The peak of the absorption band for C=O based on acyl groups appears at 1730 cm$^{-1}$, while the peak of the absorption band for C-O based on the cellulose backbone chain appears at 1030 cm$^{-1}$. The DS for esterified cellulose fibers can be calculated using the calibration curve:

$$\text{Degree of substitution DS} = 4.13 \times \text{IR index (1030)},$$

derived from a correlation graph drawn between DS obtained from solid NMR measurement of the esterified cellulose fibers described below, and the modification rate (IR index 1030), defined by the ratio of the peak intensity of the absorption band for C=O based on acyl groups with respect to the peak intensity of the absorption band for C-O of the cellulose backbone chain.

The DS of the esterified cellulose fibers by solid NMR can be calculated by conducting $^{13}$C solid NMR measurement of the freeze-shattered esterified cellulose fibers, and calculating the value by the following formula using the area intensity (Inf) of the signal attributed to one carbon atom of the modifying group, with respect to the total area intensity (Inp) of the signals attributed to C1-C6 carbons of the pyranose rings of cellulose, appearing in the range of 50 ppm to 110 ppm.

$$DS = (Inf) \times 6/(Inp)$$

When the modifying group is acetyl, for example, the signal at 23 ppm attributed to $-CH_3$ may be used.

The conditions for the $^{13}$C solid NMR measurement may be as follows, as an example. Apparatus: Bruker Biospin Avance 500WB

| | |
|---|---|
| Frequency: | 125.77 MHz |
| Measuring method: | DD/MAS |
| Latency time: | 75 sec |
| NMR sample tube: | 4 mm$\varphi$ |
| Number of scans: | 640 (~14 hr) |
| MAS: | 14,500 Hz |

Chemical shift reference: glycine (external reference: 176.03 ppm)

(DS$_S$/DS of cellulose fine fibers)

According to one aspect, the cellulose fine fibers are cellulose fine fibers that are chemically modified on the surfaces. According to one aspect, the DS heterogeneity ratio (DSs/DS), defined as the ratio of the degree of substitution (DSs) on the fiber surfaces with respect to the degree of substitution (DS) throughout the entirety of the chemically modified cellulose fine fibers, may be 1.05 or greater.

The DS heterogeneity ratio (DSs/DS), defined as the ratio of the degree of substitution (DSs) on the fiber surfaces with respect to the degree of substitution (DS) of the fibers as a whole, is preferably 1.05 or greater. A larger value for the DS heterogeneity ratio corresponds to a more non-uniform structure similar to a sheath-core structure (that is, although the fiber surfaces are highly chemically modified, the center sections of the fibers maintain the original largely unmodified cellulose structure), which helps to provide the high mechanical strength and dimensional stability of cellulose while improving the affinity with the resin during compositing with the resin, and improving the dimensional stability of the resin composition. The DS heterogeneity ratio is more preferably 1.1 or greater, 1.2 or greater, 1.3 or greater, 1.5 or greater or 2.0 or greater, while from the viewpoint of facilitating production of chemically modified cellulose fine fibers, it is preferably 30 or lower, 20 or lower, 10 or lower, 6 or lower, 4 or lower or 3 or lower.

The DSs value differs according to DS, and for example, it is preferably 0.1 or greater, 0.2 or greater, 0.3 or greater or 0.5 or greater, and preferably 3.0 or lower, 2.5 or lower, 2.0 or lower, 1.5 or lower, 1.2 or lower or 1.0 or lower.

DSs is determined by the following method. Powdered chemically modified cellulose fibers obtained by freeze-pulverizing are placed on a 2.5 mm$\varphi$ dish-shaped sample stand and the surface is pressed flat and measured by X-ray photoelectron spectroscopy (XPS). The XPS spectrum reflects the structural elements and chemically bonded state of the sample surface layer alone (typically about several nanometers). The obtained C1s spectrum is analyzed by peak separation, and calculation is performed by the following formula using the area intensity (Ixf) of the peak attributed to one carbon atom of the chemically modified group, with respect to the area intensity (Ixp) of the peak attributed to the C2-C6 carbons of the pyranose rings of cellulose (289 eV, C-C bond).

$$DSs = (Ixf) \times 5/(Ixp)$$

When the chemically modified group is acetyl, the C1s spectrum is analyzed by peak separation at 285 eV, 286 eV, 288 eV and 289 eV, the peak at 289 eV being used for Ixp and the peak due to acetyl group O-C=O bonds (286 eV) being used for Ixf.

The conditions for XPS measurement are the following, as an example.

Device: VersaProbe II by Ulvac-Phi, Inc.
Excitation source: mono. AlK$\alpha$ 15 kV $\times$ 3.33 mA

Analysis size: ~200 μmφ
Photoelectron take-off angle: 45°
Capture range
Narrow scan: C 1s, O 1s
Pass Energy: 23.5 eV

[Degree of crystallinity]

The degree of crystallinity of the cellulose starting material or cellulose fine fibers is preferably 50% or greater. If the degree of crystallinity is within this range, the mechanical properties (strength and dimensional stability) of the cellulose itself will be high, so that when the cellulose fine fibers are dispersed in a resin, the strength and dimensional stability of the resin composition will also tend to be high. The lower limit for the degree of crystallinity is more preferably 55% or higher, 60% or higher, 65% or higher, 70% or higher or 75% or higher, and most preferably 80% or higher. The upper limit for the degree of crystallinity is not particularly restricted, with a higher degree being preferred, but from the viewpoint of productivity the preferred upper limit is 99%.

When the cellulose in the sample is type I cellulose crystals (derived from natural cellulose), the degree of crystallinity for the present disclosure is that determined by the following formula, from the diffraction pattern ($2\theta$/deg. = 10 to 30) obtained by measurement of the sample by wide-angle X-ray diffraction, based on the Segal method.

$$\text{Degree of crystallinity (\%)} = [\text{I}_{(200)} - \text{I}_{(\text{amorphous})}]/\text{I}_{(200)} \times 100$$

$\text{I}_{(200)}$: Diffraction peak intensity at 200 plane ($2\theta = 22.5°$) for type I cellulose crystal
$\text{I}_{(\text{amorphous})}$: Amorphous halo peak intensity for type I cellulose crystal, peak intensity at angle of 4.5° lower than diffraction angle at 200 plane ($2\theta = 18.0°$).

When the cellulose in the sample is type II cellulose crystals, the degree of crystallinity is determined by the following formula, from the absolute peak intensity h0 at $2\theta = 12.6°$ attributed to the (110) plane peak of the type II cellulose crystals, and the peak intensity h1 from the baseline for the plane spacing (line connecting $2\theta = 8°$ and 15°), in wide-angle X-ray diffraction.

$$\text{Degree of crystallinity (\%)} = (h0 - h1)/h0 \times 100$$

[Morphological changes in cellulose starting material or cellulose fine fibers before and after chemical modification]

The stirring conditions and temperature for chemical modification may be appropriately adjusted, but the maintenance factor for the fiber lengths of the cellulose starting material or cellulose fine fibers before and after chemical modification (Fiber length maintenance factor (%) = mean fiber length (nm) after modification/mean fiber length (nm) before modification $\times$ 100) is preferably 70% or greater, 80% or greater or 90% or greater. If the maintenance factor is within this range, the cellulose fine fibers will maintain long fiber lengths, resulting in satisfactory strength and heat resistance of the resin composition. Since a higher fiber length maintenance factor provides a greater effect there is no particular upper limit, but it is preferably 99.5% or lower in consideration of realistic modification treatment.

[Polymorphic crystals]

The known crystal polymorphisms of cellulose include type I, type II, type III and type IV, among which type I and type II are most commonly used, whereas type III and type IV are not commonly used on an industrial scale but have been obtained on a laboratory scale. The crystal polymorphism of the cellulose fine fibers is preferably type I or type II because the mechanical properties (strength and dimensional stability) of the fibers will be high, and the strength and dimensional stability of the resin composition will be high when the cellulose fine fibers are dispersed in the resin.

[Polymerization degree]

The degree of polymerization of the cellulose starting material or cellulose fine fibers is preferably 100 or higher, 150 or higher, 200 or higher, 300 or higher, 400 or higher or 450 or higher, and preferably 3500 or lower, 3300 or lower, 3200 or lower, 3100 or lower or 3000 or lower.

The degree of polymerization is preferably within this range from the viewpoint of workability and mechanical properties. The degree of polymerization is preferably not too high from the viewpoint of workability, and it is preferably not too low from the viewpoint of exhibiting mechanical properties.

The degree of polymerization is the mean polymerization degree measured by a reduced relative viscosity method using a copper-ethylenediamine solution, as described in Verification Test (3) of "Japanese Pharmacopeia, 15th Edition Reference Manual (Hirokawa Shoten)".

In some cases an accurate calculation of the polymerization degree of the chemically modified cellulose fine fibers cannot be made due to the presence of chemically modified groups. In such cases, the polymerization degree of the cellulose fine fibers immediately before chemical modification, as the starting material for the chemically modified cellulose fine fibers, or of the cellulose starting material immediately before chemical modification, may be considered to be the polymerization degree of the chemically modified cellulose fine fibers.

[Mw, Mn, Mw/Mn]

According to one aspect, the weight-average molecular weight (Mw) of the cellulose fine fibers is preferably 100,000 or higher, 120,000 or higher, 150,000 or higher, 180,000 or higher or 200,000 or higher. According to another aspect, the number-average molecular weight (Mn) of the cellulose fine fibers is preferably 10,000 or higher, 12,000 or higher, 15,000 or higher, 17,000 or higher, 18,000 or higher, 20,000 or higher, 25,000 or higher or 30,000 or higher. According to another aspect, the ratio (Mw/Mn) between the weight-average molecular weight and number-average molecular weight (Mn) is preferably 10.0 or lower, 9.0 or lower, 8.0 or lower, 7.0 or lower, 6.0 or lower, 5.6 or lower or 5.4 or lower. A higher weight-average molecular weight means a lower number of terminal groups of the cellulose molecules. Since the ratio (Mw/Mn) of the weight-average molecular weight and number-average molecular weight represents the width of the molecular weight distribution, a smaller Mw/Mn means a lower number of ends of cellulose molecules. Since the ends of the cellulose molecules are origins for thermal decomposition, when the cellulose molecules of the cellulose fine fibers not only have high weight-average molecular weight, but the high weight-average molecular weight is also combined with a more narrow width molecular weight distribution width, it is possible to obtain cellulose fine fibers with especially high heat resistance. The weight-average molecular weight (Mw) of the cellulose fine fibers may be 1,000,000 or lower, 800,000 or lower, 600,000 or lower, 500,000 or lower or 400,000 or lower, for example, from the viewpoint of more easily obtaining the cellulose starting material. The number-average molecular weight (Mn) of the cellulose fine fibers may be 600,000 or lower, 500,000 or lower or 400,000 or lower, for example, from the viewpoint of more easily obtaining the cellulose starting material. The ratio (Mw/Mn) of the weight-average molecular weight and number-average molecular weight (Mn) may be 1.5 or higher, 1.7 or higher or 2 or higher, from the viewpoint of easier production of the cellulose fine fibers. The Mw can be controlled to within this range by selecting a cellulose starting material having the corresponding Mw, or by carrying out appropriate physical treatment and/or chemical treatment of the cellulose starting material, especially with the defibration being carried out under controlled moderate conditions. The Mw/Mn can be controlled to within this range by selecting a cellulose starting material having the corresponding Mw/Mn, or by carrying out appropriate physical treatment and/or chemical treatment of the cellulose starting material, especially with the defibration being carried out under controlled moderate conditions. The Mw and Mw/Mn of the cellulose starting material may be in the ranges specified above according to one aspect. Examples of physical treatment for control of both the Mw and Mw/Mn include physical treatment by application of mechanical force, such as dry grinding or wet grinding with a microfluidizer, ball mill or disk mill, for example, or impacting, shearing, sliding or abrasion with a crusher, homomixer, high-pressure homogenizer or ultrasonic device, for example, while examples of chemical treatment include digestion, bleaching, acid treatment, enzymatic treatment, regenerated cellulose treatment and hydrolysis.

In some cases an accurate calculation of the Mw, Mn and Mw/Mn of the chemically modified cellulose fine fibers cannot be made due to the presence of chemically modified groups. In such cases, the Mw, Mn and Mw/Mn of the cellulose fine fibers immediately before chemical modification, as the starting material for the chemically modified cellulose fine fibers, or of the cellulose starting material immediately before chemical modification, may be considered to be the Mw, Mn and Mw/Mn of the chemically modified cellulose fine fibers.

For the purpose of the disclosure, the weight-average molecular weight (Mw) and number-average molecular weight (Mn) of the cellulose starting material or cellulose fine fibers are the values determined by gel permeation chromatography using N,N-dimethylacetamide as the solvent, after dissolving the cellulose starting material or cellulose fine fibers in N,N-dimethylacetamide containing added lithium chloride.

[Alkali-soluble polysaccharide average content]

Alkali-soluble polysaccharides such as hemicellulose and acid-insoluble components such as lignin are present between cellulose microfibrils and between microfibril bundles of the cellulose starting material or cellulose fine fibers. Hemicellulose is a polysaccharide composed of sugars such as mannan and xylan, and it plays a role in hydrogen bonding with cellulose and binding together microfibrils. Lignin is a compound with an aromatic ring that is known to participate in

# EP 4 759 513 A1

covalent bonding with hemicellulose in plant cell walls.

Alkali-soluble polysaccharides that may be included in the cellulose starting material or cellulose fine fibers include hemicellulose, as well as β-cellulose and γ-cellulose. Alkali-soluble polysaccharides are understood by those skilled in the art to consist of the components that are obtained as the alkali-soluble portion of holocellulose (that is, the components other than α-cellulose in holocellulose), upon solvent extraction and chlorine treatment of a plant (such as wood).

According to one aspect, the average content of alkali-soluble polysaccharides in the cellulose starting material or cellulose fine fibers is preferably 20 mass% or lower, 18 mass% or lower, 15 mass% or lower or 12 mass% or lower with respect to 100 mass% of the cellulose starting material or cellulose fine fibers, from the viewpoint of maintaining mechanical strength and inhibiting yellowing of the cellulose fine fibers during melt kneading. The content may also be 0.1 mass% or greater, 0.5 mass% or greater, 1 mass% or greater, 2 mass% or greater or 3 mass% or greater from the viewpoint of obtainability of the cellulose starting material.

The average content of alkali-soluble polysaccharides can be determined by a method described in non-patent literature (Mokushitsu Kagaku Jikken Manual, ed. The Japan Wood Research Society, pp.92-97, 2000), subtracting the α-cellulose content from the holocellulose content (Wise method). In the technical field this method is understood to be a method of measuring hemicellulose content. The alkali-soluble polysaccharide content is calculated 3 times for each sample, and the number average for the calculated alkali-soluble polysaccharide contents is recorded as the average alkali-soluble polysaccharide content.

[Average content of acid-insoluble components]

The acid-insoluble components present in the cellulose starting material or cellulose fine fibers will be understood by a person skilled in the art to be the insoluble components remaining after sulfuric acid treatment of the degreased sample obtained by solvent extraction from a plant (such as wood). Specifically, the acid-insoluble component may be, but is not limited to, aromatic-derived lignin.

According to one aspect, the average content of acid-insoluble components in the cellulose starting material or cellulose fine fibers is preferably 10 mass% or lower, 5 mass% or lower or 3 mass% or lower with respect to 100 mass% of the cellulose starting material or cellulose fine fibers, from the viewpoint of avoiding lower heat resistance and associated discoloration of the cellulose fine fibers. The content may also be 0.1 mass% or greater, 0.2 mass% or greater or 0.3 mass% or greater from the viewpoint of more easily obtaining the cellulose starting material.

The average content of the acid-insoluble components is quantified by quantifying the acid-insoluble components using the Klason method, described in non-patent literature (Mokushitsu Kagaku Jikken Manual, ed. The Japan Wood Research Society, pp.92-97, 2000). In the technical field this method is understood to be a method of measuring lignin content. The sample is stirred in a sulfuric acid solution to dissolve the cellulose and hemicellulose, and then filtered with glass fiber filter paper, and the obtained residue is used as the acid-insoluble component. The acid-insoluble component content is calculated from the weight of the acid-insoluble component, and the average of the acid-insoluble component content calculated for three samples is recorded as the average content of the acid-insoluble component.

[Thermal decomposition initiation temperature ($T_D$)]

The thermal decomposition initiation temperature ($T_D$) of the cellulose starting material or cellulose fine fibers is preferably 220°C or higher, 230°C or higher, 240°C or higher, 250°C or higher, 260°C or higher, 270°C or higher, 275°C or higher, 280°C or higher or 285°C or higher, according to one aspect, from the viewpoint of avoiding heat degradation during melt kneading and shaping and allowing foaming to be reduced and satisfactory mechanical strength to be exhibited. While a higher thermal decomposition initiation temperature is preferred, it is also 320°C or lower, 310°C or lower or 300°C or lower, for example, from the viewpoint of easier production of the cellulose fine fibers.

[1% weight loss temperature ($T_{1\%}$) and 250°C weight loss ($T_{250°C}$)]

The temperature at 1 wt% weight loss ($T_{1\%}$) of the cellulose starting material or cellulose fine fibers is preferably 230°C or higher, 240°C or higher, 250°C or higher, 260°C or higher, 270°C or higher, 275°C or higher, 280°C or higher, 285°C or higher or 290°C or higher, according to one aspect, from the viewpoint of avoiding heat degradation during melt kneading and shaping and allowing mechanical strength to be exhibited. While a higher $T_{1\%}$ is preferred, it may also be 330°C or lower, 320°C or lower or 310°C or lower, for example, from the viewpoint of easier production of the cellulose fine fibers.

According to one aspect, the 250°C weight loss ($T_{250°C}$) of the cellulose starting material or cellulose fine fibers is preferably 15% or lower, 12% or lower, 10% or lower, 8% or lower, 6% or lower, 5% or lower, 4% or lower or 3% or lower, from the viewpoint of avoiding heat degradation during melt kneading and allowing mechanical strength to be exhibited.

While a lower $T_{250°C}$ is preferred, it may be 0.1% or greater, 0.5% or greater, 0.7% or greater or 1.0% or greater, for example, from the viewpoint of easier production of the cellulose fine fibers.

For the purpose of the disclosure, the $T_D$ is the value determined from a graph of thermogravimetry (TG) analysis under a nitrogen flow, where the abscissa is temperature and the ordinate is weight retention %. After increasing the temperature of a porous sheet of the disclosure from room temperature to 150°C at a temperature-elevating rate of 10°C/min under a nitrogen flow of 100 ml/min and holding this state at 150°C for 1 hour, the temperature is then further increased to 450°C at a temperature-elevating rate of 10°C/min. Starting from the weight at 150°C (with essentially all of the moisture content removed) (0 wt% weight loss), a straight line is obtained running through the temperature at 1 wt% weight loss ($T_{1\%}$) and the temperature at 2 wt% weight loss ($T_{2\%}$). The temperature at the point of intersection between this straight line and a horizontal (baseline) running through the origin at weight loss 0 wt%, is defined as $T_D$.

The 1% weight loss temperature ($T_{1\%}$) is the temperature at 1 wt% weight loss with the 150°C weight as the origin, after continuous temperature increase by the method for $T_D$ described above.

The 250°C weight loss ($T_{250°C}$) of the cellulose starting material or cellulose fine fibers is the weight loss when the sample is held for 2 hours under a nitrogen flow at 250°C in TG analysis. The sample is increased in temperature from room temperature to 150°C at a temperature-elevating rate of 10°C/min, under a nitrogen flow of 100 ml/min, and held at 150°C for 1 hour, after which the temperature is increased from 150°C to 250°C at 10°C/min and held at 250°C for 2 hours. Calculation was by the following formula using the weight WO upon reaching 250°C and the weight W1 after holding at 250°C for 2 hours.

$$250°C \text{ Weight change rate (\%): } (W0 - W1)/W0 \times 100$$

For measurement of the crystal polymorphism, degree of crystallinity, polymerization degree, Mw, Mn, Mw/Mn, average alkali-soluble polysaccharide content, average acid-insoluble component content, $T_D$, $T_{1\%}$, $T_{250°C}$, DS, DSs and DS heterogeneity ratio, for the purpose of the disclosure, a porous sheet without distortion may be used as the measuring sample in order to achieve stable, reproducible measurement with low numerical variation due to the shape of the measuring sample. The method of fabricating the porous sheet is as follows.

First, a concentrated cake of a sample with a solid content of 10 mass% or greater is added to tert-butanol, and further subjected to dispersion treatment with a mixer until disappearance of the aggregates. A mixture is then prepared to a concentration of 0.5 mass% for 0.5 g of sample solid weight. A 100 g portion of the obtained tert-butanol dispersion is filtered on filter paper. Without being released from the filter paper, the filtered substance together with the filter paper is sandwiched by two larger filter paper sheets, and dried for 5 minutes in an oven at 150°C while pressing the edges of the larger filter paper with a weight from above. The filter paper is then released to obtain a porous sheet without distortion. Sheets with air permeability resistance R up to 100 sec/100 ml per 10 g/m$^2$ basis weight of the sheet were considered to be porous sheets, and were used as measuring samples.

The method of measuring the air permeability resistance R is as follows. After measuring the basis weight W (g/m$^2$) of each porous sheet sample that has been left to stand for 1 day in an environment of 23°C, 50% RH, an Oken-type air permeability resistance tester (for example, Model EG01 by Asahi Seiko Co., Ltd.) is used to measure the air permeability resistance R (sec/100 ml). The value per 10 g/m$^2$ basis weight is calculated by the following formula.

$$\text{Air permeability resistance (sec/100 ml) per 10 g/m}^2 \text{ basis weight} = R/W \times 10$$

[Defibration of cellulose starting material]

The cellulose fine fibers can be obtained by defibrating the cellulose starting material. According to one aspect, the cellulose fine fibers are the product of mechanical defibration. According to one aspect, the mechanical defibration may be beating treatment. Defibrating may be carried out using a cellulose starting material that has or has not been pretreated according to this embodiment, but preferably it is carried out using a pretreated cellulose starting material. The cellulose starting material may be dispersed in an aqueous medium and the obtained dispersion may be subjected to the following treatment for beating treatment. The aqueous medium may be water itself, or a mixed medium of water with one or more organic solvents selected from among monohydric alcohols such as ethanol, n-propanol, isopropanol and butanol, polyhydric alcohols such as ethylene glycol, diethylene glycol and glycerin, ketones such as acetone, nitrile-based solvents such as acetonitrile, and pyrrolidone-based solvents. The mixing ratio of the organic solvent in a mixture of water with the organic solvent is preferably less than 50 mass%, more preferably 30 mass% or lower and most preferably 20 mass% or lower. A higher water ratio corresponds to more excellent defibration, while a higher organic solvent ratio helps reduce aggregation of microfibers during the drying step after defibration. The proportion of organic solvent is therefore preferably set in consideration of balance between defibration and reducing aggregation. Beating is distinguished from pulverizing pretreatment of the embodiment in that it is carried out in a wet system, and from grinding pretreatment in that the fiber lengths of the cellulose supplied to the treatment differ.

For beating treatment, a cellulose starting material (such as a pulp sheet) is dispersed in an aqueous medium using a pulper or homomixer, as necessary, and then micronized using a beating apparatus such as a beater, disc refiner, high-pressure homogenizer, water jet, disk mill, ball mill, bead mill, mass colloider or homomixer. The beating treatment may be carried out in one stage, or multiple stages, either using the same apparatus several times or a combination of different apparatuses in the case of a multistage process.

Prior to beating treatment, the pulper or homomixer is preferably used to evenly disperse the cellulose starting material in the aqueous medium. Particularly when beating treatment is carried out after chemical modification of the cellulose starting material, whereby the hydrophilicity of the cellulose starting material is reduced, it is preferred to carry out the dispersion treatment with a mixer, such as a homomixer, having a peripheral speed of 10 m/s or greater, preferably 20 m/s or greater and more preferably 25 m/s or greater, according to one aspect, and 90 m/s or less, preferably 80 m/s or less and more preferably 50 m/s or less, according to another aspect. By reducing lumps in the dispersion treatment it is possible to obtain homogeneous cellulose fine fibers by homogeneous beating treatment. It may be effective for the water in the aqueous medium to be water with high purity such as distilled water or ion-exchanged water.

(Multistage beating)

When the cellulose is to be beaten in multiple stages, it is effective to combine two or more beating apparatuses with different micronization mechanisms or shear rates. The method for multistage beating is preferably multistage beating using disc refiners with different disc constructions, or beating with a high-pressure homogenizer after beating with a disc refiner. The disc refiner used may be a single disc refiner, double disc refiner or conical refiner, but for more precise beating control it is preferably a single disc refiner with high clearance control precision between the fixed blade and rotary blade.

(Beating with disc refiner)

The beating is most preferably carried out using a disc refiner. When a disc refiner is used, the pulp or cotton-like cellulose starting material is dispersed and stored in a tank to a suitable solid concentration in the aqueous medium, and a disc refiner is used for beating. The lower limit for the solid concentration may be adjusted to preferably 0.5 mass% or greater, more preferably 0.8 mass% or greater and even more preferably 1.0 mass% or greater. The upper limit for the concentration is preferably 6 mass% or lower, more preferably 3.5 mass% or lower and even more preferably 3 mass% or lower. It may be effective for the water to be water with high purity, such as distilled water or ion-exchanged water.

During operation of the disc refiner, defibration treatment may be carried out by a circulating continuous treatment step in which the slurry residing in the tank is passed through the disc refiner and then returned to the original tank, but preferably defibration treatment is carried out by a continuous treatment step in which two tanks (tank A and tank B) are prepared, connected by tubing through a disc refiner, and the slurry is conveyed from the loaded tank A through the disc refiner to tank B and stored, and at the stage when the slurry in tank A has completed treatment, the process is switched to a mode in which it is conveyed continuously from tank B through the disc refiner to tank A where it accumulates, and the steps are alternatingly repeated thereafter; such treatment is preferred because the slurry will pass through each disc refiner treatment more reliably allowing the total amount of slurry to be subjected to the same number of passes, as is desirable from the viewpoint of uniformity of defibration, i.e. quality stability of the cellulose fine fibers.

When beating treatment is carried out using a disc refiner, it may be carried out in multiple stages (treatment with multiple types of blades) or in one stage (treatment with one type of blade).

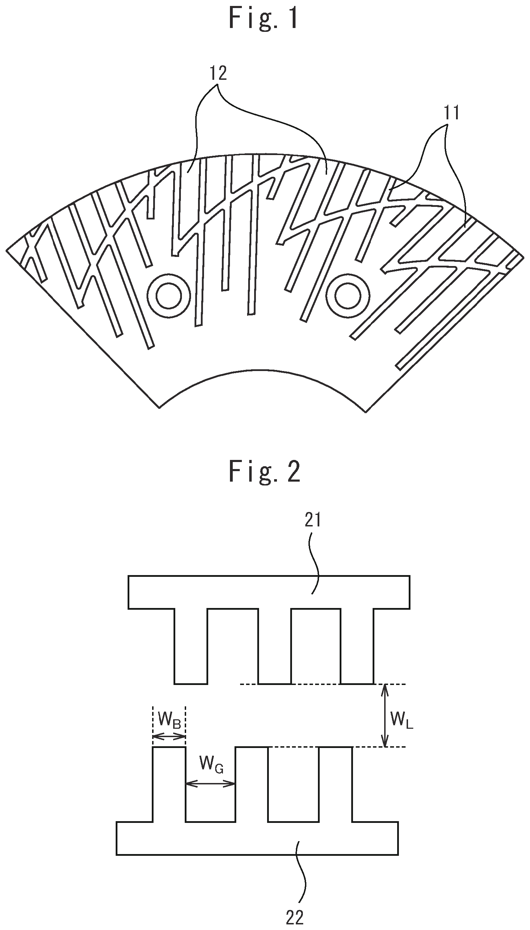

Fig. 1 is a diagram illustrating an example of an arrangement of blades and grooves in a disc refiner, and Fig. 2 is a diagram illustrating blade width, groove width and interblade distance in a disc refiner. For beating in multiple stages using more than one disc refiner, it is preferred to use at least two refiners having different blades. Referring to Figs. 1 and 2, the specific construction of the blades is most preferably a disc refiner having blades 11 and grooves 12 as shown in Fig. 1, where the values of the blade width $W_B$, the groove width $W_G$ and the blade width $W_B$ divided by the groove width $W_G$ (hereunder referred to as "blade/groove ratio") shown in Fig. 2 are important parameters, and beating treatment is carried out with a refiner provided with blades having a blade width of 1.5 mm to 5 mm and a blade/groove ratio of 0.1 to 1.0 (hereunder referred to as "first stage"), after which beating treatment is carried out with a refiner having blades with a blade width of 0.1 mm to 1.0 mm and a blade/groove ratio of 0.5 to 1.0 (hereunder referred to as "second stage"). Defibration with a disc refiner having such a construction can reduce the amount of fibers with long fiber lengths that can cause aggregation in the resin, while also producing cellulose fibers with a low fibrillation index (i.e. minimal broken filaments). During this time, a separate beating step may be added between the first stage and second stage.

When disc refiner treatment is carried out in one stage using a single type of blade, it is most preferred to carry out beating treatment using a refiner having blades with a blade width of 0.1 mm to 1.0 mm and a blade/groove ratio of 0.5 to 1.0.

(Interblade distance for disc refiner treatment)

Referring to Fig. 2, for beating with a disc refiner it is advantageous to control the interblade distance $W_L$ between the two blades (specifically, the rotary blade 21 and fixed blade 22 in Fig. 2) (i.e. the clearance, hereunder referred to as "interblade distance"). By controlling the interblade distance it is possible to control the degree of fiber length or beating of the cellulose fine fibers, and when treatment is to be in multiple stages, the interblade distance is preferably 0.05 mm to 0.5 mm for the first stage treatment while the interblade distance is preferably 0.05 mm to 0.3 mm in the second stage treatment. For treatment in a single stage, the interblade distance is preferably 0.05 mm to 0.3 mm. When adjusting the interblade distance, preferably the gap between blades is gradually narrowed from a wide interblade distance while limiting the current value of the apparatus to below a fixed value, as such control will help to prevent clogging or overload of the device, and to yield cellulose fine fibers with high homogeneity.

Strict control of the interblade distance between the fixed blade and rotary blade during beating treatment of cellulose with a disc refiner in this manner is advantageous for producing homogeneous cellulose fine fibers having satisfactory mechanical properties as a filler. For example, it is common to use an ordinary screw jack for adjustment of the interblade distance in a conventionally used single disc refiner, and the runner section that anchors the rotary blade thus has leeway. The runner section moves about 0.3 mm if forcefully pulled in the direction of thrust. Consequently, a smaller amount of movement (leeway) corresponds to greater precision and is also preferred to obtain beaten cellulose with a high degree of reproducibility, the amount of movement being preferably 0.1 mm or less, more preferably 0.08 mm or less and more preferably 0.05 mm or less. According to one aspect, the single disc refiner used may have an amount of movement of 0.03 mm in the direction of thrust, by using a ball screw jack as the adjusting mechanism for the interblade distance. In addition, for precise adjustment of the interblade distance, preferably a speed reducer is fitted on the ball screw jack, allowing fine adjustment of the interblade distance. By using such a single disc refiner it is possible to make fine adjustment to the interblade distance while carrying out beating with a fixed, non-shifting interblade distance during the beating treatment. This can prevent excessive shortening of the fiber lengths by preventing contact between the blades during narrowing between the blades, and can reduce the amount of coarse fibers. As a result, it is possible to produce cellulose fine fibers with high homogeneity of shape distribution, in a highly reproducible manner, so as to provide excellent dynamic properties for a resin composition obtained by compositing cellulose fine fibers with a resin.

(Number of passes in disc refiner treatment)

The beating step can also be controlled by the number of times the cellulose fibers pass between the rotary blade and the fixed blade (hereunder referred to as the "number of passes"). By increasing the number of passes it is possible to obtain cellulose fibers having uniformity of fiber diameter and fiber length distribution. The number of passes is the number of times refiner treatment is carried out after narrowing the interblade distance to the target interblade distance (i.e. passing between the rotary blade and fixed blade).

The number of passes of the disc refiner is preferably 5 times or more, more preferably 20 times or more and even more preferably 40 times or more. A greater number of times is preferred since the distribution of fiber shapes will gradually converge to be constant, but from the standpoint of productivity, the upper limit for the number of passes is 300 times or less.

(Method of determining beating conditions with disc refiner)

The shapes of the cellulose fine fibers obtained by disc refiner treatment are controlled by a combination of the effects of the type of disc refiner blades, the interblade distance, the number of passes and the concentration. In order to obtain cellulose fine fibers that are preferred for use in a fiber-reinforced resin, a greater number of passes under wet beating conditions is preferred. Wet beating is a beating method that tends to cause micronization of fibers with generation of fluff, while "free beating" is a beating method that tends to produce cuts in the fiber length direction. For the construction of the blades in the disc refiner, since a larger number of blades, longer blade lengths, a larger ratio of blade width to groove width (blade/groove ratio) and a larger contact angle increases the number of blade intersections between rotary blades and fixed blades, the force applied to the fibers at each intersection becomes diffused, increasing the number of impacts onto the fibers and tending to result in wet beating. When the conditions are reversed, the result tends to be free beating. The interblade distance of the disc refiner is preferably wider when using a blade that tends to exhibit free beating, whereas the interblade distance is preferably narrower when using a blade that tends to exhibit wet beating, but an excessively narrow interblade distance can result in shortening of the fibers and excessive micronization due to clogging and cutting of the fiber lengths, and, therefore the interblade distance is preferably 0.05 mm or greater. If the interblade distance and number of passes are adjusted by the cellulose starting material shapes (fiber lengths and fiber diameters), the treatment concentration and the blades used, then it will be possible to control the fiber shapes including the mean fiber size and fiber length distribution to desirable ranges.

(Multistage beating treatment by combination of disc refiner and high-pressure homogenizer)

Another preferred aspect is beating treatment of the disc refiner-beaten cellulose fibers, using a high-pressure homogenizer. A high-pressure homogenizer has a greater effect of narrowing the fibers, compared to a disc refiner. High-pressure homogenizer treatment is carried out at a pressure of preferably 30 MPa or higher, more preferably 50 MPa or higher and even more preferably 80 MPa or higher. The upper limit for the pressure is preferably 300 MPa or lower, more preferably 250 MPa or lower and even more preferably 150 MPa or lower, in terms of the properties of the apparatus.

High-pressure homogenizers include: a Model NS high-pressure homogenizer by Niro Soavi, a Ranier-type (R model) pressure homogenizer by SMT Corp. and a high pressure homogenizer by Sanwa Machinery Trading Co., Ltd., while ultrahigh-pressure homogenizers include: high-pressure impact beating machines such as a microfluidizer by Mizuho Industrial Co., Ltd., a nanomizer by Yoshida Kikai Co. Ltd. and an Ultimizer by Sugino Machine, Ltd., but any another apparatus may be used so long as it accomplishes micronization by a similar mechanism as these.

For high-pressure homogenizer treatment, similar to disc refiner treatment, defibration treatment may be carried out by a circulating continuous treatment step in which the slurry residing in the tank is passed through a high-pressure homogenizer and then returned to the original tank, but preferably defibration treatment is carried out by a continuous treatment step in which two tanks (tank A and tank B) are prepared in a manner connected by tubing through a high-pressure homogenizer, and the slurry is conveyed from the loaded tank A through the high-pressure homogenizer to tank B and stored, and then, at the stage when the slurry in tank A has completed treatment, the process is switched to a mode in which it is conveyed continuously from tank B through the high-pressure homogenizer to tank A where it accumulates, and the steps are alternatingly repeated thereafter; such treatment is preferred because the slurry will pass through each high-pressure homogenizer treatment more reliably allowing the total amount of slurry to be subjected to the same number of passes, as is desirable from the viewpoint of uniformity of defibration, i.e. quality stability of the cellulose fine fibers.

<Form of cellulose fine fibers>

(Mean fiber length)

The cellulose fine fibers of the embodiment preferably have longer mean fiber lengths because they will exhibit superior mechanical properties when the microfibers are used as a resin reinforcing material. That is, when the fiber lengths are long, the fibers become tangled together while they are added to the resin, and the cellulose fine fibers can therefore be uniformly dispersed in the resin without forming aggregates. This improves the stress transfer properties of the resin composition and increases the strength and fracture strain. The mean fiber length is preferably 400 $\mu$m or greater, more preferably 500 $\mu$m or greater, even more preferably 600 $\mu$m or greater and most preferably 700 $\mu$m or greater, as the length-weighted mean fiber length determined by a fiber shape autoanalyzer. The length-weighted mean fiber length is as defined by ISO/FDIS 16065-2:2006, and for bent fibers it is the average value for fiber lengths corresponding to the actual fiber lengths, in consideration of their bent shapes. Since a longer fiber length increases the effect there is no particular upper limit, but according to one aspect it is 3 mm or smaller, with the preferred range being 1000 $\mu$m or smaller.

(Mean fiber size)

According to one aspect, the mean fiber size of the cellulose fine fibers of the embodiment measured with a fiber shape autoanalyzer is 1000 nm or smaller, preferably 500 nm or smaller, 300 nm or smaller, 200 nm or smaller, 150 nm or smaller or 130 nm or smaller. If the mean fiber size is within this range it will be easier to sufficiently increase the L/D of the individual cellulose fibers. A large L/D results in entanglement between the cellulose fine fibers in the resin, thus allowing the strength of the resin composition to be increased. Since a smaller mean fiber size is preferred, as it can increase the L/D, the lower limit is not particularly restricted but is preferably 10 nm or greater, 20 nm or greater, 30 nm or greater or 40 nm or greater, since a certain degree of thickness is desired for higher bending elasticity of the resin composition.

(Coefficient of variation (CV) of mean fiber length)

The variation in the fiber lengths in the cellulose fine fibers of the embodiment is preferably low since this will lower anisotropy of the mechanical properties (tensile strength, flexural strength, tensile modulus, flexural modulus and coefficient of thermal expansion), as effects of reinforcement exhibited by addition to the resin. The fiber length variation is represented by the following formula, as the coefficient of variation CV.

$$\text{CV (\%)} = (\text{Standard deviation (}\mu\text{m) of fiber length/mean fiber length (}\mu\text{m))} \times 100$$

The CV is preferably 20% or lower, more preferably 15% or lower and most preferably 12% or lower. Since a lower value will increase the aforementioned effect the lower limit is not particularly restricted, but in practical terms it is preferably 1% or higher.

(Wet cake and dried body)

The cellulose fine fibers of the embodiment can be obtained as a wet compact (wet cake) by dewatering the slurry using a filter or paper machine. A papermaking method using a paper machine is advantageous in terms of reducing dry shrinkage between the cellulose fine fibers. According to one aspect, the slurry is dewatered by filtration on a porous substrate. Any paper machine may be used in the papermaking method that has wires of a mesh size that can dewater the slurry and cause the cellulose fine fibers to accumulate. When the composite molded body is to be obtained as a flat sheet, the papermaking apparatus used may be a paper machine, such as an inclined wire paper machine, Fourdrinier paper machine or circular mesh paper machine.

When the cellulose fine fibers are to be used as a dry filler, a known drying apparatus such as a hot air drier or spray drier may be used for drying. Since cellulose tends to aggregate during the drying step making later re-dispersion difficult, it is preferred to use a dispersing agent. Increasing the re-dispersibility can improve the mechanical properties of the resulting resin composition, as well as its stability. The dispersing agent is preferably added to the cellulose aqueous dispersion and the mixture is then dried while applying shear to obtain a cellulose powder.

The dispersing agent may be at least one type selected from the group consisting of surfactants, organic compounds with a boiling point of 100°C or higher, and resins having a chemical structure capable of highly dispersing cellulose.

The surfactant may be one having a chemical structure in which a site with a hydrophilic substituent and a site with a hydrophobic substituent are covalently bonded. The surfactant used may be any one commonly used for various purposes in foods or industry, examples of which include one or a combination of two or more of the following.

The surfactant used may be any anionic surfactant, nonionic surfactant, zwitterionic surfactant or cationic surfactant, but from the viewpoint of affinity with cellulose, an anionic surfactant or nonionic surfactant is preferred, and a nonionic surfactant is more preferred.

Among the above, from the viewpoint of affinity with cellulose, surfactants having polyoxyethylene chains, carboxyl groups or hydroxyl groups as hydrophilic groups are preferred, polyoxyethylene-based surfactants with polyoxyethylene chains as hydrophilic groups (polyoxyethylene derivatives) are more preferred, and nonionic polyoxyethylene derivatives are even more preferred. The polyoxyethylene chain length of a polyoxyethylene derivative is preferably 3 or greater, more preferably 5 or greater, even more preferably 10 or greater and most preferably 15 or greater. A longer chain length will increase the affinity with cellulose, but for balance with the coating property, it is preferably no greater than 60, more preferably no greater than 50, even more preferably no greater than 40, especially preferably no greater than 30 and most preferably no greater than 20, as the upper limit.

Of the aforementioned surfactants, it is especially preferred to use those with alkyl ether-type, alkylphenyl ether-type, rosin ester-type, bisphenol A-type, β-naphthyl-type, styrenated phenyl-type or hydrogenated castor oil-type hydrophobic groups, because of their high affinity with resins. The alkyl chain length (the number of carbon atoms excluding the phenyl group in the case of alkylphenyl) is a carbon chain of preferably 5 or greater, more preferably 10 or greater, even more preferably 12 or greater and most preferably 16 or greater. Since a larger number of carbon atoms of the alkyl chain length will increase affinity with common resins there is no particular upper limit for the number of carbon atoms, but it is preferably 30 or fewer and more preferably 25 or fewer.

Preferred among these hydrophobic groups are those having a cyclic structure and those having bulk and a polyfunctional structure. Groups with a cyclic structure include alkylphenyl ether-type, rosin ester-type, bisphenol A-type, β-naphthyl-type and styrenated phenyl-type groups, and groups with a polyfunctional structure include hydrogenated castor oil-type groups. More particularly preferred among these are rosin ester-type and hydrogenated castor oil-type groups.

Organic compounds with boiling points of 100°C or higher are effective as non-surfactant dispersing agents. Examples of such organic compounds include organic compounds with polyethylene glycol, polypropylene glycol and glycerin structures. When the resin is a polyolefin it is effective to use a high-boiling-point organic solvent such as liquid paraffin or decalin, although this will depend on the type of resin. When the resin is a polar resin such as nylon or polyacetate, it is effective to use the same solvent as the aprotic solvent that may be used for production of the cellulose fine fibers, such as dimethyl sulfoxide, for example.

The amount of cellulose fine fibers with respect to 100 parts by mass of the thermoplastic resin in the resin composition is preferably 1 part by mass or greater, 3 parts by mass or greater, 5 parts by mass or greater or 10 parts by mass or greater, from the viewpoint of satisfactorily obtaining an effect of improving the physical properties of the resin composition by the cellulose fine fibers, and preferably 150 parts by mass or lower, 100 parts by mass or lower or 80 parts by mass or lower, from the viewpoint of avoiding performance reduction due to segmentation of the continuous layer of the thermoplastic resin, and or shaping defects due to reduced flow properties during shaping of the resin composition.

From this viewpoint, the content of the cellulose fine fibers in the resin composition may be 1 mass% or greater, 3 mass% or greater, 5 mass% or greater or 10 mass% or greater, according to one aspect, and 30 mass% or lower, 25 mass% or lower or 20 mass% or lower, according to another aspect.

<Thermoplastic resin>

The thermoplastic resin may be, for example, a crystalline resin having a melting point in the range of 100°C to 350°C, an amorphous resin having a glass transition temperature in the range of 100 to 250°C, or a thermoplastic elastomer. The melting point, for the purpose of the disclosure, is the peak top temperature of the endothermic peak appearing upon temperature increase from 23°C at a temperature-elevating rate of 10°C/min using a differential scanning calorimeter (DSC), or when two or more endothermic peaks are present, it is the peak top temperature of the endothermic peak furthest at the high-temperature end. The enthalpy of the endothermic peak is preferably 10 J/g or greater and more preferably 20 J/g or greater. During the measurement, preferably the sample is heated once to temperature conditions of (melting point + 20°C) or higher, and after the resin has been melted, it is cooled to 23°C at a temperature-lowering rate of 10°C/min and used as the sample. For the present disclosure, the glass transition temperature is the peak top temperature of the peak at which the reduction in storage modulus is large and the loss modulus is maximum, during measurement with an applied frequency of 10 Hz while increasing the temperature from -23°C at a temperature-elevating rate of 2°C/min, using a dynamic viscoelasticity measuring apparatus. When two or more loss modulus peaks appear, it represents the peak top temperature of the peak that is furthest at the high-temperature end. The measuring frequency during this time is preferably one or more times in at least 30 seconds, in order to increase the measuring precision. The method of preparing the measuring sample is not particularly restricted, but from the viewpoint of eliminating the effect of molding strain it is preferred to use a strip cut out from a hot press molded article, the size (width or thickness) of the cut out strip preferably being as small as possible, from the viewpoint of heat conduction.

Crystalline resins include polyolefin-based resins, polyamide-based resins, polyester-based resins, polyacetal-based resins, polyphenylene sulfide-based resins, polyether ether ketone-based resins, polyimide-based resins, liquid crystal polymers and polytetrafluoroethylene-based resins. Examples of mixtures of two or more of these include, from the viewpoint of handleability and cost, polyolefin-based resins, polyamide-based resins, polyester-based resins and polyacetal-based resins, with polyamide-based resins, polyolefin-based resins and polyacetal-based resins being more preferred. Polyamide-based resins are particularly preferred from the viewpoint of toughness of the resin composition. From the viewpoint of increasing the heat resistance of the resin composition, the melting point of the crystalline resin is preferably 140°C or higher, 150°C or higher, 160°C or higher, 170°C or higher, 180°C or higher, 190°C or higher, 200°C or higher, 210°C or higher, 220°C or higher, 230°C or higher, 240°C or higher, 245°C or higher or 250°C or higher. According to one aspect, the melting point may be 300°C or lower.

Amorphous resins include amorphous polyolefin-based resins such as polymethylenepentene and cyclic polyolefins, amorphous polyvinyl-based resins such as polystyrene and polyvinyl chloride, polycarbonate-based resins, acrylic-based resins, methacryl-based resins, polyvinyl alcohol-based resins, polysulfone-based resins, polyphenylene ether-based resins, polyether sulfone-based resins, acrylonitrile-styrene-based resins, acrylonitrile-butadiene-styrene-based resins, polyketone-based resins, polyetherimide-based resins and polyamideimide-based resins.

From the viewpoint of increasing the heat resistance of shaped articles, the shaping temperature when using an amorphous resin (the temperature of the extrude outlet) is preferably 130°C or higher, 140°C or higher, 150°C or higher, 160°C or higher, 170°C or higher, 180°C or higher, 190°C or higher, 200°C or higher, 210°C or higher, 220°C or higher, 230°C or higher, 240°C or higher, 245°C or higher or 250°C or higher.

According to a preferred aspect, the thermoplastic resin comprises a crystalline resin.

According to a preferred aspect, the thermoplastic resin comprises a crystalline resin with a melting point of 150°C to 300°C.

According to another preferred aspect, the thermoplastic resin comprises a polyamide-based resin.

According to another preferred aspect, the thermoplastic resin comprises one or more selected from the group consisting of polyamide-based resins and polyacetal-based resins, or one or more selected from the group consisting of polyamide-based resins and polyacetal-based resins.

[Polyolefin-based resin]

Polyolefin-based resins that are preferred as thermoplastic resins are polymers obtained by polymerizing olefins (such as $\alpha$-olefins) and/or alkenes as monomer units. Specific examples of polyolefin-based resins include ethylene-based (co)polymers, such as low-density polyethylene (for example, linear low-density polyethylene), high-density polyethylene, ultralow-density polyethylene and ultrahigh molecular weight polyethylene, polypropylene-based (co)polymers, such as polypropylene, ethylene-propylene copolymer and ethylene-propylene-diene copolymer, and copo-

lymers of ethylene and $\alpha$-olefins, such as ethylene-acrylic acid copolymer, methyl ethylene-methacrylate copolymer and ethylene-glycidyl methacrylate copolymer.

The most preferred polyolefin-based resin is polypropylene. Particularly preferred is polypropylene, which has a melt mass-flow rate (MFR) of between 3 g/10 min to 50 g/10 min, as measured at 230°C with a load of 21.2 N, according to ISO1133. The lower limit for the MFR is more preferably 5 g/10 min, 6 g/10 min or 8 g/10 min. The upper limit is more preferably 40 g/10 min, 30 g/10 min, 25 g/10 min, 20 g/10 min or 18 g/10 min. The MFR is preferably not above this upper limit from the viewpoint of increased toughness of the resin composition, and it is preferably not less than the lower limit from the viewpoint of the flow property of the resin composition.

An acid-modified polyolefin-based resin may also be used as appropriate to increase the affinity with the cellulose fine fibers. Examples of acids to be used for acid modification include mono or polycarboxylic acids, such as maleic acid, fumaric acid, succinic acid, phthalic acid, and their anhydrides, as well as citric acid. Maleic acid or its anhydride is especially preferred to more easily increase the modification rate. While the modification method is not particularly restricted, a common method involves heating the polyolefin-based resin to above its melting point in the presence or in the absence of a peroxide, and melt kneading. The polyolefin resin to be acid-modified may be any of the aforementioned polyolefin-based resins, but polypropylene is especially suitable for use. The acid-modified polypropylene-based resin may be used alone, but it is more preferably used in admixture with an unmodified polypropylene-based resin in order to adjust the modification rate of the entire resin. The proportion of acid-modified polypropylene-based resin with respect to the total polypropylene-based resin is preferably 0.5 mass% to 50 mass%. A more preferred lower limit is 1 mass%, 2 mass%, 3 mass%, 4 mass% or 5 mass%. A more preferred upper limit is 45 mass%, 40 mass%, 35 mass%, 30 mass% or 20 mass%. In order to maintain interfacial strength between the resin and the cellulose fine fibers it is preferably higher than the lower limit, and in order to maintain ductility as a resin it is preferably lower than the upper limit.

The melt mass-flow rate (MFR) of the acid-modified polypropylene-based resin as measured at 230°C with a load of 21.2 N according to ISO1133 is preferably 50 g/10 min or higher, 100 g/10 min or higher, 150 g/10 min or higher or 200 g/10 min or higher, from the viewpoint of increasing affinity with the interface between the resin and the cellulose fine fibers. There is no particular upper limit, but it is preferably 500 g/10 min in order to maintain mechanical strength.

[Polyamide-based resin]

Preferred polyamide-based resins for the thermoplastic resin include polyamides obtained by polycondensation reaction of lactams (such as polyamide 6, polyamide 11 and polyamide 12), and polyamides obtained by copolymerization of diamines (such as 1,6-hexanediamine, 2-methyl-1,5-pentanediamine, 1,7-heptanediamine, 2-methyl-1-6-hexanediamine, 1,8-octanediamine, 2-methyl-1,7-heptanediamine, 1,9-nonanediamine, 2-methyl-1,8-octanediamine, 1,10-decanediamine, 1,11-undecanediamine, 1,12-dodecanediamine and m-xylylenediamine) with dicarboxylic acids (such as butanedioic acid, pentanedioic acid, hexanedioic acid, heptanedioic acid, octanedioic acid, nonanedioic acid, decanedioic acid, benzene-1,2-dicarboxylic acid, benzene-1,3-dicarboxylic acid, benzene-1,4-dicarboxylic acid, cyclohexane-1,3-dicarboxylic acid and cyclohexane-1,4-dicarboxylic acid) (such polyamides including polyamide 6,6, polyamide 6,10, polyamide 6,11, polyamide 6,12, polyamide 6,T, polyamide 6,I, polyamide 9,T, polyamide 10,T, polyamide 2M5,T, polyamide MXD,6, polyamide 6,C and polyamide 2M5,C), as well as copolymers obtained by copolymerization of these (such as polyamide 6,T/6,I).

More preferred among these polyamide-based resins are aliphatic polyamides such as polyamide 6, polyamide 11, polyamide 12, polyamide 6,6, polyamide 6,10, polyamide 6,11 and polyamide 6,12, and alicyclic polyamides such as polyamide 6,C and polyamide 2M5,C.

From the viewpoint of satisfactory heat resistance for the resin composition, the melting point of the polyamide-based resin is preferably 190°C or higher, 200°C or higher, 210°C or higher, 220°C or higher, 230°C or higher, 240°C or higher, 245°C or higher or 250°C or higher, and from the viewpoint of easier production of the resin composition, the melting point is preferably 350°C or lower, 320°C or lower or 300°C or lower.

There are no particular restrictions on the terminal carboxyl group concentration of the polyamide-based resin, but it is preferably 20 $\mu$mol/g or greater or 30 $\mu$mol/g or greater, and preferably 150 $\mu$mol/g or lower, 100 $\mu$mol/g or lower or 80 $\mu$mol/g or lower.

For a polyamide-based resin, the proportion of carboxyl-terminated groups with respect to the total terminal groups ([COOH]/[total terminal groups]) is preferably 0.30 or higher, 0.35 or higher, 0.40 or higher or 0.45 or higher, from the viewpoint of dispersibility of the cellulose fine fibers in the resin composition, and from the viewpoint of color tone of the resin composition it is preferably 0.95 or lower, 0.90 or lower, 0.85 or lower or 0.80 or lower.

There are no particular restrictions on the terminal amino group concentration of the polyamide-based resin, but the lower limit is preferably 20 $\mu$mol/g, 30 $\mu$mol/g or 50 $\mu$mol/g, and the upper limit is preferably 150 $\mu$mol/g or 100 $\mu$mol/g.

The amino terminal group ratio of the polyamide-based resin ([NH$_2$]/([NH$_2$] + [COOH])) is preferably 0.20 or greater, 0.30 or greater or 0.35 or greater from the viewpoint of dispersibility of the cellulose in the resin composition, and preferably 0.95 or lower, 0.90 or lower, 0.85 or lower or 0.80 or lower from the viewpoint of the color tone of the obtained resin composition.

When a plurality of polyamides are included in the resin composition, the terminal group concentration is the average value for the terminal group concentration of each polyamide.

According to one aspect, the resin composition may include a first thermoplastic resin, as a polyamide-based resin wherein the amino group-terminal group ratio is 65 mmol/g or greater, 75 mmol/g or greater or 85 mmol/g or greater and 200 mmol/g or lower, 150 mmol/g or lower or 120 mmol/g or lower, and a second thermoplastic resin, as a polyamide-based resin wherein the amino group-terminal group ratio is 5 mmol/g or greater, 10 mmol/g or greater or 15 mmol/g or greater and 60 mmol/g or lower, 50 mmol/g or lower or 40 mmol/g or lower.

The terminal group concentration of the polyamide-based resin can be adjusted by a publicly known method. The adjusting method may be addition of a terminal group adjuster that reacts with the terminal groups (for example, a diamine compound, monoamine compound, dicarboxylic acid compound, monocarboxylic acid compound, acid anhydride, monoisocyanate, monoacid halide, monoester or monoalcohol), to the polymerization solution, so as to result in the prescribed terminal group concentration during polymerization of the polyamide.

Terminal group adjusters that react with terminal amino groups include aliphatic monocarboxylic acids such as acetic acid, propionic acid, butyric acid, valeric acid, caproic acid, caprylic acid, lauric acid, tridecanoic acid, myristic acid, palmitic acid, stearic acid, pivalic acid and isobutyric acid; alicyclic monocarboxylic acids such as cyclohexanecarboxylic acid; aromatic monocarboxylic acids such as benzoic acid, toluic acid, $\alpha$-naphthalenecarboxylic acid, $\beta$-naphthalene-carboxylic acid, methylnaphthalenecarboxylic acid and phenylacetic acid; and mixtures of any selected from among the foregoing. Among these, from the viewpoint of reactivity, stability of capped ends and cost, one or more terminal group adjusters selected from the group consisting of acetic acid, propionic acid, butyric acid, valeric acid, caproic acid, caprylic acid, lauric acid, tridecanoic acid, myristic acid, palmitic acid, stearic acid and benzoic acid are preferred, with acetic acid being most preferred.

Terminal group adjusters that react with terminal carboxyl groups include aliphatic monoamines such as methylamine, ethylamine, propylamine, butylamine, hexylamine, octylamine, decylamine, stearylamine, dimethylamine, diethylamine, dipropylamine and dibutylamine; alicyclic monoamines such as cyclohexylamine and dicyclohexylamine; aromatic monoamines such as aniline, toluidine, diphenylamine and naphthylamine; and any mixtures of the foregoing. Among these, from the viewpoint of reactivity, boiling point, capped end stability and cost, it is preferred to use one or more terminal group adjusters selected from the group consisting of butylamine, hexylamine, octylamine, decylamine, stearylamine, cyclohexylamine and aniline.

The concentration of amino terminal groups and carboxy terminal groups in the polyamide-based resin can be determined from the integral of the characteristic signal corresponding to each terminal group, according to $^1$H-NMR. This method is preferred from the viewpoint of precision and convenience. More specifically, it is recommended to use the method described in Japanese Unexamined Patent Publication HEI No. 7-228775, with heavy trifluoroacetic acid as the measuring solvent, and with at least 300 scans.

The intrinsic viscosity [$\eta$] of the polyamide-based resin measured in concentrated sulfuric acid at 30°C is preferably 0.6 to 2.0 dL/g, 0.7 to 1.4 dL/g, 0.7 to 1.2 dL/g or 0.7 to 1.0 dL/g, from the viewpoint of obtaining a satisfactory die flow property and satisfactory outer appearance for molded pieces obtained by injection molding, for example, of the resin composition. Throughout the present disclosure, "intrinsic viscosity" is synonymous with the viscosity commonly known as the limiting viscosity. The intrinsic viscosity is determined by a method in which each $\eta$sp/c of several measuring solvents with different concentrations is measured in 96% concentrated sulfuric acid under temperature conditions of 30°C, the relational expression between each $\eta$sp/c and the concentration (c) is derived, and the concentration is extrapolated to zero. The value extrapolated to zero is the intrinsic viscosity. The details of this method are described in Polymer Process Engineering (Prentice-Hall, Inc. 1994), p. 291-294. From the viewpoint of precision it is preferred to use at least four concentrations (such as 0.05 g/dL, 0.1 g/dL, 0.2 g/dL and 0.4 g/dL) as the different concentrations of the measuring solvents.

From the viewpoint of moldability, the number-average molecular weight of the polyamide-based resin is preferably 3000 or higher, 5000 or higher or 8000 or higher, and from the viewpoint of flow property it is preferably 30,000 or lower, 20,000 or lower or 13,000 or lower. The number-average molecular weight is the value measured in terms of standard polymethyl methacrylate, using gel permeation chromatography.

[Polyester-based resin]

Preferred polyester-based resins to be used for the thermoplastic resin include one or more from among polyethylene terephthalate (PET), polyethylene naphthalate (PEN), polybutylene terephthalate (PBT), polybutylene succinate (PBS), polybutylene succinate adipate (PBSA), polybutylene adipate terephthalate (PBAT), polyhydroxyalkanoic acids (PHA), polylactic acid (PLA) and polyallylate (PAR). More preferred among these are PET, PBS, PBSA, PBT and PEN, with PBS, PBSA and PBT being especially preferred.

The terminal groups of the polyester-based resin may be arbitrarily changed depending on the monomer proportion during polymerization, or on the presence or amount of addition of a terminal stabilizer. The proportion of carboxy terminal groups with respect to the total terminal groups ([COOH]/[total terminal groups]) of the polyester-based resin is preferably 0.30 or higher, 0.35 or higher, 0.40 or higher or 0.45 or higher, from the viewpoint of dispersibility of the cellulose fine fibers in the resin composition, while from the viewpoint of color tone of the resin composition it is preferably 0.95 or lower, 0.90 or lower, 0.85 or lower or 0.80 or lower.

[Polyacetal-based resin]

Polyacetal-based resins preferred as thermoplastic resins are commonly homopolyacetals obtained from formaldehyde starting materials and copolyacetals with trioxane as the main monomer and comprising 1,3-dioxolane as a comonomer component, and although either of these may be used, copolyacetals are preferably used from the viewpoint of thermal stability during working. The percentage of the structure derived from the comonomer component (such as 1,3-dioxolane) is preferably 0.01 mol% or greater, 0.05 mol% or greater, 0.1 mol% or greater or 0.2 mol% or greater, from the viewpoint of thermal stability during extrusion and shaping, and preferably 4.0 mol% or lower, 3.5 mol% or lower, 3.0 mol% or lower, 2.5 mol% or lower or 2.3 mol% or lower, from the viewpoint of mechanical strength.

[Thermoplastic elastomer]

Throughout the disclosure, according to one aspect, "elastomer" means a substance (specifically, a natural or synthetic polymer substance) that is an elastic solid at room temperature (23°C). According to one aspect, "elastic solid" means that the storage modulus at 23°C, 10 Hz, measured based on dynamic viscoelasticity, is 1 MPa to 100 MPa. The thermoplastic elastomer may be a conjugated diene-based polymer or a non-conjugated diene-based polymer, and according to one aspect it is a crosslinked product.

(Conjugated diene-based polymer)

The conjugated diene-based polymer may be a homopolymer or a copolymer of two or more conjugated diene monomers, or a copolymer of a conjugated diene monomer and another monomer. The copolymer may be either random or block.

Conjugated diene monomers include 1,3-butadiene, isoprene, 2,3-dimethyl-1,3-butadiene, 1,3-pentadiene, 3-methyl-1,3-pentadiene, 1,3-heptadiene and 1,3-hexadiene, and any one of these or a combination of two or more may be used.

According to one aspect, the conjugated diene-based polymer is a copolymer of a conjugated diene monomer and an aromatic vinyl monomer.

Aromatic vinyl monomers are not particularly restricted so long as they are monomers that are copolymerizable with conjugated diene monomers, and examples include styrene, *m*- or *p*-methylstyrene, $\alpha$-methylstyrene, ethylstyrene, p-tert-butylstyrene, vinylethylbenzene, vinylxylene, vinylnaphthalene, diphenylethylene and divinylbenzene, among which any one or combination of two or more may be used. Preferred are styrene-based monomers, and especially styrene, from the viewpoint of molding workability of the resin composition and impact resistance of the molded article.

Random copolymers include butadiene-isoprene random copolymer, butadiene-styrene random copolymer, isoprene-styrene random copolymer and butadiene-isoprene-styrene random copolymer. The compositional distribution of each monomer in the copolymer chain may be a completely random copolymer having a nearly statistically random composition, or a tapered (gradient) random copolymer having a gradient in the compositional distribution. A composition with a conjugated diene-based polymer bond form, i.e. 1,4-bonds or 1,2-bonds, may have uniform or different molecules.

A block copolymer may be a copolymer composed of two or more blocks. An example is a block copolymer in which block A as an aromatic vinyl monomer and block B as a conjugated diene monomer block and/or an aromatic vinyl monomer and conjugated diene monomer copolymer block, form the structure A-B, A-B-A or A-B-A-B. There is no essential need for distinct block borders, and for example, when block B is a copolymer of an aromatic vinyl monomer and a conjugated diene monomer, the aromatic vinyl monomer in block B may be distributed in a uniform or tapered manner. Block B may also have multiple regions including portions where the aromatic vinyl monomer is uniformly distributed and/or portions where it is distributed in a tapered manner. Block B may also have multiple segments with different aromatic vinyl monomer contents. When multiple blocks for each of block A and block B are present in a copolymer, their molecular weights and compositions may be the same or different.

The block copolymer may also be a mixture of two or more different types with differences in any one from among the bond form, the molecular weight, the aromatic vinyl compound type, the conjugated diene compound type, the 1,2-vinyl group content or total 1,2-vinyl group content and 3,4-vinyl group content, the aromatic vinyl compound content and the hydrogenation rate.

A hydrogenated conjugated diene-based polymer may be a hydrogenated form of any of the conjugated diene-based polymers mentioned above, and for example, it may be a hydrogenated butadiene homopolymer, isoprene homopolymer, styrene-butadiene copolymer or acrylonitrile-butadiene copolymer.

[Non-conjugated diene-based polymer]

The non-conjugated diene-based polymer may be a homopolymer or a copolymer of two or more non-conjugated diene monomers or a copolymer of a non-conjugated diene monomer and another monomer. The copolymer may be either random or block. Non-conjugated diene-based polymers include olefin-based polymers such as ethylene-propylene rubber, ethylene-propylene-diene rubber, ethylene-butene-diene rubber and ethylene-$\alpha$-olefin copolymers, as well as butyl rubber, brominated butyl rubber, acrylic rubber, fluorine rubber, silicone rubber, chlorinated polyethylene rubber, epichlorohydrin rubber, $\alpha,\beta$-unsaturated nitrile-acrylic acid ester-conjugated diene copolymer rubber, urethane rubber and polysulfide rubber.

For ethylene-$\alpha$-olefin copolymers, monomers that may be copolymerized with the ethylene unit include aliphatic-substituted vinyl monomers such as propylene, butene-1, pentene-1,4-methylpentene-1, hexene-1, heptene-1, octene-1, nonene-1, decene-1, undecene-1, dodecene-1, tridecene-1, tetradecene-1, pentadecene-1, hexadecene-1, heptadecene-1, octadecene-1, nonadecene-1, eicosene-1 and isobutylene; aromatic vinyl monomers such as styrene and substituted styrene; esteric vinyl monomers such as vinyl acetate, acrylic acid ester, methacrylic acid ester, glycidylacrylic acid ester, glycidylmethacrylic acid ester and hydroxyethylmethacrylic acid ester, nitrogen-containing vinyl monomers such as acrylamide, allylamine, vinyl-*p*-aminobenzene and acrylonitrile, and dienes such as butadiene, cyclopentadiene, 1,4-hexadiene and isoprene.

The ethylene-$\alpha$-olefin copolymer is preferably a copolymer of ethylene and one or more $\alpha$-olefins of 3 to 20 carbon atoms, more preferably a copolymer of ethylene and one or more $\alpha$-olefins of 3 to 16 carbon atoms, and most preferably a copolymer of ethylene and one or more $\alpha$-olefins of 3 to 12 carbon atoms.

From the viewpoint of exhibiting impact resistance, the molecular weight of the ethylene-$\alpha$-olefin copolymer is a number-average molecular weight (Mn) of preferably 10,000 or higher, more preferably 10,000 to 100,000, even more preferably 10,000 to 80,000 and yet more 20,000 to 60,000, measured with a gel permeation chromatography apparatus using 1,2,4-trichlorobenzene as the solvent, at 140°C, in terms of standard polystyrene.

From the viewpoint of handleability during processing, the ethylene unit content for the ethylene-$\alpha$-olefin copolymer is preferably 30 to 95 mass% with respect to the total amount of the ethylene-$\alpha$-olefin copolymer.

The ethylene-$\alpha$-olefin copolymer can be produced by a conventional publicly known method as described in Japanese Examined Patent Publication HEI No. 4-12283, Japanese Unexamined Patent Publication SHO No. 60-35006, Japanese Unexamined Patent Publication SHO No. 60-35007, Japanese Unexamined Patent Publication SHO No. 60-35008, Japanese Unexamined Patent Publication HEI No. 5-155930, Japanese Unexamined Patent Publication HEI No. 3-163088 or US Patent No. 5272236, for example.

The number-average molecular weight (Mn) of the thermoplastic elastomer is preferably 10,000 to 500,000 or 40,000 to 250,000, from the viewpoint of both impact strength and flow property.

The thermoplastic elastomer may also have a core-shell structure. Elastomers having a core-shell structure include core-shell type elastomers having a core of particulate rubber and a shell of a glassy graft layer formed around the exterior of the core. The core is preferably butadiene-based rubber, acrylic rubber or silicone-acrylic composite rubber. A vitreous polymer such as styrene resin, acrylonitrile-styrene copolymer or acrylic resin is suitable for the shell.

The thermoplastic elastomer is preferably a styrene-based elastomer from the viewpoint of obtaining a molded article with excellent toughness. For example, from the viewpoint of toughness it may be particularly advantageous for the thermoplastic resin to include a polyamide-based resin and a styrene-based elastomer.

The styrene-based elastomer is preferably at least one type selected from the group consisting of styrene-butadiene block copolymer, styrene-ethylene-butadiene block copolymer, styrene-ethylene-butylene block copolymer, styrene-butadiene-butylene block copolymer, styrene-isoprene block copolymer, styrene-ethylene-propylene block copolymer, styrene-isobutylene block copolymer, hydrogenated styrene-butadiene block copolymer, hydrogenated styrene-ethylene-butadiene block copolymer, hydrogenated styrene-butadiene-butylene block copolymer, hydrogenated styrene-isoprene block copolymer and styrene homopolymer (polystyrene), and more preferably it is at least one type selected from the group consisting of styrene-butadiene block copolymer, hydrogenated styrene-butadiene block copolymer and polystyrene.

According to one aspect, at least a portion of the thermoplastic elastomer may have an acidic functional group. That the thermoplastic elastomer has an acidic functional group, for the purpose of the disclosure, means that an acidic functional group has been added via chemical bonding into the molecular skeleton of the elastomer. An "acidic functional group", for the purpose of the disclosure, means a functional group that can react with a basic functional group, and specific examples include hydroxyl, carboxyl, carboxylate, sulfo, and acid anhydride groups.

The amount of the acidic functional group added to the elastomer is preferably 0.01 mass% or greater, more preferably 0.1 mass% or greater and even more preferably 0.2 mass% or greater, and preferably 5 mass% or lower, more preferably 3 mass% or lower and even more preferably 2 mass% or lower, based on 100 mass% of the elastomer, from the viewpoint of affinity between the cellulose fine fibers and the elastomer component. The number of acidic functional groups is the value obtained by measuring the sample against a calibration curve drawn using the characteristic absorption band for the acid, after measuring a calibration sample premixed with the acidic substance using an infrared absorption spectrometer.

Elastomers with acidic functional groups include elastomers having a core-shell structure wherein the shell is a layer formed using a copolymerizing component such as acrylic acid, and elastomers which are modified by grafting $\alpha,\beta$-unsaturated dicarboxylic acids or their derivatives onto ethylene-$\alpha$-olefin copolymers, polyolefins, aromatic compound-conjugated diene copolymers or hydrogenated aromatic compound-conjugated diene copolymers that include acrylic acid as a monomer, either in the presence or in the absence of a peroxide.

According to a preferred aspect, the elastomer is an acid anhydride-modified elastomer.

More preferred among these are modified forms with $\alpha,\beta$-unsaturated dicarboxylic acids or their derivatives grafted onto polyolefins, aromatic compound-conjugated diene copolymers or hydrogenated aromatic compound-conjugated diene copolymers, either in the presence or in the absence of a peroxide, and particularly preferred are modified forms with $\alpha,\beta$-unsaturated dicarboxylic acids or their derivatives grafted onto ethylene-$\alpha$-olefin copolymers or hydrogenated aromatic compound-conjugated diene block copolymers, either in the presence or in the absence of a peroxide.

Specific examples of $\alpha,\beta$-unsaturated dicarboxylic acids and their derivatives include maleic acid, fumaric acid, maleic anhydride and fumaric anhydride, with maleic anhydride being particularly preferred.

According to one aspect, the elastomer may be a mixture of an elastomer with an acidic functional group and an elastomer without an acidic functional group. The mixing ratio of the elastomer with an acidic functional group and the elastomer without an acidic functional group is preferably 10 mass% or greater, more preferably 20 mass% or greater, even more preferably 30 mass% or greater and most preferably 40 mass% or greater, where 100 mass% is the total of both, from the viewpoint of satisfactorily maintaining high toughness and stable physical properties for the resin composition by the elastomer with an acidic functional group. There is no particular upper limit, and essentially all of the elastomer may be an elastomer with an acidic functional group, but from the viewpoint of avoiding flow property issues it is preferably 80 mass% or lower.

The content of the thermoplastic resin in the resin composition is preferably 20 mass% or greater or 30 mass% or greater, and preferably 99 mass% or lower, 95 mass% or lower or 90 mass% or lower.

<Elastomer additives>

The resin composition may also include conventional publicly known elastomer additives (such as stabilizers, softening agents and aging inhibitors). As stabilizers for the elastomer there may be used one or more antioxidants such as 2,6-di-tert-butyl-4-hydroxytoluene (BHT), n-octadecyl-3-(4'-hydroxy-3', 5'-di-tert-butylphenyl)propionate, 2-methyl-4,6-bis[(octylthio)methyl]phenol and pentaerythritoltetrakis(3-(3,5-di-*tert*-butyl-4-hydroxyphenyl)propionate). Elastomer softening agents may be one or more process oils or extender oils. However, since the resin composition of the embodiment is able to form a flexible molded article according to one aspect, it preferably does not include an elastomer softening agent, according to that aspect.

<Dispersing agent>

According to one aspect, the resin composition includes a dispersing agent. A dispersing agent contributes to improved dispersibility of the cellulose fine fibers in the thermoplastic resin. The dispersing agent may be of a single type of substance or a mixture of two or more types of substances. In the latter case, the property values of the disclosure are the values for the mixture.

[Amphiphilic molecule]

According to one aspect, the dispersing agent more preferably has a hydrophilic segment and a hydrophobic segment in the same molecule (that is, it is an amphiphilic molecule), from the viewpoint of uniformly dispersing the cellulose fine fibers in the resin.

A hydrophilic segment is a portion that exhibits satisfactory affinity with cellulose fine fibers by the presence of a hydrophilic structure. The hydrophilic structure may be a hydroxyl, thiol, carboxyl, sulfonic acid, sulfuric acid ester, phosphoric acid, boronic acid, silanol or sorbitan group, a group derived from a saccharide such as sucrose, a glycerin-derived group, a group represented by -OM, -COOM, $-SO_3M$, $-OSO_3M$, $-HMPO_4$ or $-M_2PO_4$ (where M is an alkali metal or alkaline earth metal), or a primary to tertiary amine or quaternary ammonium salt. The counter anion of a quaternary ammonium salt may be one or more hydrophilic groups selected from the group consisting of halide ions such as hydroxide ion, fluoride ion, chloride ion, bromide ion or iodide ion; and nitrate ion, formate ion, acetate ion, trifluoroacetate ion, p-toluenesulfonate ion, hexafluorophosphate and tetrafluoroborate.

Examples of hydrophilic segments include polyethylene glycol segments, segments with repeating units containing quaternary ammonium salt structures, polyvinyl alcohol segments, polyvinylpyrrolidone segments, polyacrylic acid segments, carboxyvinyl polymer segments, cationized guar gum segments, hydroxyethyl cellulose segments, methyl cellulose segments, carboxymethyl cellulose segments and polyurethane soft segments (specifically, diol segments). A nonionic polyoxyethylene derivative is particularly preferred, and the polyoxyethylene chain length of the polyoxyethylene derivative may be 3 or greater, 5 or greater, 10 or greater or 15 or greater. A longer chain length will increase affinity with the cellulose fine fibers, but from the viewpoint of balance between the desired properties (for example, mechanical properties) of the molded resin, the polyoxyethylene chain length may be 60 or less, 50 or less, 40 or less, 30 or less or 20 or less.

Examples of hydrophobic segments include segments with hydrocarbons, segments with alkylene oxide units of 3 or more carbon atoms (for example, PPG blocks), and segments containing a polymer structure.

Preferred segments with hydrocarbons include alkyl-type, alkenyl-type, alkyl ether-type, alkenyl ether-type, alkylphenyl ether-type, alkenylphenyl ether-type, rosin ester-type, bisphenol A-type, β-naphthyl-type, styrenated phenyl-type and hydrogenated castor oil-types. The number of carbon atoms in a hydrophobic group alkyl chain or alkenyl chain (or for alkylphenyl or alkenylphenyl, the number of carbon atoms minus the phenyl group) is preferably 5 or greater, 10 or greater, 12 or greater or 16 or greater.

A segment containing a polymer structure is preferably an acrylic polymer, styrene-based resin, vinyl chloride-based resin, vinylidene chloride-based resin or polyolefin-based resin, a polycondensate of an organic dicarboxylic acid of 4 to 12 carbon atoms and an organic diamine of 2 to 13 carbon atoms, such as polyhexamethylene adipamide (6,6 nylon), polyhexamethylene azeramide (6,9 nylon), polyhexamethylene sebacamide (6,10 nylon), polyhexamethylene dodecanoamide (6,12 nylon) or polybis(4-aminocyclohexyl)methanedodecane, a polycondensate of ω-amino acid (for example, ω-aminoundecanoic acid) (such as polyundecaneamide (11 nylon)), an amino acid lactam containing a lactam ring-opening polymer, such as the ε-aminocaprolactam ring-opening polymer polycapramide (6 nylon) or the ε-aminolaurolactam ring-opening polymer polylauric lactam (12 nylon), a polymer composed of a diamine and a dicarboxylic acid, or a polyacetal-based resin, polycarbonate-based resin, polyester-based resin, polyphenylene sulfide-based resin, polysulfone-based resin, polyether ketone-based resin, polyimide-based resin, fluorine-based resin, hydrophobic silicone-based resin, melamine-based resin, epoxy-based resin or phenol-based resin.

According to one aspect the amphiphilic molecule used may be any anionic surfactant, nonionic surfactant, cationic surfactant or amphoteric surfactant. The dispersing agent may be a polymeric surfactant or a reactive surfactant. From the viewpoint of affinity with the cellulose fine fibers it preferred to use a cationic surfactant or a nonionic surfactant, with a nonionic surfactant being more preferred from the standpoint of heat resistance.

The structure of the amphiphilic molecule is not particularly restricted, and if the hydrophilic segment is represented as A and the hydrophobic segment as B, it may be an AB block copolymer, ABA block copolymer, BAB block copolymer, ABAB block copolymer, ABABA block copolymer or BABAB copolymer, a 3-branch copolymer containing A and B, a 4-branch copolymer containing A and B, a star-shaped copolymer containing A and B, a monocyclic copolymer containing A and B, a polycyclic copolymer containing A and B, or a semicircular copolymer containing A and B.

The structure of the dispersing agent is preferably an AB block copolymer, an ABA triblock copolymer, a 3-branch copolymer containing A and B or a 4-branch copolymer containing A and B, and more preferably an ABA triblock copolymer, a 3-branch structure (3-branch copolymer containing A and B) or a 4-branch structure (4-branch copolymer containing A and B). The structure of the dispersing agent is preferably a structure as described above in order to ensure satisfactory affinity with the cellulose fine fibers.

[Hydrophilic polymer]

According to one aspect, the dispersing agent is preferably a hydrophilic polymer. The hydrophilic polymer used may be one or more selected from the group consisting of cellulose derivatives (such as hydroxyethyl cellulose, methyl cellulose and carboxymethyl cellulose), polyalkylene glycols, polyvinyl alcohol, polyvinylpyrrolidone, polyacrylic acid, carboxyvinyl polymers, cationized guar gum, water-soluble polyurethane, polymers including quaternary ammonium salt structures, amides and amines. Cellulose derivatives and polyalkylene glycols are more preferred among these. Cellulose derivatives, which are cellulosic substances which have high affinity with cellulose while also being thermoplastic resins, are preferred because they have a high effect of increasing dispersion stability of the cellulose in the resin composition.

Polyalkylene glycols are obtained by addition of alkylene oxides of 2 to 4 carbon atoms, and polyethylene glycols of 2 carbon atoms are preferred from the viewpoint of affinity with cellulose. From the viewpoint of increasing the high-temperature rigidity, the number of repeating oxyalkylenes is preferably 3 or greater, 5 or greater, 10 or greater, 15 or greater, 20 or greater, 30 or greater, 40 or greater, 50 or greater, 60 or greater, 70 or greater, 80 or greater, 90 or greater or 100 or greater, and from the viewpoint of workability it is preferably 1000 or less, 900 or less, 800 or less, 700 or less, 600 or less, 550 or less or 500 or less.

[Liquid polymer]

According to one aspect, the dispersing agent is preferably a liquid polymer. Specific examples of liquid polymers include liquid rubber, liquid polyolefins, liquid acrylic polymers and liquid paraffins.

(Liquid rubber)

Liquid rubber is a substance having a flow property at 23°C and forming a rubber elastomer by crosslinking (more specifically, vulcanization) and/or chain extension. That is, according to one aspect the liquid rubber is uncured. The "flow property" means, according to one aspect, that when the liquid rubber that has been dissolved in cyclohexane is placed in a vial with dimensions of 21 mm torso diameter × 50 mm full length at 23°C and then dried, causing the liquid rubber to fill the vial up to a height of 1 mm, and the vial is then closed shut, vertically inverted and allowed to stand for 24 hours, the substance can be observed to move at least 0.1 mm in the height direction.

The liquid rubber may be a common rubber monomer composition, and it preferably has a relatively low molecular weight from the viewpoint of easier handleability and obtaining satisfactory dispersibility for the cellulose fine fibers. According to one aspect, the liquid rubber is in liquid form with a number-average molecular weight (Mn) of 80,000 or lower. Unless otherwise specified, the number-average molecular weight and weight-average molecular weight of the rubber of the disclosure are the values determined in terms of standard polystyrene, using gel permeation chromatography with a chloroform solvent, at a measuring temperature of 40°C.

According to one aspect, the liquid rubber may be combined with the cellulose fine fibers to form a master batch, the master batch being combined with a resin to form the resin composition of the disclosure.

The number-average molecular weight (Mn) of the liquid rubber is preferably 1,000 or higher, 1,500 or higher or 2,000 or higher, from the viewpoint of thermal stability and of increasing dispersibility of the cellulose fine fibers in the resin, and preferably 80,000 or lower, 50,000 or lower, 40,000 or lower, 30,000 or lower or 10,000 or lower, from the viewpoint of exhibiting a high flow property suitable for satisfactory dispersion when the cellulose fine fibers are dispersed in the liquid rubber.

The weight-average molecular weight (Mw) of the liquid rubber is preferably 1,000 or higher, 2,000 or higher or 4,000 or higher, from the viewpoint of thermal stability and of increasing dispersibility of the cellulose fine fibers in the resin, and preferably 240,000 or lower, 150,000 or lower or 30,000 or lower, from the viewpoint of exhibiting a high flow property suitable for satisfactory dispersion when the cellulose fine fibers are dispersed in the liquid rubber.

The ratio (Mw/Mn) of the number-average molecular weight (Mn) and the weight-average molecular weight (Mw) of the liquid rubber is preferably 1.5 or greater, 1.8 or greater or 2 or greater from the viewpoint of allowing high levels of multiple properties (which are, according to one aspect, high levels for both satisfactory dispersion of the cellulose fine fibers in the resin and a satisfactory flexural modulus of the resin composition) by producing some degree of variation in the molecular weight, and preferably 10 or lower, 8 or lower, 5 or lower, 3 or lower or 2.7 or lower, from the viewpoint of stably obtaining the desired physical properties for a resin composition, such as flow property and impact resistance, without excessively large variation in molecular weight.

The liquid rubber may be one with satisfactory thermal stability. According to one aspect, the thermal decomposition initiation temperature ($T_D$) of the liquid rubber is 200°C or higher, or 250°C or higher or 300°C or higher, from the viewpoint of satisfactory thermal stability. While a higher thermal decomposition initiation temperature is preferred, according to one aspect it is 500°C or lower, 450°C or lower or 400°C or lower, from the viewpoint of obtainability of the liquid rubber.

The glass transition temperature of the liquid rubber is preferably -150°C or higher, -120°C or higher or -100°C or higher from the viewpoint of satisfactory thermal stability, and preferably 25°C or lower, 10°C or lower or 0°C or lower, from the viewpoint of a satisfactory flow property.

According to one aspect, the liquid rubber includes diene rubber, and according to another aspect it includes a conjugated diene-based polymer or non-conjugated diene-based polymer, or its hydrogenated form. Preferred examples of conjugated diene-based polymers and non-conjugated diene-based polymers are the same as mentioned above for thermoplastic elastomers. The polymer or its hydrogenated product may also be an oligomer. The monomer composing the liquid rubber may be an unmodified or modified monomer (such as an acid modified or hydroxyl-modified monomer). According to one aspect, the liquid rubber may have reactive groups at both ends (for example, one or more selected from the group consisting of hydroxyl, carboxy, isocyanato, thio, amino and halo groups), in which case it may be bifunctional. The reactive groups contribute to crosslinking and/or chain extension of the liquid rubber.

According to one aspect, the liquid rubber includes one or more types selected from the group consisting of diene rubber, silicone rubber, urethane rubber and polysulfide rubber, as well as their hydrogenated forms.

From the viewpoint of satisfactorily dispersing the cellulose fine fibers in the liquid rubber, the viscosity of the liquid rubber at 25°C is preferably 1,000,000 mPa·s or lower, 500,000 mPa·s or lower or 200,000 mPa·s or lower, while from the viewpoint of thermal stability, increasing dispersibility of the cellulose fine fibers in the resin, and the mechanical properties of the resin composition, it is preferably 100 mPa·s or higher, 300 mPa·s or higher or 500 mPa·s or higher.

From the viewpoint of satisfactorily dispersing the cellulose fine fibers in the liquid rubber and satisfactorily dispersing the cellulose fine fibers in the resin by hot kneading, the viscosity of the liquid rubber at 80°C is preferably 1,000,000 mPa·s or lower, 500,000 mPa·s or lower, 250,000 mPa·s or lower or 100,000 mPa·s or lower, while from the viewpoint of thermal stability, increasing dispersibility of the cellulose fine fibers in the resin, and the mechanical properties of the resin composition, it is preferably 50 mPa·s or higher, 100 mPa·s or higher or 300 mPa·s or higher.

From the viewpoint of satisfactorily dispersing the cellulose fine fibers in the liquid rubber, the viscosity of the liquid rubber at 0°C is preferably 2,000,000 mPa·s or lower, 1,000,000 mPa·s or lower or 400,000 mPa·s or lower, while from the viewpoint of thermal stability, increasing dispersibility of the cellulose fine fibers in the resin, and the mechanical properties of the resin composition, it is preferably 200 mPa·s or higher, 600 mPa·s or higher or 1,000 mPa·s or higher.

A lower temperature dependence for the viscosity of the liquid rubber is preferred from the viewpoint of satisfactorily dispersing the cellulose fine fibers in the liquid rubber within a wide range of mixing temperatures. From this viewpoint, the viscosity of the liquid rubber is preferably within the aforementioned range for all of the temperatures of 80°C, 25°C and 0°C.

The viscosity of the liquid rubber is the value measured using a Brookfield viscometer with a rotational speed of 10 rpm.

The amount of dispersing agent in the resin composition is preferably 0.3 mass% or greater, 0.5 mass% or greater or 1.0 mass% or greater from the viewpoint of satisfactorily dispersing the cellulose fine fibers in the thermoplastic resin, and preferably 20.0 mass% or lower, 15.0 mass% or lower, 10.0 mass% or lower, 5.0 mass% or lower or 3.0 mass% or lower, from the viewpoint of avoiding a large amount from acting as a plasticizer for the thermoplastic resin.

The amount of dispersing agent in the resin composition can be easily confirmed by a method commonly known to those skilled in the art. The confirmation method is not restricted, but the following is an example. When a fragment of the resin composition has been dissolved in a solvent that dissolves the resin, the soluble portion 1 (resin and dispersing agent) and insoluble portion 1 (cellulose fine fibers and dispersing agent) are separated. The soluble portion 1 is reprecipitated with a solvent that does not dissolve the resin but dissolves the dispersing agent, separating out an insoluble portion 2 (resin) and soluble portion 2 (dispersing agent). The insoluble portion 1 is dissolved in a dispersing agent-soluble solvent and separated into a soluble portion 3 (dispersing agent) and an insoluble portion 3 (cellulose fine fibers). The soluble portion 2 and soluble portion 3 are concentrated (drying, air-drying or reduced pressure drying) to allow quantitation of the dispersing agent. Identification and molecular weight measurement of the concentrated dispersing agent can be carried out by the methods described above.

<Additional components>

The resin composition may further include additional components as necessary, for improved performance. Such additional components include filler components other than cellulose; compatibilizers; plasticizers; polysaccharides such as starch and alginic acid; natural proteins such as gelatin, nikawa and casein; inorganic compounds such as zeolite, ceramics, talc, silica, metal oxides and metal powders; coloring agents; perfumes; pigments; flow adjusters; leveling agents; conductive agents; antioxidants; antistatic agents; ultraviolet absorbers; ultraviolet dispersing agents; and deodorants. The content ratio of optional additional components in the resin composition is appropriately selected in a range that does not interfere with the desired effect of the invention, and for example, it may be 0.01 to 50 mass% or 0.1 to 30 mass%.

<Method for producing resin composition>

According to one aspect, the resin composition can be obtained by mixing the cellulose fine fibers and thermoplastic resin by melt kneading, for example. The mixing method may be:

- a method of mixing a resin monomer with the cellulose fine fibers for polymerization reaction, extruding the obtained resin composition into a strand, cooling to solidification in a water bath and obtaining molded pellets,

  a method of melt kneading a mixture of the resin and cellulose fine fibers using a single-screw or twin-screw extruder, extruding it into a strand, cooling to solidification in a water bath and obtaining molded pellets,
  a method of melt kneading a mixture of the resin and cellulose fine fibers using a single-screw or twin-screw extruder and extruding and cooling it into the form of a rod or tube to obtain an extruded body, or
  a method of melt kneading a mixture of the resin and cellulose fine fibers using a single-screw or twin-screw extruder and extruding it with a T-die to obtain a molded sheet or film. According to a preferred aspect, a single-screw or twin-screw extruder is used for melt kneading of a mixture of the resin and cellulose fine fibers, extrusion into a strand, cooling solidification in a water bath and obtaining molded pellets.

For example, a method may be carried out in which the cellulose fine fibers that have been transported in the desired proportion with respect to the resin are loaded into and mixed with the resin, and the mixture is then melt kneaded.

While either a single-screw extruder or a twin-screw extruder may be used for the melt kneading, a twin-screw extruder is preferred to control the dispersibility of the cellulose fine fibers. The ratio L/D of the cylinder length (L) of the extruder divided by the screw diameter (D) is preferably 30 or greater and most preferably 40 or greater. The screw rotational speed during kneading is preferably in the range of 50 to 800 rpm and more preferably in the range of 100 to 600 rpm.

Each of the screws in the cylinder of the extruder is optimized by combination of the kneading elements, i.e. an elliptical double-threaded transport screw and a kneading disc.

The minimum processing temperature recommended by thermoplastic resin suppliers is 255 to 270°C for polyamide 66, 225 to 240°C for polyamide 6, 225 to 240°C for polybutylene terephthalate, 170°C to 190°C for a polyacetal resin and 160 to 180°C for polypropylene. The heating preset temperature is preferably in a range of 20°C higher than the recommended minimum processing temperature. Setting the mixing temperature to within this range will allow the cellulose fine fibers and the resin to be uniformly mixed.

According to one aspect, the resin composition may also include a recycled material of a shaped article or another molded article. According to one aspect, the content of the recycled material in the resin composition may be 5 mass% or greater, 10 mass% or greater or 15 mass% or greater, and according to another aspect it may be 100 mass% or lower, 95 mass% or lower, 90 mass% or lower or 85 mass% or lower.

<Resin composition form>

The resin composition of the embodiment may be provided in a variety of different forms. Specifically, it may be in the form of resin pellets, a sheet, fibers, plates or rods, with the form of resin pellets being more preferred for easier post-working and easier transport. The preferred form of resin pellets is round, elliptical or cylindrical, with the shape differing depending on the system used for cutting during extrusion. For example, pellets cut by the method known as "underwater cutting" are usually round, pellets cut by the method known as "hot cutting" are usually round or elliptical, and pellets cut by the method known as "strand cutting" are usually cylindrical. The preferred pellet diameter for round pellets is 1 mm to 3 mm. The preferred diameter for cylindrical pellets is 1 mm to 3 mm, and the preferred length is 2 mm to 10 mm. The diameter and length are preferably above these specified lower limits from the viewpoint of operational stability during extrusion, and they are preferably lower than the specified upper limits from the viewpoint of seizing in the molding machine in post-working.

<Shaping material for 3D printing and method for producing it>

The shaping material for 3D printing composed of the resin composition of the embodiment may be in the form of a filament, pellets or powder, and will typically be a filament. The filament may be a monofilament or multifilament, but a monofilament is preferred for easier molding. The diameter of the filamentous shaping material is preferably 0.5 to 5.0 mm, more preferably 1.0 to 3.5 mm and most preferably 1.5 to 3.0 mm. The length of the filamentous shaping material is preferably greater than 1 m, more preferably greater than 10 m, even more preferably greater than 100 m and most preferably greater than 300 m. By controlling the shape of the filamentous shaping material within this range it is possible to select from a wide range of suitable 3D printers, and to appropriately design the shaping time and the size and precision of shaped articles. According to one aspect, the length of the filamentous shaping material may be 20,000 m or smaller.

According to one aspect, the filamentous shaping material can be produced by hot melting a resin composition and then passing it through holes such as those of a nozzle, and finally cooling and taking up the material. The diameters of the holes may be appropriately selected depending on the diameter and take-up speed of the filament, but from the viewpoint of production efficiency and yarn breakage frequency, they are preferably 0.5 to 10.0 mm, more preferably 0.8 to 5.0 mm and most preferably 1.0 to 3.0 mm. The method of cooling may be appropriately selected from among known methods such as air-cooling and water-cooling, but air-cooling is preferred from the viewpoint of preventing absorption of water caused by the hydrophilicity of the cellulose fine fibers. From the viewpoint of production efficiency and yarn breakage frequency, the take-up speed of the filament is preferably 0.1 to 10 m/sec, more preferably 0.15 to 5 m/sec and most preferably 0.2 to 1 m/sec. The production apparatus for the filamentous shaping material and the production apparatus for the resin composition may be the same or different.

According to a typical aspect, the shaped article is shaped by a 3D printer in a Material Extrusion (MEX) system, but the shaped article according to one aspect may be shaped by a separate system, such as a powder bed fusion bonding system. In a shaped article according to one aspect, it is possible to reduce generation of voids due caused by foaming in a molten state.

EP 4 759 513 A1

<Properties of resin composition, shaping material for 3D printing, and shaped article>

The resin composition, shaping material for 3D printing and shaped article may have the following properties. The properties mentioned above for the resin composition (for example, shear viscosity and elongation viscosity) may be considered to be the same for the 3D printer shaping material and for the shaped article.

<Tensile yield strength>

According to one aspect, the tensile yield strength of the resin composition, shaping material for 3D printing or shaped article may be 20 MPa or greater, 50 MPa or greater or 80 MPa or greater, and 300 MPa or lower, 200 MPa or lower or 150 MPa or lower.

<Tensile breaking elongation>

According to one aspect, the tensile breaking elongation of the resin composition, shaping material for 3D printing or shaped article may be 0.5% or greater, 1% or greater or 1.5% or greater, and 200% or lower, 100% or lower or 20% or lower.

<Flexural modulus>

According to one aspect, the flexural modulus of the resin composition, shaping material for 3D printing or shaped article may be 2.0 GPa or higher, 2.5 GPa or higher, 3.0 GPa or higher, 3.5 GPa or higher, 3.7 GPa or higher or 3.9 GPa or higher, and 20.0 GPa or lower, 10.0 GPa or lower or 8.0 GPa or lower.

<250°C weight loss ($T_{250°C}$)>

The 250°C weight loss ($T_{250°C}$) of the resin composition, shaping material for 3D printing or shaped article is preferably 1.5% or lower, 1.4% or lower or 1.3% or lower, from the viewpoint of avoiding heat degradation during molding and obtaining a shaped article with satisfactory mechanical strength. While a lower 250°C weight loss is preferred, according to one aspect it is 0.01% or greater, 0.1% or greater or 0.3% or greater from the viewpoint of facilitating production of the resin composition, shaping material for 3D printing or shaped article. The 250°C weight loss ($T_{250°C}$) of the resin composition, shaping material for 3D printing or shaped article is the weight loss when the resin composition, shaping material for 3D printing or shaped article sample is held for 2 hours under a nitrogen flow at 250°C for TG analysis. The sample is increased in temperature from room temperature to 150°C at a temperature-elevating rate of 10°C/min, under a nitrogen flow of 100 ml/min, and held at 150°C for 1 hour, after which the temperature is increased from 150°C to 250°C at 10°C/min and held at 250°C for 2 hours. Calculation was by the following formula using the weight WO upon reaching 250°C as the starting point, and the weight after holding at 250°C for 2 hours as W1.

$$250°C \text{ Weight change rate } (\%): (W0 - W1)/W0 \times 100$$

<Lightness (L value)>

According to one aspect, the L value of the resin composition, shaping material for 3D printing or shaped article is 35 or greater, 40 or greater or 45 or greater, and according to another aspect it is 90 or smaller, 85 or smaller or 80 or smaller. The L value is an index of lightness, and it is measured as the L* value using a color difference meter in D65 light with a 10° visual field. When the lightness is high, it is believed that heat degradation of the cellulose fine fibers is satisfactorily reduced in the resin composition, shaping material for 3D printing or shaped article.

<Use of shaped article>

The shaped article may be applied directly for various purposes, or it may be molded into a desired shape either alone or together with other components, to produce a desired molded article. The method of combining the components and the method of molding are not particularly restricted, and may be selected depending on the desired molded article. The molding method used may be, but is not limited to, a cut molding method or foam molding method. The shaped article or molded article is useful as a substitute for steel sheets, fiber-reinforced plastics (such as carbon fiber reinforced plastics and glass fiber reinforced plastics), and inorganic filler-containing resin composites. Examples of preferred uses for the shaped article or molded article include industrial machinery parts, general machine parts, automobile/railway/vehicle/-

ship/aerospace-related parts, electronic and electrical components, construction and civil engineering materials, daily household items, sports and leisure goods, wind power generation case members, and container and packaging materials.

<Other molded articles>

The resin composition of the embodiment is mainly to be used for shaping with a 3D printer, but according to one aspect, the resin composition may be provided for molding other than 3D printing, such as injection molding, extrusion molding, compression molding, blow molding, vacuum molding, foam molding, rotational molding or gas injection molding. The lower limit for the molding temperature may be +5°C or +10°C, respectively, with respect to the melting temperature, which is the melting point when the thermoplastic resin is a crystalline resin, or the glass transition point when it is an amorphous resin (the highest temperature value when multiple types are present in the resin composition). By controlling the lower limit to within this range it is possible to improve molding productivity. The upper limit for the molding temperature may be +100°C, +80°C, +70°C or +60°C, respectively, with respect to the aforementioned melting temperature. If the upper limit is controlled to within this range, it will be possible to inhibit deterioration of the cellulose fine fibers and thus maintain the mechanical properties of the resin composition, while it will also be possible to inhibit drawdown of the resin composition between the extrusion die and cooling zone during extrusion molding (for example, profile extrusion molding), for example, thus resulting in satisfactory dimensional precision for the molded article. Examples of cross-sectional shapes for the profile extrusion-molded articles include sheet-like, pipe-like, tube-like and square shapes. In the case of a sheet, the sheet thickness may be 0.2 to 50 mm and the sheet width may be 10 to 1500 mm. When the shape is pipe-like or tube-like, the thickness may be 0.1 to 30 mm and the inner diameter may be 1 to 1000 mm. In the case of angular shapes, the corner angles may be 30 to 150 degrees. The minimum curvature radius on the recess side of the corners may be 0.1 mm.

The present disclosure encompasses the following aspects.

<Aspect group A>

[Aspect 1]

A shaped article comprising a thermoplastic resin and cellulose fine fibers, wherein:

the shaped article is the output of a 3D printer,
the shaped article has a section with a thickness of 2.5 mm or greater, and
one or more 2 mm × 2 mm × 2 mm cubic regions selected from the section with a thickness of 2.5 mm or greater, so as not to include the outermost layer of the shaped article, have a void ratio of 10 vol% or lower as determined by X-ray computed tomography (CT).

[Aspect 2]

The shaped article according to [1] above, wherein the number of the one or more 2 mm × 2 mm × 2 mm cubic regions is 5, and the number-average value for the void ratio of the five cubic regions is 10 vol% or lower.

[Aspect 3]

The shaped article according to [1] or [2] above, wherein the thermoplastic resin is one or more selected from the group consisting of polyamide-based resins and polyacetal-based resins.

[Aspect 4]

The shaped article according to any one of [1] to [3] above, wherein the thermoplastic resin comprises a crystalline resin with a melting point of 150°C to 300°C.

[Aspect 5]

The shaped article according to any one of [1] to [4] above, wherein the cellulose fine fibers have a mean fiber size of 1000 nm or smaller.

[Aspect 6]

The shaped article according to any one of [1] to [5] above, which comprises the cellulose fine fibers at 1 part by mass to 150 parts by mass with respect to 100 parts by mass of the thermoplastic resin.

[Aspect 7]

A method for producing a shaped article according to any one of [1] to [6] above, wherein the method includes extruding and layering a resin composition comprising a thermoplastic resin and cellulose fine fibers from the extrudextrude outlet of a 3D printer.

[Aspect 8]

The method according to [7] above, wherein

the resin composition is fed to the 3D printer as a filamentous shaping material for 3D printing, and
the molten material of the shaping material for 3D printing is extrudextruded from the extrudextrude outlet.

<Aspect group B>

[Aspect 1]

A method for producing a shaped article comprising a thermoplastic resin and cellulose fine fibers, wherein:

a resin composition comprising a thermoplastic resin and cellulose fine fibers is extrudextruded and layered from the extrudextrude outlet of a 3D printer, and
the temperature of the extrudextrude outlet is set to a temperature such that the resin composition exhibits a shear viscosity of lower than 600 kPa·s at a shear rate of 1000 sec$^{-1}$ and exhibits an elongation viscosity of higher than 10 kPa·s at an elongation rate of 10 sec$^{-1}$.

[Aspect 2]

A method for producing a shaped article comprising a thermoplastic resin and cellulose fine fibers,

wherein the method includes extrudextruding and layering a resin composition comprising a thermoplastic resin and cellulose fine fibers from the extrudextrude outlet of a 3D printer,
the minimum temperature (T1) at which the resin composition exhibits a shear viscosity of 600 kPa·s or lower at a shear rate of 1000 sec$^{-1}$ is lower than the maximum temperature (T2) at which the resin composition exhibits an elongation viscosity of 10 kPa·s or higher at an elongation rate of 10 sec$^{-1}$, the difference between the temperature (T1) and the temperature (T2) being 40°C or more, and
the temperature (T3) of the extrudextrude outlet is set to a temperature higher than the temperature (T1) and lower than the temperature (T2).

[Aspect 3]

The method according to [1] or [2] above, wherein

the resin composition is fed to the 3D printer as a filamentous shaping material for 3D printing, and
the molten material of the shaping material for 3D printing is extrudextruded from the extrude outlet.

[Aspect 4]

The method according to any one of [1] to [3] above, wherein the thermoplastic resin is one or more selected from the group consisting of polyamide-based resins and polyacetal-based resins.

[Aspect 5]

The method according to any one of [1] to [4] above, wherein the thermoplastic resin comprises a crystalline resin with a melting point of 150°C to 300°C.

[Aspect 6]

The method according to any one of [1] to [5] above, wherein the cellulose fine fibers have a mean fiber size of 1000 nm or smaller.

[Aspect 7]

The method according to any one of [1] to [6] above, wherein the resin composition comprises the cellulose fine fibers at 1 part by mass to 150 parts by mass with respect to 100 parts by mass of the thermoplastic resin.

[Aspect 8]

The method according to any one of [1] to [7] above, wherein the L value of the shaped article is 35 or greater.

[Aspect 9]

A resin composition comprising a thermoplastic resin and cellulose fine fibers, wherein:

the minimum temperature (T1) at which the resin composition exhibits a shear viscosity of 600 kPa·s or lower at a shear rate of 1000 sec$^{-1}$ is lower than the maximum temperature (T2) at which the resin composition exhibits an elongation viscosity of 10 kPa·s or greater at an elongation rate of 10 sec$^{-1}$, and
the difference between the temperature (T1) and the temperature (T2) is 40°C or more.

[Aspect 10]

The resin composition according to [9] above, wherein the thermoplastic resin is one or more selected from the group consisting of polyamide-based resins and polyacetal-based resins.

[Aspect 11]

The resin composition according to [9] or [10] above, wherein the thermoplastic resin comprises a crystalline resin with a melting point of 150°C to 300°C.

[Aspect 12]

The resin composition according to any one of [9] to [11] above, wherein the cellulose fine fibers have a mean fiber size of 1000 nm or smaller.

[Aspect 13]

The resin composition according to any one of [9] to [12] above, wherein the resin composition comprises the cellulose fine fibers at 1 part by mass to 150 parts by mass with respect to 100 parts by mass of the thermoplastic resin.

[Aspect 14]

A shaping material for 3D printing, which is a filament composed of a resin composition according to any one of [9] to [13] above.

[Aspect 15]

The shaping material for 3D printing according to [14] above, wherein the L value is 35 or greater.

[Aspect 16]

A shaped article obtained by shaping a resin composition according to any one of [9] to [13] above, or a shaping material for 3D printing according to [14] or [15] above, with a 3D printer.

[Aspect 17]

The shaped article according to [16] above, wherein the L value is 35 or greater.

[Examples]

Exemplary modes of the invention will now be further illustrated using Examples, with the understanding that the invention is not limited to these Examples.

<Evaluation methods>

<Cellulose fine fibers>

[Mean fiber length]

The mean fiber length of the cellulose fine fibers was evaluated by the following method using a fiber shape autoanalyzer (MorfiNeo by TechPap).
The sample was dispersed in purified water to prepare 1 L of an aqueous dispersion. The final solid concentration of the sample was 0.003 to 0.005 mass%. A dispersion of the sample at less than 2 mass% before dilution can be simply stirred with a spatula, but for an aqueous dispersion, wet cake or powder at 2 mass% or greater, a high-shear homogenizer (trade name: "ULTRA-TURRAX T18" by IKA Co.) was used for dispersion treatment with treatment conditions of 25,000 rpm $\times$ 5 min.
The prepared aqueous dispersion was supplied to an autosampler for measurement. The obtained measurement results were outputted in txt file format, and the Mean length-weighted Length [$\mu$m] value was used as the mean fiber length.

[Mean fiber diameter]

The cellulose microfiber aqueous dispersion obtained for each of the Production Examples was diluted with tert-butanol to 0.01 mass% and dispersed using a high-shear homogenizer ("ULTRA-TURRAX T18", trade name of IKA Corp.) with treatment conditions of 15,000 rpm $\times$ 3 min, cast onto an osmium-vapor deposited silicon substrate and air-dried, and then measured with a high-resolution scanning electron microscope (Regulus 8220 by Hitachi High-Technologies Corp.). The measurement was carried out with adjustment of the magnification so that at least 100 cellulose fibers were observable, the short diameters of 100 randomly selected cellulose fibers were determined, and the addition average for the 100 cellulose fine fibers was calculated.

[DS]

(Fabrication of porous sheet)

The wet cake was added to tert-butanol, and dispersed with a mixer until aggregates were no longer seen. The mixture was then prepared to a concentration of 0.5 mass% for 0.5 g of solid weight of the cellulose fine fibers. A 100 g portion of the obtained tert-butanol dispersion was filtered on filter paper. Without being released from the filter paper, the filtered substance together with the filter paper was sandwiched by two larger filter paper sheets, and dried for 5 minutes in an oven at 150°C while pressing the edges of the larger filter paper with a weight from above. The filter paper was then released to obtain a porous sheet without distortion. Sheets with air permeability resistance up to 100 sec/100 ml per 10 g/m$^2$ basis weight of the sheet were considered to be porous sheets, and were used as measuring samples.
After measuring the basis weight W (g/m$^2$) of each sample that had been left to stand for 1 day in an environment of 23°C, 50% RH, an Oken-type air permeability resistance tester (Model EG01 by Asahi Seiko Co., Ltd.) was used to measure the air permeability resistance R (sec/100 ml). The value per 10 g/m$^2$ basis weight was calculated by the following formula.

$$\text{Air permeability resistance (sec/100 ml) per 10 g/m}^2 \text{ basis weight} = \text{R/W} \times 10$$

Sheets with air permeability resistance up to 100 sec/100 ml per 10 g/m$^2$ basis weight of the sheet were considered to be porous sheets.

(Measurement)

The infrared spectrum of the porous sheet was measured at 5 locations by ATR-IR, using a Fourier transform infrared spectrophotometer (FT/IR-6200 by Jasco Corp.). The infrared spectrum was measured under the following conditions.

Number of scans: 64,
Wavenumber resolution: 4 cm$^{-1}$,
Wavenumber range: 4000 to 600 cm$^{-1}$,
ATR crystal: diamond,
Incident angle: 45°

The IR index was calculated from the obtained IR spectrum using the following formula:

$$\text{IR index} = H1730/H1030.$$

In the formula, H1730 and H1030 are the absorbances at 1730 cm$^{-1}$ and 1030 cm$^{-1}$ (absorption bands for C-O stretching vibration of the cellulose backbone chain). The respective baselines used were a line connecting 1900 cm$^{-1}$ and 1500 cm$^{-1}$ and a line connecting 800 cm$^{-1}$ and 1500 cm$^{-1}$, each baseline being defined as the absorbance at absorbance = 0.

The average degree of substitution at each measured location was calculated from the IR index using the following formula, and the average value was recorded as DS.

$$\text{DS} = 4.13 \times \text{IR Index}$$

[Degree of crystallinity]

The degree of crystallinity of the cellulose starting material was evaluated by the following method using an X-ray diffractometer (MiniFlex II by Rigaku Corp.).

The porous sheet was measured by X-ray diffraction and the degree of crystallinity was calculated by the following formula.

$$\text{Degree of crystallinity (\%)} = [I_{(200)} - I_{(amorphous)}]/I_{(200)} \times 100$$

$I_{(200)}$: Diffraction peak intensity at 200 plane (2θ = 22.5°) for type I cellulose crystal
$I_{(amorphous)}$: Amorphous halo peak intensity for type I cellulose crystal, peak intensity at angle of 4.5° lower than diffraction angle at 200 plane (2θ = 18.0°).

(X-ray diffraction measuring conditions)

Apparatus: MiniFlex (Rigaku Corp.)
Operating shaft: 2θ/θ
Source: CuKα
Measuring method: Continuous
Voltage: 40 kV
Current: 15 mA
Initial angle: 2θ = 5°
Final angle: 2θ = 30°
Sampling width: 0.020°
Scan speed: 2.0°/min
Sample: Porous sheet attached to specimen holder.

[Weight-average molecular weight (Mw) and Mw/Mn ratio]

After weighing out 0.88 g of the porous sheet and chopping it into small pieces with scissors, the pieces were gently stirred and allowed to stand for one day after addition of 20 mL of purified water. The water and solid portion were separated by centrifugation. After then adding 20 mL of acetone, the mixture was gently stirred and allowed to stand for 1 day. The acetone and solid portion were separated by centrifugation. After then adding 20 mL of N,N-dimethylacetamide, the mixture was gently stirred and allowed to stand for 1 day. Centrifugal separation was again carried out to separate the N,N-dimethylacetamide and solid portion, and then 20 mL of N,N-dimethylacetamide was added and the mixture was gently stirred and allowed to stand for 1 day. The N,N-dimethylacetamide and solid portion were separated by centrifugation, 19.2 g of a N,N-dimethylacetamide solution prepared to a lithium chloride content of 8 mass% was added to the solid portion, and the mixture was stirred with a stirrer while visually confirming dissolution. The cellulose-dissolving solution was filtered with a 0.45 $\mu$m filter, and the filtrate was supplied as a sample for gel permeation chromatography. The apparatus and measuring conditions used were as follows.

Apparatus: Tosoh Corp. HLC-8120
Column: TSKgel SuperAWM-H (6.0 mm I.D. $\times$ 15 cm) $\times$ 2
Detector: RI detector
Eluent: N,N-dimethylacetamide (lithium chloride: 0.2%)
Flow rate: 0.6 mL/min
Calibration curve: Based on pullulan

[Average content of alkali-soluble polysaccharides]

The alkali-soluble polysaccharide content was determined by a method described in non-patent literature for cellulose fine fibers (Mokushitsu Kagaku Jikken Manual, ed. The Japan Wood Research Society, pp.92-97, 2000), subtracting the $\alpha$-cellulose content from the holocellulose content (Wise method). The alkali-soluble polysaccharide content was calculated 3 times for each sample, and the number average for the calculated alkali-soluble polysaccharide contents was recorded as the average alkali-soluble polysaccharide content for the cellulose fine fibers. For acetylated cellulose fine fibers, the average alkali-soluble polysaccharide content used was for the starting material before acetylation.

[Thermal decomposition initiation temperature]

Thermal analysis of the porous sheet was conducted by the following method.
Apparatus: Thermo plus EVO2 by Rigaku
Sample: Circular pieces cut out from the porous sheet were placed and stacked in an aluminum sample pan, in an amount of 10 mg.
Sample weight: 10 mg
Measuring conditions: Temperature increase from room temperature to 150°C at a temperature-elevating rate of 10°C/min, in a nitrogen flow of 100 ml/min, and holding at 150°C for 1 hour, followed by temperature increase to 450°C at 10°C/min.
$T_D$ calculation method: Calculation was from a graph with temperature on the abscissa and weight retention% on the ordinate. Starting from the weight of the porous sheet at 150°C (with essentially all of the moisture content removed) (a weight loss of 0 wt%) and increasing the temperature, a straight line was obtained running through the temperature at 1 wt% weight loss and the temperature at 2 wt% weight loss. The temperature at the point of intersection between this straight line and a horizontal (baseline) running through the origin at weight loss 0 wt%, was recorded as the thermal decomposition initiation temperature ($T_D$).

[1 wt% weight loss temperature]

The temperature at 1 wt% weight loss used for $T_D$ calculation was recorded as the 1 wt% weight loss temperature.

[250°C weight change rate]

Apparatus: Thermo plus EVO2 by Rigaku
Sample: Circular pieces cut out from the porous sheet were placed and stacked in an aluminum sample pan, in an amount of 10 mg.
Sample weight: 10 mg

Measuring conditions: Temperature increase from room temperature to 150°C at a temperature-elevating rate of 10°C/min, in a nitrogen flow of 100 ml/min, and holding at 150°C for 1 hour, followed by temperature increase from 150°C to 250°C at 10°C/min and holding at 250°C for 2 hours. Calculation was by the following formula using the weight WO upon reaching 250°C and the weight W1 after holding at 250°C for 2 hours.

$$250°\text{C Weight change rate (\%): } (W0 - W1)/W0 \times 100$$

<Thermoplastic resin>

[Melting point]

Measurement was by the method described in JIS K7121.

[Degree of crystallinity]

Measurement was by the method described in JIS K7122. The difference between the heat of fusion (J/g) determined from the area of the melting peak and the heat of crystallization (J/g) determined from the area of the crystallization peak was divided by the theoretical heat of fusion for perfect crystals of the resin used as the base (in the case of a copolymer, the component with the highest copolymerization ratio). The obtained proportion was recorded as the degree of crystallinity (%). The theoretical heat of fusion was 241 J/g for polyamide 6, 254 J/g for polyamide 610 and 220 J/g for polyacetals.

<Resin composition>

[Resin composition shear viscosity at shear rate of 1000 $\text{sec}^{-1}$ and elongation viscosity at elongation rate of 10 $\text{sec}^{-1}$]

A twin-capillary rheometer (Model RH-10 by Malvern) was used to determine the shear viscosity and elongation viscosity.

Long die length: 16 mm
Long die diameter: 1 mm
Short die length: 0.25 mm
Short die diameter: 1 mm
Die entrance angle: 90°
Temperature: The materials were measured in 5°C increments in the following ranges.

(Polyamide 6, polyamide 610), 230 to 300°C
(Polyamide 6/66), 210°C to 300°C
(Polyacetal), 180 to 250°C

The minimum temperature (T1) exhibiting a shear viscosity of 600 kPa·s or lower at a shear rate of 1000 $\text{sec}^{-1}$ and the maximum temperature (T2) exhibiting an elongation viscosity of 10 kPa·s or higher at an elongation rate of 10 $\text{sec}^{-1}$ were calculated based on the obtained viscosity curve.

[Mechanical strength of resin composition]

(Flexural properties)

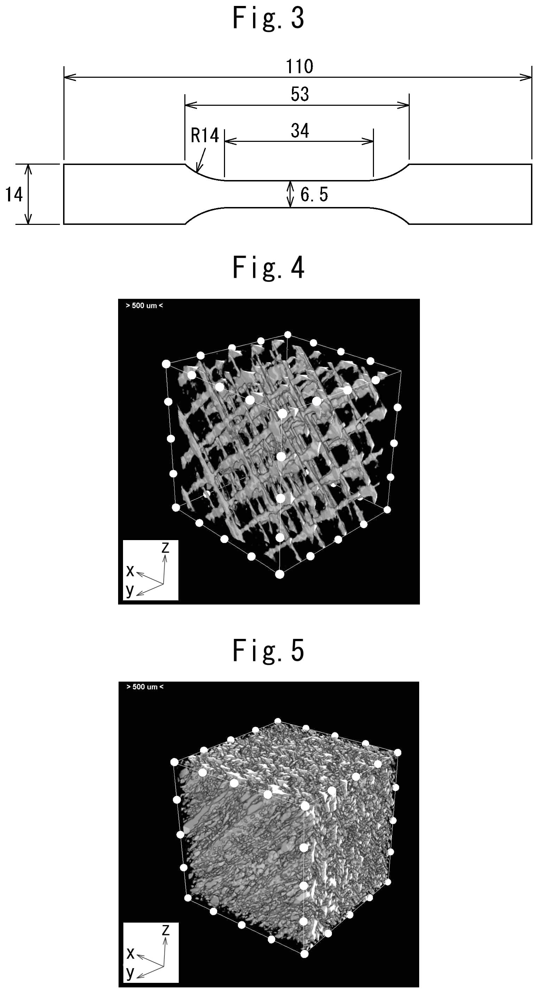

An injection molding machine was used for molding of a resin composition under conditions conforming to JIS K7364-2. The molding temperature was 260°C for polyamide 6, 265°C for polyamide 610 and 230°C for PA6/66. The form of the test piece was based on the dumbbell shape of JIS K7113 (out of print) #2, with dimensions corrected to a thickness of 3 mm, as shown in Fig. 3. The numerical values in the graphs are in millimeter units. The molded test piece was subjected to a bending test according to ISO178, and the flexural strength and flexural modulus were measured.

[Lightness (L value) of resin composition and shaped article]

A color difference meter (CM-2002 by Konica Minolta Holdings, Inc.) was used to measure the L* value in D65 light with a 10° visual field.

<Shaped articles>

[Void ratio]

Five 2 mm × 2 mm × 2 mm cubic regions were selected from a dumbbell-shaped shaped article. Specifically, the dumbbell shape was divided into 5 sections in the lengthwise direction to create regions 1 to 5, and a cubic region was defined around the center of each section (that is, the center in the thickness direction, longitudinal direction and lateral direction). Each cubic region was subjected to X-ray CT analysis under the following conditions. In the obtained 3D image, the voids in the cubic region were identified and the ratio of the total volume of voids with respect to the total volume of the cubic region was calculated. The results are shown in Table 3. Fig. 4 is a diagram showing a 3D image by X-ray CT at section 3 of Example A1, and Fig. 5 is a diagram showing a 3D image by X-ray CT at section 3 of Comparative Example A1.

Apparatus: X-CT Skyscan1272 by Bruker Corp. (analysis software: CT-An)
Tube voltage: 40 kV
Tube current: 100 μA
X-ray filter: No
Resolution: 2452 × 1640 pix
Pixel resolution: 4.0 μm
Number of scans: 4
Scan: 0.3°, 180° scan
Analytical processing: Smoothing with Kuwahara filter (two-pixel region)

[Mechanical strength of shaped article]

A bending test was conducted according to ISO178, for dumbbell-shaped shaped articles shaped as described below, and the flexural strength and flexural modulus were measured.

[Outer appearance of shaped articles]

The outer appearance of each shaped article was evaluated in the following manner.

Excellent: No problems with outer appearance
Good: Some feathering and foaming observed
Poor: Running of shaped article, with stringing.

[Outer appearance of shaped articles (feathering)]

The outer appearance of each shaped article was evaluated in the following manner.

Good: No problems with outer appearance.
Poor: Feathering observed in shaped article.

<Moldability>

[Drawdown during production of filamentous shaping material]

The shape of a filament drawn out from the filament extruder was observed and evaluated on the following scale.

Good: Filament could be formed without problems.
Acceptable: Some locations with non-uniform diameter observed in part of the filament.

[Stringing during shaping]

Each shaped article was observed and evaluated on the following scale.

Good: No problems with outer appearance.

Poor: Stringing observed in shaped article.

[Shaping ease]

The behavior during shaping was observed and evaluated on the following scale.

Good: Shaping was possible without problems.
Acceptable: Extrude was unstable but shaping was possible.
Poor: Extrude was unstable, making shaping impossible.

<Materials>

<Cellulose fine fibers>

Cellulose fine fibers obtained by the following Production Examples were used. (Production Example 1: CNF-1)
Cotton linter pulp (CLP)
Cotton crude linter was used for dry screen treatment in a laboratory, and a 2-8 mm fraction was sampled. Next, 400 g of the obtained crude linter was introduced into a 4 L-volume autoclave and digested at an active alkali addition rate of 18 ((NaOH (g) + $Na_2S$ (g))/1 L water), a sulfidity of 28% ($Na_2S$ (g)/total alkali (g) x 100), a liquid ratio of 4.5 (liquid/solid content), an initial temperature of 90°C, a digestion temperature of 155°C and a time of 150 minutes. The digested crude linter was diluted 10-fold with purified water and rinsed by repeated decantation 4 times. This was followed by dehydration to a solid content of 25 mass% with a centrifugal dehydrator (200 $\mu$m mesh filter cloth).

The obtained crude linter was dried, 70.0 g of the dried product was placed in a polyethylene (PE) plastic bottle, and purified water was added for encapsulation to a solid concentration of 10 mass% during the reaction. The entire container was then immersed in a thermobath and preheated at 70°C. After preheating, sodium hydroxide was added to the water in the container to 10 mass%, and the mixture was stirred with a 3-1 motor to dissolve the sodium hydroxide. The slurry was introduced into a 2 L-volume autoclave equipped with a stirring blade, and after raising the temperature to 90°C, oxygen was added, the mixture was pressurized to an internal pressure of 500 kPa and reaction was conducted for 60 minutes. The reacted linter was washed with ion-exchanged water, and then dehydrated to a solid content of 25 mass% with a centrifugal dehydrator (200 $\mu$m mesh filter cloth) to obtain a cellulose starting material.
The degree of crystallinity of the obtained cellulose starting material was 85%, and the glucose content was 98 mass%.
The procedure described above was repeated several times, and the recovered cellulose starting material was immersed in water to a solid content of 1.0 mass% and dispersed using a Labo Pulper (product of Aikawa Iron Works Co.), after which a single disc refiner (Model SDR14 Lab Refiner, pressurized DISK by Aikawa Iron Works Co., Ltd.) was used for defibration. This disc refiner has two tanks (tank A and tank B) connected by tubing via the apparatus. Treatment was carried out while controlling the number of passes through the disc refiner, by a method in which the slurry was conveyed from tank A where it was loaded into tank B through a disc refiner, and was stored there, and at the stage when treatment of the slurry of tank A was completed, it was conveyed continuously from tank B through the disc refiner to tank A where it was accumulated. The interblade adjusting mechanism of the disc refiner is provided with a ball screw jacket and a reduction gear, allowing strict adjustment between the blades with micrometer precision. The vibration width for the interblade distance during beating treatment after reaching the target interblade distance was 0.005 mm or less, as measured with a displacement sensor. The disc refiner blades used were blades with a blade width of 4.0 mm and a blade/groove ratio of 0.89, for 30 passes with an interblade distance of 0.25 mm, and then blades with a blade width of 0.8 mm and a blade/groove ratio of 0.53 were used for 30 passes with an interblade distance of 0.30 mm.
The obtained slurry was treated for 10 passes at 80 MPa with a high-pressure homogenizer (NS3015H by Niro Soavi). For high-pressure homogenizer treatment as well, two tanks were provided in a manner similar to disc refiner treatment, and the treatment was carried out while controlling the number of passes in the high-pressure homogenizer treatment.
Cellulose fine fibers CNF-1 were obtained by the method described above.

(Production Example 2: CNF-2) Acetylated cotton linter pulp

Using the cellulose starting material obtained by the method of Production Example 1, the cellulose was dispersed in dimethyl sulfoxide (DMSO) to a solid content of 5.8 mass% and a potassium carbonate content of 1.1 mass%, and 30 L of the slurry was charged into a reactor with a total volume of 50 L and heated to 60°C while stirring to uniformity. Vinyl acetate (4.4 mass% with respect to the reaction mixture) was added, and acetylation was carried out to a predetermined degree of substitution. The degree of substitution DS was appropriately measured during the reaction, and upon reaching a DS of 1.0 or greater, 3 L of water was added to complete the reaction. The reaction mixture was stirred with a pressure filter using 50 mass equivalents of purified water with respect to the cellulose solid portion, and then subjected to repeated filtration to thoroughly wash off the solvent and obtain a wet cake of acetylated cellulose fibers.

The acetylated cellulose was subjected to micronization treatment by the method of Production Example 1 to obtain cellulose fine fibers CNF-2. The DS of the cellulose fine fibers was 0.85.

(Production Example 3:CNF-3)

A commercial product (CELISH: KY100G) was used directly.

<Thermoplastic resin>

    Polyamide PA6:1022B (product of Ube Industries, Ltd.), melting point: 225°C
    PA610: 3400 (Asahi Kasei Corp.), melting point: 225°C
    PA6/66:5023 (Ube Industries, Ltd.), melting point: 196°C
    Polyacetal: HC450 (product of Asahi Kasei Corp.), melting point: 170°C

<Stabilizer>

Antioxidant: Irganox 245 by BASF Corp.

<Dispersing agent>

    Polyethylene glycol-polypropylene glycol copolymer (PEG-PPG): SANNIX GL-3000
    Polyethylene glycol (PEG): PEG6000 (product of Sanyo Chemical Industries, Ltd.)

<Production of resin composition and 3D printer shaping material>

[Production of resin compositions]

(Preparation Examples 1 to 7 and 9)

The cellulose microfiber aqueous dispersions of Production Examples 1 to 3 were used as shown in Table 2 to produce resin compositions by the following procedure.

The cellulose microfiber aqueous dispersion was subjected to pressure filtration to obtain an aqueous dispersion with a solid content of 10 mass%. PEG-PPG or PEG was added to the cellulose microfiber aqueous dispersion at 30 parts by mass with respect to 70 parts by mass of the cellulose fine fibers, and then a revolving/rotating stirrer (HIVIS MIX 2P-1 by Primix Corp.) was used for vacuum drying at about 40°C to obtain a cellulose microfiber powder.

A twin-screw extruder with 13 cylinder blocks and an L/D of 52 (TEM SX Series extruder by Toshiba Machine Co., Ltd.) was used, having a side feed port fitted into cylinder 5 to allow the starting material to be fed in, while a vent port was fitted at cylinder 12 for decompression suction to allow removal of the volatile components and copresent air.

The screw construction had cylinders 1 to 2 as transport screws, two clockwise kneading discs on cylinders 3 to 4 (right-handed kneading discs: RKD), followed by one neutral kneading disc (non-transport-type kneading disc: NKD) and followed by a counter-clockwise screw as the pre-mixing zone, and also cylinder 5 as the side feed zone as a transport screw and one RKD and two NKDs on cylinders 6 to 7, followed by one counter-clockwise screw, as the melt kneading zone. Transport screws were used up to cylinders 8 to 9, and one RKD followed by one NKD and followed by a counter-clockwise screw were set at cylinder 10, as the kneading zone. Cylinders 11 to 13 were transport screws, which were used as the volatilization zone.

A mixture containing the thermoplastic resin and cellulose microfiber powder in the proportions listed in Table 2 was fed through cylinder 1 of an extruder having cylinder 1 water-cooled and the other cylinders set to 200 to 300°C, and was kneaded and extruded into strands. The strand was cut with a strand cutter to obtain resin composition pellets.

43

The resin composition pellets were injection molded into a dumbbell-shaped test piece. The resin composition pellets were also provided for production of the filament described below.

(Preparation Example 8)

For the cellulose fine fibers of Production Example 3 (CELISH KY100G), purified water was added and the mixture was stirred with a mixer to prepare an aqueous dispersion with a cellulose fiber content of 3 mass%.

Next, 100 parts by mass of the aqueous dispersion and 100 parts by mass of $\varepsilon$-caprolactam were further stirred and mixed with a mixer to a homogeneous solution. The mixed solution was then heated to 240°C while stirring, and water vapor was gradually released while raising the pressure from 0 kgf/cm$^2$ to 7 kgf/cm$^2$. The pressure was subsequently released to atmospheric pressure and polymerization reaction was conducted for 1 hour at 240°C. The resin composition obtained upon completion of polymerization was removed and cut to form pellets. The obtained pellets were treated with 95°C hot water, scoured and dried.

The resin composition pellets were injection molded into a dumbbell-shaped test piece. The resin composition pellets were also provided for production of the filament described below.

[Production of filaments]

The resin composition pellets produced as described above were used for take-up with a 3devo Filament Extruder (nozzle diameter: 1.7 mm) by 3D Printing Corporation under automatic control conditions with a nozzle temperature of 250°C, a screw rotation rate of 3.5 rpm and a take-up speed of 0.02 to 0.1 m/s, and under air-cooling conditions, to obtain a monofilament as a filamentous shaping material.

<Production of 3D printer shaped article>

[Examples A1 to A6, Comparative Examples A2 to A4, Examples B1 to B8 and Comparative Examples B1 to B8]

The filamentous shaping material produced as described above was dried with a vacuum dryer at 80°C for 3 hours, and then a FUNMAT HT Material Extrusion (MEX) system 3D printer by Intamsys, Co. was used to obtain dumbbell-shaped shaped articles having the dimensions shown in Fig. 3 and a thickness of 3 mm, under the shaping conditions shown in Tables 3 and 4. The direction of layering was alternately in the 45° direction and 135° direction with respect to the lengthwise direction of the dumbbell, forming two layers of walls on the outermost layer.

[Comparative Example A1]

PolyMide PA6-CF: A resin composition comprising polyamide 6 and carbon fibers (available from Polymaker Co.) was used to obtain a dumbbell-shaped shaped article by the same procedure as Example A1.

[Table 1]

| Table 1 Cellulose fine fibers | | | |
|---|---|---|---|
| | CNF-1 | CNF-2 | CNF-3 |
| Number-average fiber diameter (nm) | 40 | 67 | 53 |
| Mean fiber length ($\mu$m) | 250 | 240 | 220 |
| Degree of crystallinity (%) | 85 | 76 | 82 |
| Degree of acyl substitution (DS) | 0 | 0.85 | 0 |
| Weight-average molecular weight (Mw) | 340,000 | 380,000 | 240,000 |
| Mw/Mn ratio | 3.2 | 4.7 | 8.6 |
| Average alkali-soluble polysaccharide content (mass%) | 3.8 | 3.6 | 10 |
| Thermal decomposition initiation temperature (°C) | 273 | 280 | 225 |
| 1 wt% weight reduction temperature (°C) | 288 | 300 | 243 |
| 250°C weight change rate (%) | 3.5 | 1.7 | 16.5 |

[Table 2]

| Table 2 Resin compositions and shaping materials | | | | | | | | | | | | | |
|---|---|---|---|---|---|---|---|---|---|---|---|---|---|
| | | | Units | Prep. Ex. 1 | Prep. Ex. 2 | **Prep.** Ex. 3 | Prep. Ex. 4 | Prep. Ex. 5 | Prep. Ex. 6 | Prep. Ex. 7 | **Prep.** Ex. 8 | **Prep.** Ex. 9 |
| Content | Cellulose fine fibers | CNF-1 | Parts by mass | 5 | 10 | 5 | 5 | | 5 | | | |
| | | CNF-2 | Parts by mass | | | | | 5 | | | | |
| | | CNF-3 | Parts by mass | | | | | | | 5 | 5 | 5 |
| | Thermoplastic resin | Polyamide 6 | Parts by mass | 93 | 86 | | | 93 | | 93 | 95 | |
| | | Polyamide 610 | Parts by mass | | | 93 | | | | | | |
| | | Polyamide 6/66 | Parts by mass | | | | 93 | | | | | |
| | | Polyacetal | Parts by mass | | | | | | 93 | | | 93 |
| | Stabilizer | Irganox 245 | Parts by mass | 0.02 | 0.04 | 0.02 | 0.02 | 0.02 | 0.02 | 0.02 | 0.02 | 0.02 |
| | Dispersing agent | PEG-PPG | Parts by mass | 2 | 4 | 2 | 2 | 2 | | 2 | | |
| | Dispersing agent | PEG6000 | Parts by mass | | | | | | 2 | | | 2 |

(continued)

| Table 2 Resin compositions and shaping materials | | | | Units | Prep. Ex. 1 | Prep. Ex. 2 | **Prep. Ex. 3** | Prep. Ex. 4 | Prep. Ex. 5 | Prep. Ex. 6 | Prep. Ex. 7 | **Prep.** Ex. 8 | **Prep.** Ex. 9 |
|---|---|---|---|---|---|---|---|---|---|---|---|---|---|
| Evaluation | Resin composition | Minimum temperature for shear viscosity of ≤600 kPa·s at shear rate of 1000 sec$^{-1}$ (T1) | °C | 235 | 235 | 245 | 225 | 230 | 180 | 230 | 230 | 180 |
| | | Maximum temperature for elongation viscosity of ≥10 kPa·s at elongation rate of 10 sec$^{-1}$ (T2) | °C | 280 | 300 | 300 | 295 | 285 | 250 | 265 | 250 | 210 |
| | | T2-T1 | °C | 45 | 65 | 55 | 70 | 55 | 70 | 35 | 20 | 30 |
| | | Color tone (L value) | | 63 | 58 | 52 | 43 | 68 | 79 | 36 | 25 | 38 |
| | | Flexural strength | MPa | 144 | 145 | 103 | 124 | 140 | 124 | 136 | 140 | 98 |
| | | Flexural modulus | MPa | 3610 | 4540 | 2110 | 3050 | 3490 | 3470 | 3100 | 3420 | 2850 |
| | Shaping material | Drawdown during production of filamentous shaping material | | Good | Good | Good | Good | Good | Good | Acceptable | Acceptable | Acceptable |

[Table 3]

| Table 3 Shaped articles | | | | | | | | | | | | | |
|---|---|---|---|---|---|---|---|---|---|---|---|---|---|
| | | Units | Example A1 | Example A2 | Example A3 | Example A4 | Example A5 | Example A6 | Comp. Ex. A1 | Comp. Ex. A2 | Comp. Ex. A3 | Comp. Ex. A4 |
| Filament type | | | Prep. Ex. 1 | Prep. Ex. 2 | Prep. Ex. 3 | Prep. Ex. 4 | Prep. Ex. 5 | Prep. Ex. 6 | PolyMide PA6-CF | Prep. Ex. 7 | Prep. Ex. 8 | **Prep. Ex. 9** |
| Shaping conditions | Nozzle temperature | °C | 260 | 260 | 260 | 270 | 260 | 240 | 280 | 270 | 260 | 240 |
| | Bed temperature | °C | 100 | 100 | 100 | 80 | 100 | 160 | 50 | 100 | 100 | 160 |
| | Nozzle diameter | mm | 0.4 | 0.4 | 0.4 | 0.4 | 0.4 | 0.4 | 0.4 | 0.4 | 0.4 | 0.4 |
| | Layering pitch | mm | 0.2 | 0.2 | 0.2 | 0.2 | 0.2 | 0.2 | 0.2 | 0.2 | 0.2 | 0.2 |
| | Shaping speed | mm/s | 30 | 30 | 30 | 30 | 30 | 30 | 30 | 30 | 30 | 30 |
| Evaluation | Void ratio, section 1 | % | 3.8 | 3.5 | 4.9 | 8.1 | 3.2 | 9.5 | 25.7 | 12.8 | 11.1 | 19.1 |
| | Void ratio, section 2 | % | 2.9 | 4.6 | 3.2 | 7.0 | 4.5 | 9.4 | 23.3 | 18.5 | 12.6 | 18.6 |
| | Void ratio, section 3 | % | 6.3 | 3.2 | 4.9 | 7.3 | 3.8 | 8.3 | 23.5 | 15.3 | 11.6 | 19.4 |
| | Void ratio, section 4 | % | 4.5 | 4.3 | 5.8 | 6.9 | 2.5 | 7.6 | 24.9 | 16.4 | 13.4 | 18.8 |
| | Void ratio, section 5 | % | 3.2 | 5.2 | 6.5 | 7.1 | 4.8 | 9.5 | 24.3 | 13.4 | 13.2 | 20.1 |
| | Void ratio, number average for sections 1-5 | % | 4.1 | 4.2 | 5.1 | 7.3 | 3.8 | 8.9 | 24.3 | 15.3 | 12.4 | 19.2 |
| | Void ratio, minimum for sections 1-5 | % | 2.9 | 3.2 | 3.2 | 6.9 | 2.5 | 7.6 | 23.3 | 12.8 | 11.1 | 18.6 |
| | Void ratio of ≤10 vol% for at least one of sections 1-5 | Yes/No | Yes | Yes | Yes | Yes | Yes | Yes | No | No | No | No |
| | Flexural strength | MPa | 91 | 91 | 86 | 95 | 106 | 101 | 65 | 47 | 62 | 43 |
| | Flexural modulus | MPa | 2760 | 3200 | 1780 | 2540 | 2850 | 2780 | 1770 | 1214 | 1800 | 1540 |
| | Outer appearance | - | Excellent | Excellent | Excellent | Excellent | Excellent | Excellent | Poor | Poor | Good | Poor |
| | Degree of crystallinity | % | 27 | 28 | 29 | 18 | 26 | 68 | 20 | 26 | 27 | 62 |

EP 4 759 513 A1

47

[Table 4]

| Table 4 Shaped articles | | Units | Ex. B1 | Ex. B2 | Ex. B3 | Ex. B4 | Ex. B5 | Ex. B6 | Ex. B7 | Ex. B8 | Comp. Ex. B1 | Comp. Ex. B2 | Comp. Ex. B3 | Comp. Ex. B4 | Comp. Ex. B5 | Comp. Ex. B6 | Comp. Ex. B7 | Comp. Ex. B8 |
|---|---|---|---|---|---|---|---|---|---|---|---|---|---|---|---|---|---|---|
| Filament type | | | Prep. Ex. 1 | Prep. Ex. 2 | Prep. Ex. 3 | Prep. Ex. 4 | Prep. Ex. 5 | Prep. Ex. 6 | Prep. Ex. 7 | Prep. Ex. 8 | Prep. Ex. 1 | Prep. Ex. 2 | Prep. Ex. 3 | Prep. Ex. 4 | Prep. Ex. 5 | Prep. Ex. 6 | Prep. Ex. 7 | Prep. Ex. 8 |
| Shaping conditions | Extrude outlet temperature | ℃ | 260 | 260 | 260 | 270 | 260 | 240 | 260 | 245 | 300 | 305 | 235 | 300 | 290 | 255 | 270 | 260 |
| | Stage surface temperature | ℃ | 100 | 100 | 100 | 80 | 100 | 140 | 100 | 100 | 100 | 100 | 100 | 80 | 100 | 140 | 100 | 100 |
| | Extrude outlet diameter | mm | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 |
| | Shaping speed | mm/sec | 30 | 30 | 30 | 30 | 30 | 30 | 30 | 30 | 30 | 30 | 30 | 30 | 30 | 30 | 30 | 30 |
| | Layering pitch | mm | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| Evaluation | Flexural modulus | MPa | 2760 | 3200 | 1780 | 2540 | 2850 | 2780 | 1640 | 2230 | 2700 | - | - | 3310 | 2900 | 2580 | 1610 | 2210 |
| | Lightness (L value) | | 63 | 57 | 52 | 43 | 68 | 79 | 34 | 25 | 60 | 52 | 52 | 40 | 63 | 79 | 32 | 23 |
| | Feathering | | Good | Good | Good | Good | Good | Good | Good | Good | Poor | Poor | Poor | Poor | Poor | Poor | Poor | Poor |
| | Stringiness | | Good | Good | Good | Good | Good | Good | Good | Good | Poor | Poor | Good | Poor | Poor | Poor | Poor | Poor |
| | Shapeability | | Good | Good | Good | Good | Good | Good | Good | Good | Acceptable | Poor | Poor | Acceptable | Acceptable | Acceptable | Acceptable | Acceptable |
| | Degree of crystallinity | % | 26 | 29 | 28 | 19 | 26 | 69 | 26 | 27 | 27 | 26 | 29 | 19 | 26 | 68 | 26 | 26 |

48

EP 4 759 513 A1

In Comparative Examples A2, A3 and A4, it is believed that the reduced melt viscosity of the resin composition due to heat degradation of the cellulose fine fibers during kneading and shaping resulted in an impaired outer appearance and increased void ratio, as a result of foaming.

INDUSTRIAL APPLICABILITY

A shaped article provided by the invention can be suitably applied for a wide range of purposes.

**Claims**

1.  A shaped article comprising a thermoplastic resin and cellulose fine fibers, wherein:

    the shaped article is the output of a 3D printer,
    the shaped article has a section with a thickness of 2.5 mm or greater, and
    one or more 2 mm × 2 mm × 2 mm cubic regions selected from the section with a thickness of 2.5 mm or greater have a void ratio of 10 vol% or lower as determined by X-ray computed tomography (CT).

2.  The shaped article according to claim 1, wherein the cubic regions are regions selected so as not to include the outermost layer of the shaped article.

3.  The shaped article according to claim 1 or 2, wherein the number of the one or more 2 mm × 2 mm × 2 mm cubic regions is 5, and the number-average value for the void ratio of the five cubic regions is 10 vol% or lower.

4.  The shaped article according to claim 1 or 2, wherein the thermoplastic resin comprises a polyamide-based resin.

5.  The shaped article according to claim 1 or 2, wherein the degree of crystallinity of the shaped article is 50% or lower, as measured using a differential scanning calorimeter (DSC).

6.  The shaped article according to claim 1 or 2, wherein the thermoplastic resin comprises a crystalline resin with a melting point of 150°C to 300°C.

7.  The shaped article according to claim 1 or 2, wherein the cellulose fine fibers have a mean fiber size of 1000 nm or smaller.

8.  The shaped article according to claim 1 or 2, which comprises the cellulose fine fibers at 1 part by mass to 150 parts by mass with respect to 100 parts by mass of the thermoplastic resin.

9.  A method for producing a shaped article according to claim 1 or 2,
    wherein the method includes extruding and layering a resin composition comprising a thermoplastic resin and cellulose fine fibers from the extrude outlet of a 3D printer.

10. The method according to claim 9, wherein

    the resin composition is fed to the 3D printer as a filamentous shaping material for 3D printing, and
    the molten material of the shaping material for 3D printing is extruded from the extrude outlet.

11. A method for producing a shaped article comprising a thermoplastic resin and cellulose fine fibers, wherein:

    the method comprises extruding and layering a resin composition comprising a thermoplastic resin and cellulose fine fibers from the extrude outlet of a 3D printer, and
    the shaped article has a section with a thickness of 2.5 mm or greater, and
    one or more 2 mm × 2 mm × 2 mm cubic regions selected from the section with a thickness of 2.5 mm or greater have a void ratio of 10 vol% or lower as determined by X-ray computed tomography (CT).

12. A method for producing a shaped article comprising a thermoplastic resin and cellulose fine fibers, wherein:

    a resin composition comprising a thermoplastic resin and cellulose fine fibers is extruded and layered from the extrude outlet of a 3D printer, and

the temperature of the extrude outlet is set to a temperature such that the resin composition exhibits a shear viscosity of lower than 600 kPa·s at a shear rate of 1000 sec$^{-1}$ and exhibits an elongation viscosity of higher than 10 kPa·s at an elongation rate of 10 sec$^{-1}$.

13. A method for producing a shaped article comprising a thermoplastic resin and cellulose fine fibers,

wherein the method includes extruding and layering a resin composition comprising a thermoplastic resin and cellulose fine fibers from the extrude outlet of a 3D printer,

the minimum temperature (T1) at which the resin composition exhibits a shear viscosity of 600 kPa·s or lower at a shear rate of 1000 sec$^{-1}$ is lower than the maximum temperature (T2) at which the resin composition exhibits an elongation viscosity of 10 kPa·s or higher at an elongation rate of 10 sec$^{-1}$, the difference between the temperature (T1) and the temperature (T2) being 40°C or more, and

the temperature (T3) of the extrude outlet is set to a temperature higher than the temperature (T1) and lower than the temperature (T2).

14. The method according to claim 12 or 13, wherein:

the shaped article has a section with a thickness of 2.5 mm or greater, and

one or more 2 mm × 2 mm × 2 mm cubic regions selected from the section with a thickness of 2.5 mm or greater have a void ratio of 10 vol% or lower as determined by X-ray computed tomography (CT).

15. The method according to any one of claims 11 to 13, wherein the cubic regions are regions selected so as not to include the outermost layer of the shaped article.

16. The method according to any one of claims 11 to 13, wherein:

the resin composition is fed to the 3D printer as a filamentous shaping material for 3D printing, and

the molten material of the shaping material for 3D printing is extruded from the extrude outlet.

17. The method according to any one of claims 11 to 13, wherein the thermoplastic resin is one or more selected from the group consisting of polyamide-based resins and polyacetal-based resins.

18. The method according to any one of claims 11 to 13, wherein the thermoplastic resin comprises a polyamide-based resin.

19. The method according to any one of claims 11 to 13, wherein the degree of crystallinity of the shaped article is 50% or lower, as measured using a differential scanning calorimeter (DSC).

20. The method according to any one of claims 11 to 13, wherein the thermoplastic resin comprises a crystalline resin with a melting point of 150°C to 300°C.

21. The method according to any one of claims 11 to 13, wherein the cellulose fine fibers have a mean fiber size of 1000 nm or smaller.

22. The method according to any one of claims 11 to 13, wherein the resin composition comprises the cellulose fine fibers at 1 part by mass to 150 parts by mass with respect to 100 parts by mass of the thermoplastic resin.

23. The method according to any one of claims 11 to 13, wherein the L value of the shaped article is 35 or greater.

24. A resin composition comprising a thermoplastic resin and cellulose fine fibers, wherein:

the minimum temperature (T1) at which the resin composition exhibits a shear viscosity of 600 kPa·s or lower at a shear rate of 1000 sec$^{-1}$ is lower than the maximum temperature (T2) at which the resin composition exhibits an elongation viscosity of 10 kPa·s or greater at an elongation rate of 10 sec$^{-1}$, and

the difference between the temperature (T1) and the temperature (T2) is 40°C or more.

25. The resin composition according to claim 24, wherein the thermoplastic resin is one or more selected from the group consisting of polyamide-based resins and polyacetal-based resins.

26. The resin composition according to claim 24, wherein the thermoplastic resin comprises a crystalline resin with a melting point of 150°C to 300°C.

27. The resin composition according to claim 24, wherein the cellulose fine fibers have a mean fiber size of 1000 nm or smaller.

28. The resin composition according to claim 24, wherein the resin composition comprises the cellulose fine fibers at 1 part by mass to 150 parts by mass with respect to 100 parts by mass of the thermoplastic resin.

29. A shaping material for 3D printing, which is a filament composed of a resin composition according to any one of claim 24.

30. The shaping material for 3D printing according to claim 29, wherein the L value is 35 or greater.

31. A shaped article obtained by shaping a resin composition according to any one of claims 24 to 28, or a shaping material for 3D printing according to claim 29 or 30, with a 3D printer.

32. The shaped article according to claim 31, wherein the L value is 35 or greater.

**EP 4 759 513 A1**

# Fig. 1

# Fig. 2

52

# Fig. 3

# Fig. 4

# Fig. 5

## INTERNATIONAL SEARCH REPORT

| International application No. |
| --- |
| **PCT/JP2024/028274** |

**A.   CLASSIFICATION OF SUBJECT MATTER**

*B29C 64/118*(2017.01)i; *B29C 64/209*(2017.01)i; *B29C 64/295*(2017.01)i; *B29C 64/393*(2017.01)i; *B33Y 10/00*(2015.01)i; *B33Y 50/02*(2015.01)i; *B33Y 70/10*(2020.01)i; *B33Y 80/00*(2015.01)i; *C08L 1/02*(2006.01)i; *C08L 59/00*(2006.01)i; *C08L 77/00*(2006.01)i; *C08L 101/00*(2006.01)i

FI:   B29C64/118; B33Y10/00; B33Y80/00; C08L101/00; C08L1/02; C08L77/00; C08L59/00; B29C64/209; B29C64/393; B33Y50/02; B33Y70/10; B29C64/295

According to International Patent Classification (IPC) or to both national classification and IPC

**B.   FIELDS SEARCHED**

Minimum documentation searched (classification system followed by classification symbols)

B29C64/118; B29C64/209; B29C64/295; B29C64/393; B33Y10/00; B33Y50/02; B33Y70/10; B33Y80/00; C08L1/02; C08L59/00; C08L77/00; C08L101/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
| --- | --- | --- |
| X | WO 2021/153637 A1 (MITSUBISHI CHEMICAL CORPORATION) 05 August 2021 (2021-08-05) paragraphs [0020]-[0076], fig. 1-16 | 1-11, 15-23 |
| A | | 12-14, 24-32 |
| A | JP 2015-80917 A (SHIN-ETSU POLYMER CO., LTD.) 27 April 2015 (2015-04-27) | 1-32 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 October 2024** | **22 October 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

INTERNATIONAL SEARCH REPORT
Information on patent family members

International application No.

**PCT/JP2024/028274**

| Patent document cited in search report | | | Publication date (day/month/year) | Patent family member(s) | Publication date (day/month/year) |
|---|---|---|---|---|---|
| WO | 2021/153637 | A1 | 05 August 2021 | (Family: none) | |
| JP | 2015-80917 | A | 27 April 2015 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017170881 A
- WO 2019088014 A
- JP 2018086829 A
- JP 2021172084 A
- WO 2017126477 A
- JP 7228775 A
- JP 4012283 B

- JP 60035006 A
- JP 60035007 A
- JP 60035008 A
- JP 5155930 A
- JP 3163088 A
- US 5272236 A

**Non-patent literature cited in the description**

- **SLUITER, A.** ; **HAMES, B.** ; **RUIZ, R.** ; **SCARLATA, C.** ; **SLUITER, J.** ; **TEMPLETON, D.** ; **CROCKER, D.** National Renewable Energy Laboratory (NREL). Determination of structural carbohydrates and lignin in biomass., 2008

- Japanese Pharmacopeia. Hirokawa Shoten
- Mokushitsu Kagaku Jikken Manual. 2000, 92-97
- Polymer Process Engineering. Prentice-Hall, Inc., 1994, 291-294